(19) Europäisches Patentamt
European Patent Office
Office européen des brevets

(11) EP 2 546 775 A1

(12) **EUROPEAN PATENT APPLICATION**
published in accordance with Art. 153(4) EPC

(43) Date of publication:
**16.01.2013 Bulletin 2013/03**

(21) Application number: **11753035.2**

(22) Date of filing: **07.03.2011**

(51) Int Cl.:
***G06F 21/24*** *(0000.00)*

(86) International application number:
**PCT/JP2011/001340**

(87) International publication number:
**WO 2011/111370 (15.09.2011 Gazette 2011/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2010 US 312742 P**

(71) Applicant: **Panasonic Corporation**
**Kadoma-shi**
**Osaka 571-8501 (JP)**

(72) Inventors:
- **YAMAGUCHI, Takahiro**
  **Osaka-shi, Osaka 540-6207 (JP)**
- **YAMAMOTO, Masaya**
  **Osaka-shi, Osaka 540-6207 (JP)**
- **HARADA, Shunji**
  **Osaka-shi, Osaka 540-6207 (JP)**

(74) Representative: **Grünecker, Kinkeldey, Stockmair & Schwanhäusser**
**Leopoldstrasse 4**
**80802 München (DE)**

(54) **RECORDING SYSTEM, REPRODUCTION SYSTEM, KEY DISTRIBUTION SERVER, RECORDING DEVICE, RECORDING MEDIUM DEVICE, REPRODUCTION DEVICE, RECORDING METHOD, AND REPRODUCTION METHOD**

(57) To protect rights of a copyright owner of digital content, technology is required to prevent digital content on a recording medium from being copied onto another recording medium and played back. A key distribution server securely receives a media unique key from a recording medium device, generates a first title key different for each content, encrypts the generated first title key with the media unique key, encrypts the content with the first title key, and transmits the encrypted first title key to the recording medium device and the encrypted content to the recording device. The recording device securely receives the encrypted content from the key distribution server and the first title key and a second title key from the recording medium device, decrypts the encrypted content with the first title key, encrypts the decrypted content with the second title key, and transmits the encrypted content to the recording medium device.

FIG. 27

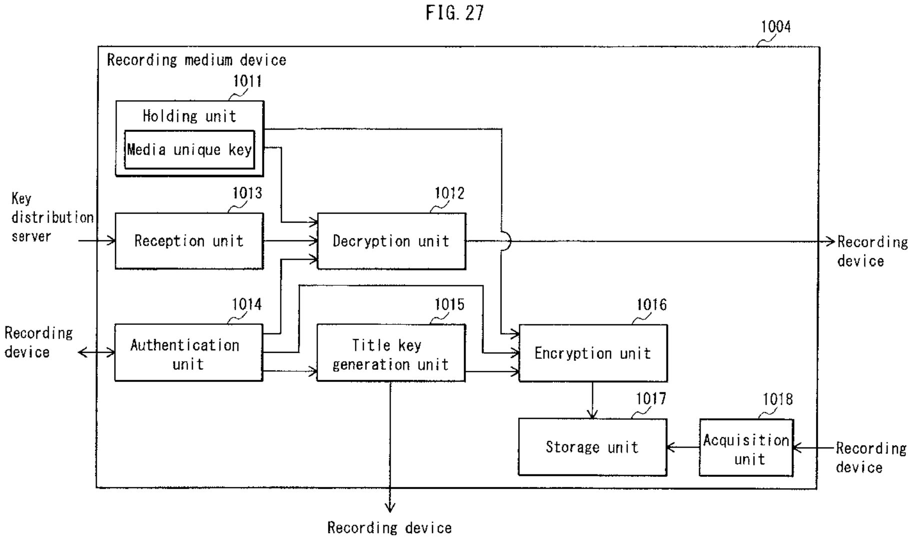




Printed by Jouve, 75001 PARIS (FR)

## Description

## [Technical Field]

The present invention relates to technology to prevent unauthorized use of digital content.

## [Background Art]

Digital content distribution systems are becoming popular. These systems digitally distribute digital content, i.e. a digital copyrighted work such as a movie or music, via a network to a recording device, which is used to record the digital content on a recording medium. A playback device then plays back the content recorded on the recording medium. Specific examples of such a recording device are a KIOSK terminal, a personal computer, etc.; specific examples of such a recording medium are a recordable Digital Versatile Disc (DVD), a Blu-ray Disc (BD), a memory card, etc.; and specific examples of such a playback device are a music player, a portable video player, etc.

In this case, in order to protect the rights of the copyright owner of digital content, technology is required to prevent digital content recorded on a recording medium from being copied onto another recording medium and played back.

According to non-patent literature 1:

- A unique media ID that cannot be overwritten and that is unique to a recording medium is stored on the recording medium.
- A signature verification public key and a device key that is inherent to a playback device are stored on the playback device.
- Media keys and an encrypted Media Key Block (MKB) are stored on a content distribution server. The encrypted MKB includes encrypted media keys that have been respectively encrypted with use of device keys stored on playback devices.
- The content distribution server generates a title key unique for each content, encrypts the content using the title key to generate encrypted content, and encrypts the title key using the media key to generate an encrypted title key.
- After billing in response to a user request to purchase content, the content distribution server generates a signature corresponding to the media ID of the user's recording medium using the signature generation private key corresponding to the signature generation public key. The content distribution server then distributes the encrypted MKB, the encrypted title key, and the encrypted content to the user.
- The user's recording device stores on the recording medium the signature for the media ID, the encrypted MKB, the encrypted title key, and the encrypted content that have been received.
- The user's playback device verifies the signature of the media ID using the signature verification public key and the media ID of the recording device. If verification is successful, the playback device decrypts, using the stored device key, the encrypted media key included in the encrypted MKB, which is read from the recording medium. Then, using the decrypted media key, the playback device decrypts the encrypted title key and using the decrypted title key decrypts the encrypted content, which it then plays back.

According to this technology, even if the signature for the media ID, the encrypted MKB, the encrypted title key, and the encrypted content which are recorded on an authorized recording device are copied onto an unauthorized recording device, an attempt to decrypt the encrypted content from the unauthorized recording device will fail. This is because the media ID for the authorized recording device cannot be copied onto the unauthorized recording device, and therefore the media ID for the authorized recording device cannot be acquired from the unauthorized recording device. Verification of the signature of the media ID thus fails, and as a result, the encrypted contents cannot be properly decrypted.

An attack can also be imagined whereby a malicious user acquires the device key stored in a playback device, creates a content decryption tool with the acquired device key embedded therein, and sells the content decryption tool. After input of the encrypted MKB and of encrypted title keys and encrypted contents corresponding to various contents (titles), this content decryption tool decrypts an encrypted media key included in the encrypted MKB using the embedded device key. The content decryption tool then decrypts an encrypted title key using the decrypted media key, next decrypting the encrypted content with use of the decrypted title key. The content decryption tool then outputs the decrypted content. Once the decrypted content is output, unauthorized copies thereof can be freely made.

In response to this attack, however, by updating the encrypted MKB, this technology can prevent decrypting of an encrypted content (strictly speaking, an encrypted content distributed after the encrypted MKB is updated) by an unauthorized content decryption tool. Namely:

- Updated media keys and an updated encrypted MKB are stored on the content distribution server. This updated encrypted MKB is generated as follows.
- The unauthorized content decryption tool is acquired, and the device keys embedded in the content decryption tool are identified.
- Updated media keys are generated, and using device keys stored on other authentic playback devices, with the exception of the identified device keys, the updated media keys are encrypted to generate encrypted media keys. An updated encrypted MKB is generated to include these encrypted media keys. By thus generating an updated encrypted MKB, even if the content decryption tool attempts decryption with the device key embedded therein, it cannot generate a proper updated media key.
- The content distribution server encrypts the title key with the updated media key, thus generating an updated encrypted title key.
- After billing in response to a user request to purchase content, the content distribution server distributes the signature corresponding to the media ID of the user's recording medium, the updated encrypted MKB, the updated encrypted title key, and the encrypted content to the user.

In this case, an encrypted media key included in the updated encrypted MKB cannot be decrypted with the device key embedded in the content decryption tool. Therefore, the updated encrypted title key and the encrypted content cannot be decrypted. Accordingly, by updating the encrypted MKB, this technology can prevent decryption of an encrypted content (strictly speaking, an encrypted content distributed after the encrypted MKB is updated) by an unauthorized content decryption tool.

**[Citation List]**

[Patent Literature]

[Non-Patent Literature 1]
Advanced Access Content System (AACS) Prepared Video Book Revision 0.95

**[Summary of Invention]**

**[Technical Problem]**

An attack can be imagined whereby a malicious user fraudulently acquires the device key stored in an authorized playback device, decrypts an encrypted title key using the device key, and discloses the decrypted title key on a Web server, while also illicitly selling a content decryption tool that acquires a disclosed title key and decrypts encrypted content.

After input of encrypted title keys and encrypted contents corresponding to various contents (titles), the content decryption tool acquires the corresponding title key from the Web server, decrypts the encrypted content using the acquired title key, and then outputs the decrypted content. Once the decrypted content is output, unauthorized copies thereof can be freely made. Each time the corresponding title key is not found on the Web server, the malicious user decrypts the encrypted title key using the fraudulently acquired device key, disclosing the generated title key on the Web server.

In this case, since the device key that the malicious user fraudulently acquired is not embedded in the content decryption tool, the device key that the malicious user fraudulently acquired cannot be identified. Therefore, decrypting of an encrypted content by a content decryption tool cannot be prevented as above by updating the encrypted MKB.

Conventional technology thus has the problem of not being able to protect the rights of the copyright owner of digital content against this attack.

A simple solution to this problem is for a distribution server to generate, on demand, a different title key for each distribution and encrypt the content with a different title key for each distribution, thus generating encrypted content that is different for each distribution. The distribution server then encrypts the title key that differs for each distribution with the media key, thus generating an encrypted title key that differs for each distribution, after which the distribution server distributes the encrypted content and the encrypted title key that are different for each distribution. If this solution were implemented, a malicious user would have to generate a title key that differs for each distribution of particular content and disclose the title keys on the Web server in order to carry out the above-described attack. Therefore, from the standpoint of cost effectiveness, this is a promising way to suppress the attack.

This simple solution, however, is not realistic, since it places a large burden on the server, which has to generate, on demand, a title key that is different for each distribution and encrypt the content using this title key.

In order to solve the above problems, it is an object of the present invention to provide a recording playback system, recording playback device, recording medium device, and recording playback method that can prevent the above-described attack by a malicious user.

**[Solution to Problem]**

In order to solve the above problems, a recording medium device that is one aspect of the present invention is a recording medium device used together with a recording device that controls recording of a first encrypted content transmitted from a key distribution server, the first encrypted content being obtained by encrypting a content using a first title key, the recording medium device comprising: a storage unit; a reception unit operable to receive, from the key distribution server, the first title key that has been encrypted; a decryption unit operable to decrypt the encrypted first title key, and transmit the first title key that has been decrypted to the recording device; a title key generation unit operable to generate a second title key that differs for each recording of a content, and transmit the second title key to the recording device; and an acquisition unit operable to acquire a second encrypted content from the recording device, and store the second encrypted content in the storage unit, the second encrypted content being obtained by decrypting the first encrypted content using the first title key and then encrypting using the second title key.

**[Advantageous Effects of Invention]**

According to the recording medium device with the above structure that is one aspect of the present invention, first encrypted content is once decrypted using a first title key, is encrypted using a second title key that differs for recording processing, and then is recorded as second encrypted content. Accordingly, even if a title key distribution attack is made whereby a malicious user reveals to disclose the first title key, which is a key for decrypting the first encrypted content, the second encrypted content stored in the recording medium device cannot be decrypted using the disclosed first title key. As a result, it is possible to prevent fraudulent use of content.

**[Brief Description of Drawings]**

Fig. 1 is an overall block diagram of the recording playback system in embodiment 1 of the present invention.
Fig. 2 is a detailed block diagram of the key issuing authority in embodiment 1 of the present invention.
Fig. 3 is a detailed block diagram of the key distribution server in embodiment 1 of the present invention.
Fig. 4 is a detailed block diagram of the recording device in embodiment 1 of the present invention.
Fig. 5 is a detailed block diagram of the memory card in embodiment 1 of the present invention.
Fig. 6 is a detailed block diagram of the playback device in embodiment 1 of the present invention.
Fig. 7 is a detailed block diagram of the authentication units in the key distribution server and the recording medium device in embodiment 1 of the present invention.
Fig. 8 is a detailed flowchart of operations during distribution and recording in embodiment 1 of the present invention.
Fig. 9 is a detailed flowchart of operations during distribution and recording in embodiment 1 of the present invention.
Fig. 10 is a detailed flowchart of operations during distribution and recording in embodiment 1 of the present invention.
Fig. 11 is a detailed flowchart of operations for authentication between the key distribution server and the memory card in embodiment 1 of the present invention.
Fig. 12 is a detailed flowchart of operations for authentication between the recording device and the memory card in embodiment 1 of the present invention.
Fig. 13 is a detailed flowchart of operations during playback in embodiment 1 of the present invention.
Fig. 14 is a detailed flowchart of operations during playback in embodiment 1 of the present invention.
Fig. 15 is a detailed flowchart of operations for authentication between the playback device and the memory card in embodiment 1 of the present invention.
Fig. 16 is a data block diagram of the media ID.
Figs. 17A-17D are data block diagrams of each type of public key certificate.
Fig. 18 is a data block diagram of a shared content and an individualized content.
Fig. 19 is a detailed block diagram of the key distribution server in embodiment 2 of the present invention.
Fig. 20 is a detailed block diagram of the recording device in embodiment 2 of the present invention.
Fig. 21 is a detailed block diagram of the memory card in embodiment 2 of the present invention.
Fig. 22 is a detailed block diagram of the authentication units in the key distribution server and the recording device in embodiment 2 of the present invention.
Fig. 23 is a detailed flowchart of operations during distribution and recording in embodiment 2 of the present invention.

Fig. 24 is a detailed flowchart of operations during distribution and recording in embodiment 2 of the present invention.
Fig. 25 is a detailed flowchart of operations for authentication between the key distribution server and the recording device in embodiment 2 of the present invention.
Fig. 26 is an overall block diagram of the recording playback system in embodiment 3 of the present invention.
Fig. 27 is a block diagram of the recording medium device in embodiment 3 of the present invention.
Fig. 28 is a block diagram of the recording device in embodiment 3 of the present invention.
Fig. 29 is a block diagram of the key distribution server in embodiment 3 of the present invention.
Fig. 30 is a detailed flowchart of operations during distribution and recording in embodiment 3 of the present invention.
Fig. 31 is a block diagram of the playback device in embodiment 3 of the present invention.
Fig. 32 is a detailed flowchart of operations during playback in embodiment 3 of the present invention.
Fig. 33 is an overall block diagram of the recording playback system in embodiment 4 of the present invention.
Fig. 34 is a block diagram of the key distribution server in embodiment 4 of the present invention.
Fig. 35 is a block diagram of the recording device in embodiment 4 of the present invention.
Fig. 36 is a block diagram of the recording medium device in embodiment 4 of the present invention.
Fig. 37 is a detailed flowchart of operations during distribution and recording in embodiment 4 of the present invention.

**[Description of Embodiments]**

A recording medium device that is one aspect of the present invention is a recording medium device used together with a recording device that controls recording of a first encrypted content transmitted from a key distribution server, the first encrypted content being obtained by encrypting a content using a first title key, the recording medium device comprising: a storage unit; a reception unit operable to receive, from the key distribution server, the first title key that has been encrypted; a decryption unit operable to decrypt the encrypted first title key, and transmit the first title key that has been decrypted to the recording device; a title key generation unit operable to generate a second title key that differs for each recording of a content, and transmit the second title key to the recording device; and an acquisition unit operable to acquire a second encrypted content from the recording device, and store the second encrypted content in the storage unit, the second encrypted content being obtained by decrypting the first encrypted content using the first title key and then encrypting using the second title key.

Also, the encryption of the first title key may be performed using a controller individual key that is unique to the recording medium device and is shared between the recording medium device and the key distribution server based on a key sharing scheme, and the recording medium device may further comprise a holding unit operable to hold the controller individual key, and the decryption unit decrypts the encrypted first title key using the controller individual key.

With this structure, the recording medium device shares, with the key distribution server, the controller individual key that is unique to the recording medium device. This allows the key distribution server to encrypt the first title key for distribution using the controller individual key that is unique to the recording medium device. In other words, it is possible to distribute the first title key so as to be decrypted only by the recording medium device.

Also, the recording medium device may be used together with a content playback device, and may further comprise an encryption unit operable to encrypt the second title key using the controller individual key, and store the encrypted second title key in the storage unit, and the content playback device may comprise: an acquisition unit operable to acquire the controller individual key, the encrypted second title key, and the second encrypted content; a title key decryption unit operable to decrypt the encrypted second title key using the controller individual key; a content decryption unit operable to decrypt the second encrypted content using the second title key; and a playback unit operable to play back the content.

With this structure, it is possible to cause the playback device to hold therein content that is encrypted using the first title key for distribution such that the encrypted content cannot be decrypted using the first title key and can be decrypted using the second title key.

Also, the recording medium device may further comprise an authentication unit operable to perform mutual authentication with the recording device, wherein only when the mutual authentication is successful, the decryption unit may decrypt the encrypted first title key.

With this structure, it is possible to provide the first title key only to a recording device whose authentication has succeeded, thereby improving the security.

Also, only when the controller individual key is authentic, the key distribution server may transmit the first title key that has been encrypted using the authentic controller individual key, and the reception unit may receive the first title key that has been encrypted using the authentic controller individual key.

With this structure, it is possible to prevent the first title key from being treated by an unauthorized recording medium device and an unauthorized recording device.

Also, the title key generation unit may generate a random number as the second title key.

With this structure, it is possible to generate a second title key at random.

Also, the content may be a part that has been extracted from an entire content held in the key distribution server.

With this structure, decryption using the first title key and encryption using the second title key are performed not on the entire content but only a part of the entire content. This can reduce the processing load.

Also, the recording medium device may be housed in a case of the recording device.

With this structure, it is possible to build the recording medium device into the recording device.

A recording method that is another aspect of the present invention is a recording method for use in a recording medium device, the recording medium device being used together with a recording device that controls recording of a first encrypted content transmitted from a key distribution server, the first encrypted content being obtained by encrypting a content using a first title key, the recording method comprising: a receiving step of receiving, from the key distribution server, the first title key that has been encrypted; a decrypting step of decrypting the encrypted first title key, and transmitting the first title key that has been decrypted to the recording device; a title key generating step of generating a second title key that differs for each recording of a content, and transmitting the second title key to the recording device; and an acquiring step of acquiring a second encrypted content from the recording device, and storing the second encrypted content in a storage unit included in the recording medium device, the second encrypted content being obtained by decrypting the first encrypted content using the first title key and then encrypting using the second title key.

A recording medium that is yet another aspect of the present invention is a computer-readable recording medium that records a recording program for use in a recording medium device, the recording medium device being used together with a recording device that controls recording of a first encrypted content transmitted from a key distribution server, the first encrypted content being obtained by encrypting a content using a first title key, the recording program comprising: a receiving step of receiving, from the key distribution server, the first title key that has been encrypted; a decrypting step of decrypting the encrypted first title key, and transmitting the first title key that has been decrypted to the recording device; a title key generating step of generating a second title key that differs for each recording of a content, and transmitting the second title key to the recording device; and an acquiring step of acquiring a second encrypted content from the recording device, and storing the second encrypted content in a storage unit included in the recording medium device, the second encrypted content being obtained by decrypting the first encrypted content using the first title key and then encrypting using the second title key.

An integrated circuit that is still another aspect of the present invention is an integrated circuit for use in a recording medium device, the recording medium device being used together with a recording device that controls recording of a first encrypted content transmitted from a key distribution server, the first encrypted content being obtained by encrypting a content using a first title key, the integrated circuit comprising: a storage unit; a reception unit operable to receive, from the key distribution server, the first title key that has been encrypted; a decryption unit operable to decrypt the encrypted first title key, and transmit the first title key that has been decrypted to the recording device; a title key generation unit operable to generate a second title key that differs for each recording of a content, and transmit the second title key to the recording device; and an acquisition unit operable to acquire a second encrypted content from the recording device, and store the second encrypted content in the storage unit, the second encrypted content being obtained by decrypting the first encrypted content using the first title key and then encrypting using the second title key.

With this structure, the first encrypted content is once decrypted using the first title key, and is encrypted using the second title key that differs for each recording processing, and then is recorded as second encrypted content. Accordingly, even if a title key distribution attack is made whereby a malicious user reveals to disclose the first title key, which is a key for decrypting the first encrypted content, the second encrypted content stored in the recording medium device cannot be decrypted using the disclosed first title key. As a result, it is possible to prevent fraudulent use of content.

A recording device that is one aspect of the present invention is a recording device that records a first encrypted content transmitted from a key distribution server, the first encrypted content being obtained by encrypting a content using a first title key, the recording device comprising: a storage unit; a reception unit operable to receive the first title key that has been encrypted from the key distribution server; a decryption unit operable to decrypt the encrypted first title key; a title key generation unit operable to generate a second title key that differs for each recording of a content; a second decryption unit operable to decrypt the first encrypted content using the first title key; and an encryption unit operable to encrypt the content to obtain a second encrypted content, and store the second encrypted content in the storage unit.

With this structure, the first encrypted content is once decrypted using the first title key, and is encrypted using the second title key that differs for each recording processing, and then is recorded as second encrypted content. Accordingly, even if a title key distribution attack is made whereby a malicious user reveals to disclose the first title key, which is a key for decrypting the first encrypted content, the second encrypted content stored in the recording device cannot be decrypted using the disclosed first title key. As a result, it is possible to prevent fraudulent use of content.

A key distribution server that is another aspect of the present invention is a key distribution server used together with a recording medium device and a recording device that receives a content and writes the received content into the recording medium device, the key distribution server comprising: a key holding unit operable to hold a first title key; a content holding unit operable to hold the content; a content encryption unit operable to encrypt the content using the first title key, and transmit the encrypted content to the recording device; a title key encryption unit operable to encrypt the first title key, and transmit the encrypted first title key to the recording device; and a title key generation unit operable to generate a second title key that differs for each distribution of a content, and transmit the second title key to the recording device, wherein when the recording device receives the encrypted content, the first title key, and the second title key from the key distribution server, the recording device decrypts the encrypted content using the first title key, encrypts the content using the second title key, and writes the encrypted content into the recording medium device.

With this structure, the first encrypted content is once decrypted using the first title key, and is encrypted using the second title key that differs for each recording processing, and then is recorded as second encrypted content in the recording medium device. Accordingly, even if a title key distribution attack is made whereby a malicious user reveals to disclose the first title key, which is a key for decrypting the first encrypted content, the second encrypted content stored in the recording medium device cannot be decrypted using the disclosed first title key. As a result, it is possible to prevent fraudulent use of content.

Also, the key distribution server may further comprise a holding unit operable to hold a controller individual key that is unique to the recording medium device and is shared between the key distribution server and the recording medium device based on a key sharing scheme, and only when the controller individual key is authentic, the title key encryption unit encrypts the first title key using the authentic controller individual key.

With this structure, the recording medium device shares, with the key distribution server, the controller individual key that is unique to the recording medium device. This allows the key distribution server to encrypt the first title key for distribution using the controller individual key that is unique to the recording medium device. In other words, it is possible to distribute the first title key so as to be decrypted only by the recording medium device.

Also, the recording medium device may acquire the second title key from the recording device, encrypt the second title key using the controller individual key, and hold the encrypted second title key, and the key distribution server may be used together with a content playback device, the content playback device may comprise: an acquisition unit operable to acquire the controller individual key, the encrypted second title key, and the second encrypted content; a title key decryption unit operable to decrypt the encrypted second title key using the controller individual key; a content decryption unit operable to decrypt the second encrypted content using the second title key; and a playback unit operable to play back the content.

With this structure, it is possible to cause the playback device to hold therein content that is encrypted using the first title key for distribution such that the encrypted content cannot be decrypted using the first title key and can be decrypted using the second title key.

Also, the key distribution server may further comprise an authentication unit operable to perform mutual authentication with the recording device, wherein only when the mutual authentication is successful, the title key generation unit may be permitted to transmit the second title key to the recording device.

With this structure, it is possible to provide the second title key only to a recording device whose authentication has succeeded, thereby improving the security.

Also, the title key generation unit may generate a random number as the second title key.

With this structure, it is possible to generate a second title key at random.

A key distribution method that is still another aspect of the present invention is a key distribution method for use in a key distribution server, the key distribution server being used together with a recording medium device and a recording device that receives a content and writes the received content into the recording medium device, the key distribution method comprising: a key holding step of holding a first title key; a content holding step of holding the content; a content encrypting step of encrypting the content using the first title key, and transmitting the encrypted content to the recording device; a title key encrypting step of encrypting the first title key, and transmitting the encrypted first title key to the recording device; and a title key generating step of generating a second title key that differs for each distribution of a content, and transmitting the second title key to the recording device, wherein when the recording device receives the encrypted content, the first title key, and the second title key from the key distribution server, the recording device decrypts the encrypted content using the first title key, encrypts the content using the second title key, and writes the encrypted content into the recording medium device.

A recording medium that is yet another one aspect of the present invention is a computer-readable recording medium that records a key distribution program for use in a key distribution server, the key distribution server being used together with a recording medium device and a recording device that receives a content and writes the received content into the recording medium device, the key distribution program comprising: a key holding step of holding a first title key; a content holding step of holding the content; a content encrypting step of encrypting the content using the first title key, and transmitting the encrypted content to the recording device; a title key encrypting step of encrypting the first title key, and transmitting the encrypted first title key to the recording device; and a title key generating step of generating a second title key that differs for each distribution of a content, and transmitting the second title key to the recording device, wherein when the recording device receives the encrypted content, the first title key, and the second title key from the key distribution server, the recording device decrypts the encrypted content using the first title key, encrypts the content using the second title key, and writes the encrypted content into the recording medium device.

With this structure, the first encrypted content is once decrypted using the first title key, and is encrypted using the second title key that differs for each recording processing, and then is recorded as second encrypted content. Accordingly, even if a title key distribution attack is made whereby a malicious user reveals to disclose the first title key, which is a key for decrypting the first encrypted content, the second encrypted content stored in the recording medium device cannot be decrypted using the disclosed first title key. As a result, it is possible to prevent fraudulent use of content.

With reference to the drawings, the following describes embodiments of the present invention.

## 1. Embodiment 1

With reference to the drawings, the following describes embodiment 1 of the present invention.

### 1.1 Overall Configuration

Fig. 1 is an overall block diagram of the recording playback system in embodiment 1 of the present invention. The recording playback system is composed of a key distribution server 100, recording device 200, recording medium device 300, playback device 400, and key issuing authority 900.

The following describes the case when the recording medium device 300 is a memory card.

Figs. 2 through 6 show the detailed configuration of the key issuing authority 900, key distribution server 100, recording device 200, memory card 300, and playback device 400 which comprise the recording playback system.

### 1.2 Detailed Configuration of Key Issuing Authority 900

As shown in Fig. 2, the key issuing authority 900 is composed of a root public key generation unit 901, controller ID storage unit 902, partial media ID generation unit 903, recording medium device public key generation unit 904, media unique key generation unit 905, recording medium device private key generation unit 906, device identification information generation unit 907, recording device/playback device/key distribution server public key generation unit 908, recording device/playback device/key distribution server private key generation unit 909, root private key generation unit 910, recording medium device public key certificate generation unit 911, controller key storage unit 912, encryption unit 913, and recording device/playback device/key distribution server public key certificate generation unit 914.

The root public key generation unit 901 and root private key generation unit 910 generate the root public key of the key issuing authority and the root private key corresponding to the root public key respectively. The key issuing authority notifies the recording device manufacturer's device, the recording medium device manufacturer's device, and the playback device manufacturer's device of the root public key, and each of the manufacturer's devices accordingly stores the root public key in the corresponding device, i.e. the recording device, recording medium device, and playback device. As described below, the root public key is used to verify the signature of each of the public key certificates. The key issuing authority generates the signature of each of the public key certificates using the root private key. A pair of a root public key and a root private key are, for example, a pair of a public key and a private key of the RSA cryptosystem. As the RSA cryptosystem is well known, a description thereof is omitted. Note that RSA is only one example; other public key cryptosystems (digital signature schemes using public key encryption technology) may be used.

The controller ID storage unit 902 stores the controller ID. This controller ID is identification information embedded in the recording medium device, generated by the controller manufacturer's device, and notified to the key issuing authority. As a specific example of the controller ID, identification information for a predetermined number of controllers (for example, information identifying controllers in the same lot) can be used. A "lot" refers to a predetermined smallest unit of manufacture at the time of manufacturing. Note that this description pertains to when identification information for a predetermined number of controllers is used as the controller ID, but the controller ID is not limited to this configuration. For example, the controller ID may be identification information for each controller (i.e. information identifying each individual controller). The controller ID may also be a concatenated value composed of information identifying the manufacturer of the controller and information identifying the controller's manufacturing lot. The bit length of the controller ID is set, for example, to 64 bits.

The partial media ID generation unit 903 generates the partial media ID. The bit length of the partial media ID is, for example, 64 bits. As described below, the partial media ID and the controller ID are concatenated to form the media ID, which is identification information for uniquely specifying a recording medium device. In other words,

$$\text{media IA} = \text{controller ID} \,\|\, \text{partial media ID}$$

In the above expression, x || y indicates concatenation of x and y in that order. The bit length of the media ID is, for example, 128 bits.

The recording medium device public key generation unit 904 and recording medium device private key generation unit 906 generate, for each recording medium device, a different pair of a recording medium device public key and a recording medium device private key corresponding to the recording medium device public key. A pair of a recording medium device public key and a recording medium device private key are, for example, a pair of a public key and a private key of the RSA cryptosystem. As the RSA cryptosystem is well known, a description thereof is omitted.

The media unique key generation unit 905 generates a media unique key. A media unique key is, for example, a 128-bit random numerical value and is generated so as to differ for each recording medium device. Note that, in this embodiment, the name "media unique key" does not have a specific meaning, and may be alternatively referred to as other name such as "controller individual key".

The device identification information generation unit 907 generates the following IDs: the recording device ID, which is information for uniquely specifying each recording device; the playback device ID, which is information for uniquely specifying each playback device; and the key distribution server ID, which is information for uniquely specifying each key distribution server. The recording device ID at least includes device classification information that indicates whether the device is a recording device or a playback device (for example, if the device classification information is 1 bit, a value of "1" indicates a recording device, and a value of "0" indicates a playback device). Furthermore, the recording device ID may include a recording device manufacturer's ID for uniquely identifying the recording device manufacturer and a recording device serial number for identifying each individual recording device. This recording device serial number for identifying each individual recording device may be a number as notified by the recording device manufacturer.

The playback device ID at least includes device classification information that indicates whether the device is a recording device or a playback device (for example, if the device classification information is 1 bit, a value of "1" indicates a recording device, and a value of "0" indicates a playback device). Furthermore, the playback device ID may include a playback device manufacturer's ID for uniquely identifying the playback device manufacturer and a recording device serial number for identifying each individual playback device. This playback device serial number for identifying each individual playback device may be a number as notified by the playback device manufacturer.

The device classification information is included in the recording device public key certificate or the playback device public key certificate. A recording medium device distinguishes, using the device classification information, if another device is a recording device or a playback device after receiving, from the other device, a recording device public key certificate or playback device public key certificate.

The recording device/playback device/key distribution server public key generation unit 908 and recording device/playback device/key distribution server private key generation unit 909 generate either 1) for each recording device, a different pair of a recording device public key and a recording device private key corresponding to the recording device public key, 2) for each playback device, a different pair of a playback device public key and a playback device private key corresponding to the playback device public key, or 3) for each key distribution server, a different pair of a key distribution server public key and a key distribution server private key corresponding to the key distribution server public key. The key issuing authority secretly notifies the recording device manufacturer's device, playback device manufacturer's device, or key distribution server of the generated recording device private key, playback device private key, or key distribution server private key respectively. A pair of a recording device public key and a recording device private key, a pair of a playback device public key and a playback device private key, and a pair of a key distribution server public key and a key distribution server private key are, for example, pairs of a public key and a private key of the RSA cryptosystem. As the RSA cryptosystem is well known, a description thereof is omitted.

The recording medium device public key certificate generation unit 911 generates, using the root private key, signature information for original information of the recording medium device public key certificate, which at least includes the controller ID stored by the controller ID storage unit 902, the partial media ID generated by the partial media ID generation unit 903, and the recording medium device public key generated by the recording medium device public key generation unit 904. The recording medium device public key certificate generation unit 911 then generates a recording medium device public key certificate that includes at least the controller ID, partial media ID, recording medium device public key, and the generated signature information. The key issuing authority notifies the recording medium device manufacturer's device of the generated recording medium device public key certificate, which the recording medium device manufacturer's device stores in the recording medium device.

The controller key storage unit 912 stores the controller key. This controller key is a key that is stored in the controller, which is embedded in the recording medium device, is generated by the controller manufacturer's device, and is notified to the key issuing authority. The controller key is unique for a predetermined number of controllers (for example, controllers in the same lot). A "lot" refers to a predetermined smallest unit of manufacture at the time of manufacturing. Note that the controller key is not limited to being unique for a predetermined number of controllers. For example, the controller key may be unique for each controller (i.e. for each individual controller).

The encryption unit 913 encrypts the media unique key generated by the media unique key generation unit 905 and the recording medium device private key generated by the recording medium device private key generation unit 906 using the controller key stored in the controller key storage unit 912 to generate a provisional encrypted media unique key and a provisional encrypted recording medium device private key. The key issuing authority notifies the recording medium device manufacturer's device of the generated provisional encrypted media unique key and provisional encrypted recording medium device private key. The recording medium device manufacturer's device and the recording medium device decrypt the provisional encrypted media unique key and provisional encrypted recording medium device private key using the controller key and then encrypt the decrypted media unique key and decrypted recording medium device private key using the controller unique key, described below. An encrypted media unique key and encrypted recording medium device private key are thus generated and are stored in the recording medium device.

The recording device/playback device/key distribution server public key certificate generation unit 914 generates a public key certificate in one of the three following ways. 1) The recording device/playback device/key distribution server public key certificate generation unit 914 generates, using the root private key, signature information for original information of the recording device public key certificate, which includes at least a) the device identification information, which is generated by the device identification information generation unit 907 and indicates the recording device, and b) the recording device public key generated by the recording device/playback device/key distribution server public key generation unit 908. The recording device/playback device/key distribution server public key certificate generation unit 914 then generates the recording device public key certificate, which includes at least the device identification information, recording device public key, and the generated signature information. 2) The recording device/playback device/key distribution server public key certificate generation unit 914 generates, using the root private key, signature information for original information of the playback device public key certificate, which includes at least a) the device identification information, which is generated by the device identification information generation unit 907 and indicates the playback device, and b) the playback device public key generated by the recording device/playback device/key distribution server public key generation unit 908. The recording device/playback device/key distribution server public key certificate generation unit 914 then generates the playback device public key certificate, which includes at least the device identification information, playback device public key, and the generated signature information. 3) The recording device/playback device/key distribution server public key certificate generation unit 914 generates, using the root private key, signature information for original information of the key distribution server public key certificate, which includes at least the key distribution server public key generated by the recording device/playback device/key distribution server public key generation unit 908. The recording device/playback device/key distribution server public key certificate generation unit 914 then generates the key distribution server public key certificate, which includes at least the key distribution server public key and the generated signature information. Then, 1) the key issuing authority notifies the recording device manufacturer's device of the generated recording device public key certificate, which the recording device manufacturer's device stores in the recording device; 2) the key issuing authority notifies the playback device manufacturer's device of the generated playback device public key certificate, which the playback device manufacturer's device stores in the playback device; and 3) the key issuing authority notifies the key distribution server of the generated key distribution server public key certificate, which is stored in the key distribution server.

1.3 Detailed Configuration of Key Distribution Server 100

As shown in Fig. 3, the key distribution server 100 is composed of a content storage unit 101, content division unit 102, content distinguishing information generation unit 103, key distribution server private key storage unit 104, key distribution server public key certificate storage unit 105, shared title key generation unit 106, shared content storage unit 107, provisional title key generation unit 108, individualized content storage unit 109, encryption unit 110, encryption unit 111, root public key storage unit 112, authentication unit 113, decryption unit 114, encryption unit 115, and encryption unit 116.

The content storage unit 101 is a database for storing various types of content, such as movies, music, etc.

In accordance with predetermined rules, the content division unit 102 divides content into shared content and individualized content, storing the divided shared content in the shared content storage unit 106 and the divided individualized content in the individualized content storage unit 108. Note that hereinafter, shared content is simply referred to as shared content, and individualized content as individualized content. When content has parts with differing degrees of importance, the predetermined rules may, for example, treat the parts with a high degree of importance as individualized content and the parts with a low degree of importance as shared content. A specific example of a part with a high degree of importance is, for example, a part that the copyright holder definitely wants to prevent from being copied. Note that when no particular parts with a differing level of importance exist, the content may be divided into two pieces of a predetermined size, the first piece being shared content and the second piece individualized content. Note that the methods of division of content described here are only examples, and division is not limited to these methods.

The content distinguishing information generation unit 103 generates content distinguishing information that at least includes information distinguishing between shared content and individualized content (for example, the information is 1 bit, a value of "0" indicates shared content, and a value of "1" indicates individualized content). Content distinguishing information that includes information indicating that the content is shared content is added to the shared content divided by the content division unit 102, and content distinguishing information that includes information indicating that the content is individualized content is added to the individualized content divided by the content division unit 102. The content distinguishing information may also include content division rule information, which indicates the rules by which the content was divided, and content division position information, which indicates the starting and ending positions, within the original content, of the shared content and the individualized content. The content division rule information or content division position information are used by the playback device when recombining the divided shared content and individualized content. Fig. 18 shows an example of the data structure of the content distinguishing information when added to shared content and to individualized content. As shown in Fig. 18, when the content distinguishing information is added to the tops (headers) of the shared content and the individualized content, then when encrypting the shared content and the individualized content, the content distinguishing information is not encrypted (i.e. is unencrypted). This is to make it possible to distinguish between shared content and individualized content even when these are encrypted. Note that the content distinguishing information is not limited to being added to the tops (headers) of the shared content and the individualized content. In other words, the respective pieces of content distinguishing information may be managed as separate data as long as they are matched with the shared content and the individualized content.

The key distribution server private key storage unit 104 stores the key distribution server private key as notified by the key issuing authority 900.

The key distribution server public key certificate storage unit 105 stores the key distribution server public key certificate as notified by the key issuing authority 900.

The shared title key generation unit 106 generates a shared title key used to encrypt shared content. The shared title key is, for example, a 128-bit random numerical value and differs for each content.

The shared content storage unit 107 stores shared content to which content distinguishing information has been added. Note that the method of adding content distinguishing information to the shared content may, for example, be to store the content distinguishing information in part of the header for the file in which the shared content is stored. Alternatively, the content distinguishing information may be stored in a different file than the file in which the shared content is stored, and information matching the file in which the content distinguishing information is stored with the file in which the shared content is stored may be included in the file in which the shared content is stored and/or in the file in which the content distinguishing information is stored.

The provisional title key generation unit 108 stores a provisional title key used to encrypt individualized content. The provisional title key is, for example, a 128-bit random numerical value.

The individualized content storage unit 109 stores individualized content to which content distinguishing information has been added. The method of adding content distinguishing information to the individualized content is the same as the above-described method of adding content distinguishing information to the shared content, and thus a description thereof is omitted.

The encryption unit 110 encrypts the shared content stored by the shared content storage unit 105 using the shared title key stored by the shared title key storage unit 103 to generate encrypted shared content. The encryption unit 110 then transmits this encrypted shared content to the memory card. Content distinguishing information is not encrypted at this time so that the shared content can be distinguished even when encrypted.

The encryption unit 111 encrypts the individualized content stored by the individualized content storage unit 106 using the provisional title key stored by the provisional title key generation unit 108 to generate encrypted provisional individualized content. The encryption unit 111 then transmits the encrypted provisional individualized content to the recording device. Content distinguishing information is not encrypted at this time so that the individualized content can be distinguished even when encrypted.

The root public key storage unit 112 stores the root public key of which the key issuing authority 900 provides notification.

The authentication unit 113 performs mutual authentication with the authentication unit 302 in the memory card 300 using the root public key stored by the root public key storage unit 112, the key distribution server private key stored by the key distribution server private key storage unit 104, and the key distribution server public key certificate stored by the key distribution server public key certificate storage unit 105, and generates a session key that differs for each mutual authentication. Details on the structure and procedures of the mutual authentication are provided below.

The decryption unit 114 decrypts an encrypted converted media unique key received from the memory card using the session key generated by the authentication unit 113 to generate a converted media unique key.

The encryption unit 115 encrypts the shared title key generated by the shared title key generation unit 106 using the converted media unique key generated by the decryption unit 114 to generate an encrypted shared title key. The encryption unit 115 then transmits this encrypted shared title key to the memory card.

The encryption unit 116 encrypts the provisional title key generated by the provisional title key generation unit 108 using the converted media unique key generated by the decryption unit 114 to generate an encrypted provisional title key. The encryption unit 116 then transmits this encrypted provisional title key to the memory card.

The algorithms of the cryptosystem used in the encryption units 110, 111, 115, and 116 and the decryption unit 114 can, for example, be the Advanced Encryption Standard (AES). AES is well known, and thus a description thereof is omitted.

1.4 Detailed Configuration of Recording Device 200

As shown in Fig. 4, the recording device 200 is composed of a recording device private key storage unit 201, recording device public key certificate storage unit 202, decryption unit 203, root public key storage unit 204, authentication unit 205, decryption unit 206, decryption unit 207, and encryption unit 208.

The recording device private key storage unit 201 stores the recording device private key of which the key issuing authority 900 provides notification.

The recording device public key certificate storage unit 202 stores the recording device public key certificate of which the key issuing authority 900 provides notification.

The decryption unit 203 decrypts the encrypted provisional individualized content received from the key distribution server 100 using the provisional title key generated by the decryption unit 206 to generate individualized content.

The root public key storage unit 204 stores the root public key of which the key issuing authority 900 provides notification.

The authentication unit 205 performs mutual authentication with the authentication unit 304 in the memory card 300 using the root public key stored by the root public key storage unit 204, the recording device private key stored by the recording device private key storage unit 201, and the recording device public key certificate stored by the recording device public key certificate storage unit 202, and generates a session key that differs for each mutual authentication. Details on the structure and procedures of the mutual authentication are provided below.

The decryption unit 206 decrypts an encrypted provisional title key received from the memory card 300 using the session key generated by the authentication unit 205 to generate a provisional title key.

The decryption unit 207 decrypts an encrypted individualized title key received from the memory card 300 using the session key generated by the authentication unit 205 to generate an individualized title key.

The encryption unit 208 encrypts the individualized content generated by the decryption unit 203 using the individualized title key generated by the decryption unit 207 to generate encrypted individualized content. The encryption unit 208 transmits this encrypted individualized content to the memory card.

The algorithms of the cryptosystem used in the encryption unit 208 and the decryption units 206, 207, and 208 can, for example, be the Advanced Encryption Standard (AES). AES is well known, and thus a description thereof is omitted.

1.5 Detailed Configuration of Memory Card 300

As shown in Fig. 5, the memory card 300 is composed of a controller 330 and a memory unit 340. The controller both performs processing such as reading and writing of data in the memory unit 340 in the memory card 300 and also, in response to a request from the key distribution server 100, the recording device 200, or the playback device 400, performs mutual authentication, processing for transmission or reception of data, etc. The controller 330 is composed of a semiconductor device such as an LSI, and the memory unit 340 is composed of, for example, flash memory.

Furthermore, the controller 330 is composed of a root public key storage unit 301, authentication unit 302, encryption unit 303, authentication unit 304, encryption unit 305, encryption unit 306, controller ID storage unit 307, media ID generation unit 308, one-way conversion unit 309, decryption unit 310, controller unique number storage unit 311, controller key storage unit 312, individualized title key generation unit 313, controller unique key generation unit 314, decryption unit 315, decryption unit 316, and encryption unit 317. The memory unit 340 is composed of an encrypted recording medium device private key storage unit 318, recording medium device public key certificate storage unit 319, encrypted media unique key storage unit 320, encrypted shared title key storage unit 321, encrypted share content storage unit 322, encrypted individualized title key storage unit 323, and encrypted individualized content storage unit 324.

The root public key storage unit 301 stores the root public key of which the key issuing authority 900 provides notification.

The authentication unit 302 performs mutual authentication with the authentication unit 113 in the key distribution server 100 using the root public key stored by the root public key storage unit 301, the recording medium device private key generated by the decryption unit 315, and the recording medium device public key certificate stored by the recording medium device public key certificate storage unit 319, and generates a session key that differs for each mutual authentication. Details on the structure and procedures of the mutual authentication are provided below.

The encryption unit 303 encrypts a converted media unique key generated by the one-way conversion unit 309 using the session key generated by the authentication unit 302 to generate an encrypted converted media unique key. The encryption unit 303 then transmits the encrypted converted media unique key to the key distribution server or to the playback device.

The authentication unit 304 performs mutual authentication with each of the authentication unit 205 in the recording device 200 and the authentication unit 402 in the playback device 400, using the root public key stored by the root public key storage unit 301, the recording medium device private key generated by the decryption unit 315, and the recording medium device public key certificate stored by the recording medium device public key certificate storage unit 319. The authentication unit 304 generates a session key that differs for each mutual authentication. Details on the structure and procedures of the mutual authentication are provided below.

The encryption unit 305 encrypts a provisional title key generated by the decryption unit 310 using the session key generated by the authentication unit 304 to generate an encrypted provisional title key. The encryption unit 305 transmits the encrypted provisional title key to the recording device.

The encryption unit 306 encrypts an individualized title key generated by the individualized title key generation unit 313 using the session key generated by the authentication unit 304 to generate an encrypted individualized title key. The encryption unit 306 transmits the encrypted individualized title key to the recording device.

The controller ID storage unit 307 stores a controller ID.

The media ID generation unit 308 generates a media ID from the controller ID stored by the controller ID storage unit 307 and the partial media ID included in the recording medium device public key certificate stored by the recording medium device public key certificate storage unit 319.

The one-way conversion unit 309 performs one-way conversion on the media unique key generated by the decryption unit 316 to generate a converted media unique key.

The decryption unit 310 decrypts the encrypted provisional title key using the converted media unique key generated by the one-way conversion unit to generate a provisional title key.

The controller unique number storage unit 311 stores a controller unique number.

The controller key storage unit 312 stores a controller key.

The individualized title key generation unit 313 generates an individualized title key. The individualized title key is, for example, a 128-bit random numerical value and differs for each recording process.

The controller unique key generation unit 314 generates a controller unique key from the controller key stored by the controller key storage unit 312 and the controller unique number stored by the controller unique number storage unit 311.

The decryption unit 315 decrypts the encrypted recording medium device private key stored by the encrypted recording medium device private key storage unit 318 using the controller unique key generated by the controller unique key generation unit 314 to generate a recording medium device private key.

The decryption unit 316 decrypts the encrypted media unique key stored by the encrypted media unique key storage unit 320 using the controller unique key generated by the controller unique key generation unit 314.

The encryption unit 317 encrypts the individualized title key generated by the individualized title key generation unit 313 using the converted media unique key generated by the one-way conversion unit to generate an encrypted individualized title key. The encryption unit 317 then stores the encrypted individualized title key in the encrypted individualized title key storage unit 323.

The encrypted recording medium device private key storage unit 318 stores an encrypted recording medium device private key. At the time of manufacture of the recording medium device, the recording medium device manufacturer's device and the recording medium device first decrypt the provisional encrypted recording medium device private key of which the key issuing authority provides notification using the controller key, subsequently encrypting the decrypted recording medium device private key with use of the controller unique key. The encrypted recording medium device private key is thereby generated.

The recording medium device public key certificate storage unit 319 stores the recording medium device public key certificate of which the key issuing authority 900 provides notification.

The encrypted media unique key storage unit 320 stores an encrypted media unique key. At the time of manufacture of the recording medium device, the recording medium device manufacturer's device and the recording medium device first decrypt the provisional encrypted media unique key of which the key issuing authority provides notification using the controller key, subsequently using the controller unique key to encrypt the decrypted media unique key. The encrypted media unique key is thereby generated.

The encrypted shared title key storage unit 321 stores the encrypted shared title key received from the key distribution server 100.

The encrypted shared content storage unit 322 stores the encrypted shared content received from the key distribution server 100.

The encrypted individualized title key storage unit 323 stores the encrypted individualized title key generated by the encryption unit 317.

The encrypted individualized content storage unit 324 stores the encrypted individualized content received from the recording device 200.

The algorithms of the cryptosystem used in the encryption units 305, 306, and 317 and the decryption units 310, 315, and 316 can, for example, be the Advanced Encryption Standard (AES). AES is well known, and thus a description thereof is omitted.

1.6 Detailed Configuration of Playback Device 400

As shown in Fig. 6, the playback device 400 is composed of a root public key storage unit 401, authentication unit 402, decryption unit 403, decryption unit 404, decryption unit 405, decryption unit 406, decryption unit 407, playback device private key storage unit 408, and playback device certificate storage unit 409.

The root public key storage unit 401 stores the root public key of which the key issuing authority 900 provides notification.

The authentication unit 402 performs mutual authentication with the authentication unit 304 in the memory card 300 using the root public key stored by the root public key storage unit 401, the playback device private key stored by the playback device private key storage unit 408, and the playback device public key certificate stored by the playback device public key certificate storage unit 409, and generates a session key that differs for each mutual authentication. Details on the structure and procedures of the mutual authentication are provided below.

The decryption unit 403 decrypts an encrypted converted media unique key received from the memory card 300 using the session key generated by the authentication unit 402 to generate a converted media unique key.

The decryption unit 404 decrypts the encrypted shared title key received from the memory card using the converted media unique key generated by the decryption unit 403 to generate a shared title key.

The decryption unit 405 decrypts encrypted shared content received from the memory card using the shared title key generated by the decryption unit 404 to generate shared content.

The decryption unit 406 decrypts an encrypted individualized title key received from the memory card using the converted media unique key generated by the decryption unit 403 to generate an individualized title key.

The decryption unit 407 decrypts encrypted individualized content received from the memory card using the individualized title key generated by the decryption unit 406 to generate individualized content.

The playback device private key storage unit 408 stores a playback device private key of which the key issuing authority 900 provides notification.

The playback device certificate storage unit 409 stores a playback device certificate of which the key issuing authority 900 provides notification.

A content combination unit 410 combines the shared content generated by the decryption unit 405 with the shared content generated by the decryption unit 406 using the content distinguishing information to generate the original content.

A playback unit 411 plays back the original content generated by the content combination unit 410.

The algorithms of the cryptosystem used in the decryption units 403, 404, 405, 406, and 407 can, for example, be Advanced Encryption Standard (AES). AES is well known, and thus a description thereof is omitted.

1.7 Detailed Configuration of Authentication Units

Fig. 7 shows an example of the detailed configuration of the authentication unit 113 in the key distribution server and the authentication unit 302 in the memory card.

As shown in Fig. 7, the authentication unit in the key distribution server is furthermore composed of a random number generation unit 121, signature verification unit 122, signature verification unit 123, signature generation unit 124, and session key generation unit 125. The authentication unit in the memory card is furthermore composed of a signature generation unit 331, signature verification unit 332, signature verification unit 333, session key generation unit 334, and random number generation unit 335.

The random number generation unit 121 generates a random number. The random number is, for example, a 128-bit random numerical value.

The signature verification unit 122 verifies the signature included in the recording medium device public key certificate using the root public key and the recording medium device public key certificate received from the memory card. If signature verification is successful, the recording medium device public key included in the recording medium device public key certificate is determined to be authentic.

If signature verification by the signature verification unit 122 succeeds, the signature verification unit 123 verifies the signature for the random number received from the memory card using the recording medium device public key received from the signature verification unit 122 and the random number generated by the random number generation unit 121. If signature verification is successful, the memory card is determined to be authentic.

The signature generation unit 124 generates a signature for the random number received from the memory card and transmits the signature to the memory card.

When the memory card is determined to be authentic, the session key generation unit 125 generates a session key from the random number generated by the random number generation unit 121 and the random number received from the memory card. The following function, for example, can be used for session key generation.

session key = AES_E(k, random number 1 (+) random number 2)

AES_E(k, m) refers to the AES cryptosystem that encrypts an input m with a key k. A (+) B refers to an exclusive OR operation on A and B.

In this function, k is a secret parameter secretly pre-stored in the session key generation unit, random number 1 is a random number generated by the random number generation unit, and random number 2 is a random number received from the memory card.

The signature generation unit 331 generates a signature for a random number received from the key distribution server and transmits the signature to the key distribution server.

The signature verification unit 332 verifies the signature included in the key distribution server public key certificate using the root public key and the key distribution server public key certificate received from the key distribution server. If signature verification is successful, the key distribution server public key included in the key distribution server public key certificate is determined to be authentic.

If signature verification by the signature verification unit 332 succeeds, the signature verification unit 333 verifies the signature for the random number received from the key distribution server using the key distribution server public key received from the signature verification unit 332 and the random number generated by the random number generation unit 334. If signature verification is successful, the key distribution server is determined to be authentic.

When the key distribution server is determined to be authentic, the session key generation unit 334 generates a session key from the random number generated by the random number generation unit 335 and the random number received from the key distribution server. The following function, for example, can be used for session key generation.

session key = AES_E(k, random number 1 (+) random number 2)

In this function, k is a secret parameter secretly pre-stored in the session key generation unit, random number 1 is a random number received from the key distribution server, and random number 2 is a random number generated by the random number generation unit 335.

The random number generation unit 335 generates a random number. The random number is, for example, a 128-bit random numerical value.

An RSA cryptosystem may be used as the signature generation/signature verification algorithm used by the signature generation unit 123 and the signature verification units 122 and 123. Note that RSA is only one example, and other public key cryptosystems (digital signature schemes that use public key encryption technology) may be used.

Note that the configuration shown here is merely one example; other configurations may be implemented.

The detailed configuration of the authentication unit 205 in the recording device and the authentication unit 402 in the playback device is the same as the detailed configuration of the authentication unit 113 in the key distribution server, and therefore a description thereof is omitted.

1.8 Detailed Flow of Operations During Distribution and Recording of Content

Figs. 8 through 10 show an example of the detailed flow of operations when content is distributed from the key distribution server 100 and recorded on the memory card 300 via the recording device 200.

First, the controller unique key generation unit 314 in the memory card 300 generates a controller unique key from the controller unique number stored by the controller unique number storage unit 311 and the controller key stored by the controller key storage unit 312 (S 101).

The controller unique key is generated, for example, via the following function.

$$\text{controller unique key} = \text{AES_E}(\text{controller ID}, \text{controller key}) \ (+) \ \text{controller key}$$

AES_E(k, m) refers to the AES cryptosystem that encrypts an input m with a key k. A (+) B refers to an exclusive OR operation on A and B.

Next, the decryption unit 315 decrypts the encrypted recording medium device private key stored by the encrypted recording medium device private key storage unit 318 using the controller unique key generated in step S 101 to generate a recording medium device private key (S 102).

Next, the authentication unit 302 in the memory card 300 performs mutual authentication with the authentication unit 113 in the key distribution server 100 (S103).

When mutual authentication fails, processing terminates. Details on the mutual authentication step S103 are provided below.

Next, when mutual authentication in step S103 succeeds, the decryption unit 316 in the memory card 300 decrypts the encrypted media unique key stored by the encrypted media unique key storage unit 320 using the controller unique key generated in step S101 to generate a media unique key (S104).

Next, the media ID generation unit 308 concatenates the controller ID stored by the controller ID storage unit 307 and the partial media ID included in the recording medium device public key certificate stored by the recording medium device public key certificate storage unit 319 to generate a media ID (S 105).

Fig. 16 shows an example of the data structure of the media ID.

Next, the one-way conversion unit 309 performs one-way conversion using as input the media ID generated in step S105 and the media unique key generated in step S104 to generate a converted media unique key (S106). The following function may be used as an example of one-way conversion.

$$\text{converted media unique key} = \text{AES_E}(\text{media ID}, \text{media unique key}) \ (+) \ \text{media unique key}$$

AES_E(k, m) refers to encrypting an input m with a key k using the AES cryptosystem.

x (+) y refers to an exclusive OR operation on x and y.

Next, the encryption unit 303 encrypts the converted media unique key generated in step S106 using the session key generated as a result of mutual authentication in step S103 to generate an encrypted converted media unique key, which the encryption unit 303 then transmits to the key distribution server (S107).

Upon receiving the encrypted converted media unique key from the memory card in step S107, the decryption unit 114 in the key distribution server 100 decrypts the received encrypted converted media unique key using the session key generated as a result of mutual authentication in step S103 to generate a converted media unique key (S 108).

Next, the shared title key generation unit 106 generates a shared title key (S109).

The shared title key is, for example, a 128-bit random numerical value.

Next, the encryption unit 115 decrypts the shared title key generated in step S109 using the converted media unique key generated in step S108 to generate an encrypted shared title key, which the encryption unit 115 then transmits to the memory card (S110).

The memory card 300 stores the encrypted shared title key received in step S110 in the encrypted shared title key storage unit 321 (S111).

Next, the content division unit 102 in the key distribution server 100 acquires the content for distribution from among the contents stored in the content storage unit 101 and divides the acquired content into shared content and individualized content (S112).

Next, the content distinguishing information generation unit 103 generates content distinguishing information and adds the content distinguishing information to the shared content and the individualized content, storing the shared content in the shared content storage unit 107 and the individualized content in the individualized content storage unit 109 (S113).

Note that step S112 and step S113 do not necessarily have to be performed at this point; the key distribution server may perform step S112 and step S113 beforehand for all of the contents.

Next, the encryption unit 110 encrypts the shared content generated in step S112 using the shared title key generated in step S109 to generate encrypted shared content, which the encryption unit 110 transmits to the memory card (S114).

The memory card 300 stores the encrypted shared content received in step S114 in the encrypted shared content storage unit 322 (S115).

Next, the provisional title key generation unit 108 in the key distribution server 100 generates a provisional title key (S116). The provisional title key is, for example, a 128-bit random numerical value.

Next, the encryption unit 116 encrypts the provisional title key generated in step S116 using the converted media unique key generated in step S108 to generate an encrypted provisional title key, which the encryption unit 116 then transmits to the memory card (S 117).

Next, upon receiving the encrypted provisional title key in step S117, the decryption unit 310 in the memory card decrypts the encrypted provisional title key using the converted media unique key generated in step S106 to generate a provisional title key (S118).

Next, the encryption unit 111 in the key distribution server 100 encrypts the individualized content generated in step S112 using the provisional title key generated in step S116 to generate encrypted provisional individualized content, which the encryption unit 111 transmits to the recording device (S 119).

Next, the authentication unit 304 in the memory card 300 performs mutual authentication with the authentication unit 205 in the recording device 200 and also determines whether the other device is a recording device or a playback device (S 120).

When mutual authentication fails, processing terminates. Details on the mutual authentication step S120 are provided below. The authentication in step S120 is either triggered by the memory card 300 decrypting the encrypted provisional title key in step S118 or by the recording device 200 receiving the encrypted provisional individualized content from the key distribution server 100 in step S119.

When the mutual authentication in step S 120 succeeds and the other authenticated device is a recording device, the encryption unit 305 in the memory card encrypts the provisional title key generated in step S118 using the session key generated by the mutual authentication in step S120; the encryption unit 305 then transmits the encrypted provisional title key to the recording device (S121).

Next, the decryption unit 206 in the recording device 200 decrypts the encrypted provisional title key received in step S 121 using the session key generated by the mutual authentication in step S 120 to generate a provisional title key (S 122).

Next, the individualized title key generation unit 313 in the memory card generates an individualized title key (S123). The individualized title key is, for example, a 128-bit random numerical value.

Next, the encryption unit 317 encrypts the individualized title key generated in step S123 using the converted media unique key generated in step S106 to generate an encrypted individualized title key, which the encryption unit 317 then stores in the encrypted individualized title key storage unit (S124).

Next, the encryption unit 306 encrypts the individualized title key generated in step S123 using the session key generated by mutual authentication in step S120 to generate an encrypted individualized title key, which the encryption unit 306 then transmits to the recording device 200 (S 125).

Next, the decryption unit 207 decrypts the encrypted individualized title key received in step S125 using the session key generated by the mutual authentication in step S120 to generate an individualized title key (S126).

Next, the decryption unit 203 decrypts the encrypted provisional individualized content received in step S119 using the provisional title key generated in step S122 to generate individualized content (S 127).

Next, the encryption unit 208 encrypts the individualized content generated in step S127 using the individualized title key generated in step S126 to generate encrypted individualized content, which the encryption unit 208 then transmits to the memory card (S128).

Next, the memory card stores the encrypted individualized content received in step S128 in the encrypted individualized content storage unit 324 (S129).

1.9 Detailed Flow of Operations for Authentication between Key Distribution Server and Memory Card

Fig. 11 shows a detailed flow of operations for authentication between the key distribution server and the memory card.

The memory card 300 transmits the recording medium device public key certificate to the key distribution server 100 (S201).

Next, the signature verification unit 122 in the key distribution server verifies the signature included in the received recording medium device public key certificate using the recording medium device public key certificate received in step S201 and the root public key stored by the root public key storage unit (S202). If verification fails, authentication processing terminates. If verification is successful, the recording medium device public key included in the recording medium device public key certificate is determined to be authentic.

Next, the key distribution server transmits the key distribution server public key certificate to the memory card (S203).

Next, the signature verification unit 332 in the memory card verifies the signature included in the received key distribution server public key certificate using the key distribution server public key certificate received in step S203 and the root public key stored by the root public key storage unit (S204). If verification fails, authentication processing terminates. If verification is successful, the key distribution server public key included in the key distribution server public key certificate is determined to be authentic.

Next, if the verification in step S202 succeeds, the random number generation unit 121 in the key distribution server generates a random number and transmits the random number to the memory card (S205). This random number is, for example, a 128-bit random numerical value.

Next, the signature generation unit 331 in the memory card generates a signature for the random number received from the key distribution server using the recording medium device private key, then transmitting the signature to the key distribution server (S206).

Next, the key distribution server verifies the signature received in S204 using the random number generated in step S205 and the recording medium device public key determined to be authentic in step S202 (S207). If verification fails, authentication processing terminates. If verification is successful, the memory card is authenticated as an authentic memory card.

Next, when verification is successful in step S204, the random number generation unit 335 in the memory card 300 generates a random number, transmitting the random number to the key distribution server (S208). This random number is, for example, a 128-bit random numerical value.

Next, the signature generation unit 124 in the key distribution server generates a signature for the random number received from the recording medium device using the key distribution server private key, then transmitting the signature to the memory card (S209).

Next, the memory card verifies the signature received in S209 using the random number generated in step S208 and the key distribution server public key determined to be authentic in step S204 (S210). If verification fails, authentication processing terminates. If verification is successful, the key distribution server is authenticated as an authentic key distribution server.

Next, the session key generation unit 125 in the key distribution server 100 generates a session key from the random number generated in step S205 and the random number received in step S208 (S211).

Next, the session key generation unit 334 in the memory card 300 generates a session key from the random number generated in step S208 and the random number received in step S205 (S212).

1.10 Detailed Flow of Operations for Authentication between Recording Device and Memory Card

Fig. 12 shows a detailed flow of operations for authentication between the recording device and the memory card.

The memory card 300 transmits a recording medium device public key certificate to the recording device 200 (S301).

Next, the signature verification unit in the recording device 200 verifies the signature included in the received recording medium device public key certificate using the recording medium device public key certificate received in step S301 and the root public key stored by the root public key storage unit (S302). If verification fails, authentication processing terminates. If verification is successful, the recording medium device public key included in the recording medium device public key certificate is determined to be authentic.

Next, the recording device transmits the recording device public key certificate to the memory card (S303).

Next, the signature verification unit 332 in the memory card verifies the signature included in the received recording device public key certificate using the recording device public key certificate received in step S303 and the root public key stored by the root public key storage unit (S304). If verification fails, authentication processing terminates. If verification is successful, the recording device public key included in the recording device public key certificate is determined to be authentic. Also, the memory card determines whether the other device is a recording device or a playback device based on the device classification information included in the recording device ID included in the recording device public key certificate. If the device classification information indicates that the other device is a playback device, processing terminates. Subsequent steps S305 through S312 are the same as steps S205 through S212 in the detailed flow of operations for mutual authentication between the memory card and the key distribution server, and therefore a description thereof is omitted.

1.11 Data Structure of Recording Medium Device Public Key Certificate, Key Distribution Server Public Key Certificate, and Recording Device Public Key Certificate

Fig. 17A shows an example of the data structure of the recording medium device public key certificate. As shown in Fig. 17A, the recording medium device public key certificate is composed of a controller ID, partial media ID, recording medium device public key, and signature. The signature is generated for a concatenation of the controller ID, partial media ID, and recording medium device public key using the root private key. The signature is generated, for example, with the following equation.

signature = RSA_SIGN(root private key, controller ID || partial media ID || recording medium device public key)

In this equation, s = RSA_SIGN(k, m) refers to generating a signature s for an input m with a private key k using an RSA signature generation function. RSA signature generation functions are well known, and thus a description thereof is omitted.

This signature is verified with the following equation.

{controller ID || partial media ID || recording medium device public key} = RSA_VRFY(root public key, signature)

In this equation, m = RSA_VRFY(p, s) refers to verifying a signature s for m with a public key p using an RSA signature verification function. RSA signature verification functions are well known, and thus a description thereof is omitted.

Fig. 17B shows an example of the data structure of the key distribution server public key certificate. As shown in Fig. 17B, the key distribution server public key certificate is composed of the following: a key distribution server ID, which is information for uniquely identifying a key distribution server; a key distribution server public key; and a signature.

The signature is generated for a concatenation of the key distribution server ID and the key distribution server public key using the root private key and is generated, for example, with the following equation.

signature = RSA_SIGN(root private key, key distribution server ID || key distribution server public key)

The key distribution server ID is, for example, a 32-bit numerical value.
The signature is verified with the following equation.

{key distribution server ID || key distribution server public key} = RSA_VRFY(root public key, signature)

Fig. 17C shows an example of the data structure of the recording device public key certificate. As shown in Fig. 17C, the recording device public key certificate is composed of the following: a recording device ID, which is information for uniquely identifying a recording device; a recording device public key; and a signature. Furthermore, the recording device ID is composed of the following: device classification information that indicates whether the device is a recording device or a playback device, a recording device manufacturer's ID for uniquely identifying the recording device manufacturer, and a recording device serial number for identifying an individual recording device.

The signature is generated for a concatenation of the recording device ID and recording device public key using the root private key and is generated, for example, with the following equation.

$$\text{signature} = \text{RSA_SIGN}(\text{root private key, recording device ID} \,||\, \text{recording device public key})$$

The recording device ID is, for example, a 32-bit numerical value.

The signature is verified with the following equation.

$$\{\text{recording device ID} \,||\, \text{recording device public key}\} = \text{RSA_VRFY}(\text{root public key, signature})$$

1.12 Detailed Flow of Operations during Content Playback

Figs. 13 and 14 show an example of the detailed flow of operations when the playback device plays back content recorded on the memory card 300.

Steps S401 through S408 are exactly the same as steps S101 through S108 in the memory card and key distribution server during distribution and recording of content.

Namely, the controller unique key generation unit 314 in the memory card 300 first generates a controller unique key from the controller unique number stored by the controller unique number storage unit 311 and the controller key stored by the controller key storage unit 312 (S401).

The controller unique key is generated, for example, via the following function.

[0218]

$$\text{controller unique key} = \text{AES_E}(\text{controller unique number, controller key}) \, (+) \, \text{controller key}$$

AES_E(k, m) refers to the AES cryptosystem that encrypts an input m with a key k. A (+) B refers to an exclusive OR operation on A and B.

Next, the decryption unit 315 decrypts the encrypted recording medium device private key stored by the encrypted recording medium device private key storage unit 318 using the controller unique key generated in step S401 to generate a recording medium device private key (S402).

Next, the authentication unit 302 in the memory card 300 performs mutual authentication with the authentication unit 402 in the playback device 400 (S403).

When mutual authentication fails, processing terminates. Details on the mutual authentication step S403 are provided below.

Next, when mutual authentication in step S403 succeeds, the decryption unit 316 in the memory card 300 decrypts the encrypted media unique key stored by the encrypted media unique key storage unit 320 using the controller unique key generated in step S401 to generate a media unique key (S404).

Next, the media ID generation unit 308 concatenates the controller ID stored by the controller ID storage unit 307 and the partial media ID included in the recording medium device public key certificate stored by the recording medium device public key certificate storage unit 319 to generate a media ID (S405).

Next, the one-way conversion unit 309 performs one-way conversion using as input the media ID generated in step S405 and the media unique key generated in step S404 to generate a converted media unique key (S406). The following function may be used as an example of one-way conversion.

[0225]

$$\text{converted media unique key} = \text{AES_E}(\text{media ID, media unique key}) \, (+) \, \text{media unique key}$$

AES_E(k, m) refers to encrypting an input m with a key k using the AES cryptosystem. (+) refers to an exclusive OR operation.

Next, the encryption unit 303 encrypts the converted media unique key generated in step S406 using the session key generated as a result of mutual authentication in step S403 to generate an encrypted converted media unique key, which the encryption unit 303 then transmits to the playback device (S407).

Upon receiving the encrypted converted media unique key from the memory card in step S407, the decryption unit 403 in the playback device 400 decrypts the received encrypted converted media unique key using the session key generated as a result of mutual authentication in step S403 to generate a converted media unique key (S408).

Next, the memory card 300 transmits the encrypted shared title key stored by the encrypted shared title key storage unit 321 to the playback device (S409).

The decryption unit 404 in the playback device 400 decrypts the received encrypted shared title key using the converted media unique key generated in step S408 to generate a shared title key (S410).

Next, the memory card 300 transmits the encrypted shared content stored by the encrypted shared content storage unit 322 to the playback device (S411).

Next, the decryption unit 405 in the playback device 400 decrypts the received encrypted shared content using the shared title key generated in step S410 to generate shared content (S412).

Next, the memory card 300 transmits the encrypted individualized title key stored by the encrypted individualized title key storage unit 323 to the playback device (S413).

The decryption unit 406 in the playback device 400 decrypts the received encrypted individualized title key using the converted media unique key generated in step S408 to generate an individualized title key (S414).

Next, the memory card 300 transmits the encrypted individualized content stored by the encrypted individualized content storage unit 324 to the playback device (S415).

Next, the decryption unit 407 in the playback device 400 decrypts the received encrypted individualized content using the individualized title key generated in step S414 to generate individualized content (S416).

Next, the content combination unit 410 in the playback device 200 combines the shared content generated in step S412 and the individualized content generated in step S416 based on the content distinguishing information added to each of these contents to generate content (S417).

Next, the playback unit 411 in the playback device plays back the content generated in S417 (S418).

### 1.13 Detailed Flow of Operations for Authentication between Playback Device and Memory Card

Fig. 15 shows a detailed flow of operations for authentication between the playback device 400 and the memory card 300.

The memory card 300 transmits the recording medium device public key certificate to the playback device 400 (S501).

Next, the signature verification unit in the playback device 400 verifies the signature included in the received recording medium device public key certificate using the recording medium device public key certificate received in step S501 and the root public key stored by the root public key storage unit (S502). If verification fails, authentication processing terminates. If verification is successful, the recording medium device public key included in the recording medium device public key certificate is determined to be authentic.

Next, the playback device transmits the playback device public key certificate to the memory card (S503).

Next, the signature verification unit 332 in the memory card verifies the signature included in the received playback device public key certificate using the playback device public key certificate received in step S503 and the root public key stored by the root public key storage unit (S504). If verification fails, authentication processing terminates. If verification is successful, the playback device public key included in the playback device public key certificate is determined to be authentic. Also, the memory card determines whether the other device is a recording device or a playback device based on the device classification information included in the playback device ID included in the playback device public key certificate. If the device classification information indicates that the other device is a recording device, processing terminates. Subsequent steps S505 through S512 are the same as steps S205 through S212 in the detailed flow of operations for mutual authentication between the memory card and the key distribution server, and therefore a description thereof is omitted.

### 1.14 Data Structure of Playback Device Public Key Certificate

Fig. 17D shows an example of the data structure of the playback device public key certificate. As shown in Fig. 17D, the playback device public key certificate is composed of the following: a playback device ID, which is information for uniquely identifying a playback device; a playback device public key; and a signature. Furthermore, the playback device ID is composed of the following: device classification information that indicates whether the device is a recording device or a playback device, a playback device manufacturer's ID for uniquely identifying the playback device manufacturer, and a playback device serial number for identifying an individual playback device.

The signature is generated for a concatenation of the playback device ID and playback device public key using the root private key and is generated, for example, with the following equation.

[0244]

$$\text{signature} = \text{RSA_SIGN}(\text{root private key, playback device ID} \,\|\, \text{playback device public key})$$

The playback ID is, for example, a 32-bit numerical value.

The signature is verified with the following equation.

$$\{\text{playback device ID} \,\|\, \text{playback device public key}\} = \text{RSA_VRFY}(\text{root public key, signature})$$

## 1.15 Modification

(1) Individualized Title Key

In embodiment 1, the individualized title key generation unit 313 in the memory card 300 generates a 128-bit random numerical value as the individualized title key, but the method of generating the individualized title key is not limited to this structure.

For example, in the individualized key generation step S123 in Fig. 10, the individualized title key generation unit 313 in the memory card 300 may generate an individualized title key via the following equation, using i) the recording device ID included in the recording device public key certificate that is verified during step S304 in Fig. 12, i.e. the verification step for the recording device public key certificate, and ii) a secret key S for generating an individualized title key. The key issuing authority provides notification of the secret key S, which is pre-stored in the memory card.

[0247]

$$\text{individualized title key} = \text{AES_E}(\text{S, recording device ID} \,\|\, \text{random numerical value})$$

AES_E(k, m) refers to using the AES cryptosystem to encrypt an input m with a key k. "Recording device ID || random numerical value" refers to concatenating the recording device ID and the random numerical value in this order. The recording device ID is, for example, a 32-bit numerical value, and the random numerical value is, for example, 96 bits. The above equation yields a 128-bit random individualized title key.

Suppose that a malicious user fraudulently acquires the playback device private key or other information from an authorized playback device, decrypts an encrypted shared title key and encrypted individualized title key received from a memory card to obtain a shared title key and individualized title key by creating the appearance of an authorized playback device, and discloses these title keys on a Web server, while also illicitly selling a content decryption tool that decrypts encrypted content by acquiring a shared title key and individualized title key that have been disclosed. With the above-described structure, the key issuing authority can acquire the content decryption tool, identify an individualized title key disclosed on the Web server and, using the following equation, ascertain the recording device ID from the identified individualized title key.

[0249]

$$\text{recording device ID} = [\text{AES_D}(\text{S, individualized title key})] \text{ most significant 32 bits}$$

AES_D(k, c) refers to decrypting a ciphertext c using a key k and an AES decryption function. "[x] most significant 32 bits" refers to extracting the most significant 32 bits from x.

With this structure, the key issuing authority can identify a recording device ID from an individualized title key disclosed on a Web server, thus making it possible to invalidate a recording device public key certificate that includes the identified recording device ID. Details on a concrete method for invalidation are provided below.

# 2. Embodiment 2

With reference to the drawings, the following describes embodiment 2 of the present invention.

## 2.1 Overall Configuration

The overall configuration of the recording playback system in embodiment 2 of the present invention is the same as embodiment 1. The recording playback system is composed of a key distribution server 100A, recording device 200A, recording medium device 300A, playback device 400A, and key issuing authority 900A.

The following describes the case when the recording medium device 300A is a memory card.

2.2 Detailed Configuration of Key Issuing Authority 900A

The configuration of the key issuing authority 900A is exactly the same as the key issuing authority 900 in embodiment 1. Therefore, a description thereof is omitted.

2.3 Detailed Configuration of Key Distribution Server 100A

As shown in Fig. 19, the key distribution server 100A is composed of a content storage unit 101A, content division unit 102A, content distinguishing information generation unit 103A, key distribution server private key storage unit 104A, key distribution server public key certificate storage unit 105A, shared title key generation unit 106A, shared content storage unit 107A, individualized title key generation unit 151A, individualized content storage unit 109A, encryption unit 110A, root public key storage unit 112A, authentication unit 113A, decryption unit 114A, encryption unit 115A, encryption unit 152A, authentication unit 153A, encryption unit 154A, and encryption unit 155A.

The content storage unit 101A, content division unit 102A, content distinguishing information generation unit 103A, key distribution server private key storage unit 104A, key distribution server public key certificate storage unit 105A, shared title key generation unit 106A, shared content storage unit 107A, individualized content storage unit 109A, encryption unit 110A, root public key storage unit 112A, authentication unit 113A, decryption unit 114A, and encryption unit 115A in the key distribution server 100A are exactly the same as the content storage unit 101, content division unit 102, content distinguishing information generation unit 103, key distribution server private key storage unit 104, key distribution server public key certificate storage unit 105, shared title key generation unit 106, shared content storage unit 107, individualized content storage unit 109, encryption unit 110, root public key storage unit 112, authentication unit 113, decryption unit 114, and encryption unit 115 in the key distribution server 100 in embodiment 1, and therefore a detailed description thereof is omitted.

The individualized title key generation unit 151A generates an individualized title key. The individualized title key is, for example, a 128-bit random numeric value and differs for each distribution. Note that while the individualized title key in this embodiment is, for example, a 128-bit numerical value, the individualized title key is not limited to this configuration. Refer to modification (1).

The encryption unit 152A encrypts the individualized title key generated by the individualized title key generation unit 151A using the converted media unique key generated by the decryption unit 114A to generate an encrypted individualized title key, which the encryption unit 152A transmits to the memory card.

The authentication unit 153A performs mutual authentication with the authentication unit 251A in the recording device 200A using the root public key stored by the root public key storage unit 112A, the key distribution server private key stored by the key distribution server private key storage unit 104A, and the key distribution server public key certificate stored by the key distribution server public key certificate storage unit 105A, and generates a session key that differs for each mutual authentication. Details on the structure and procedures of the mutual authentication are provided below.

The encryption unit 154A encrypts the individualized title key generated by the individualized title key generation unit 151A using the session key generated by the authentication unit 153A to generate an encrypted individualized title key, which the encryption unit 154A transmits to the recording device 200A.

The encryption unit 155A encrypts the individualized content stored by the individualized content storage unit 109A using the session key generated by the authentication unit 153A to generate encrypted individualized content, which the encryption unit 155A transmits to the recording device 200A.

2.4 Detailed Configuration of Recording Device 200A

As shown in Fig. 20, the recording device 200A is composed of a recording device private key storage unit 201A, recording device public key certificate storage unit 202A, root public key storage unit 204A, authentication unit 251A, decryption unit 252A, decryption unit 253A, and encryption unit 254A.

The recording device private key storage unit 201 A, recording device public key certificate storage unit 202A, and root public key storage unit 204A in the recording device 200A are exactly the same as the recording device private key storage unit 201, recording device public key certificate storage unit 202, and root public key storage unit 204 in the recording device 200 in embodiment 1, and therefore a description thereof is omitted.

The authentication unit 251A performs mutual authentication with the authentication unit 153A in the key distribution server 100 using the root public key stored by the root public key storage unit 204A, the recording device private key stored by the recording device private key storage unit 201A, and the recording device public key certificate stored by the recording device public key certificate storage unit 202A, and generates a session key that differs for each mutual authentication. Details on the structure and procedures of the mutual authentication are provided below.

The decryption unit 252A decrypts an encrypted individualized title key received from the key distribution server using the session key generated by the authentication unit 251A to generate an individualized title key.

The decryption unit 253A decrypts encrypted individualized content received from the key distribution server using the session key generated by the authentication unit 251 A to generate individualized content.

The encryption unit 254A encrypts the individualized content generated by the decryption unit 253A using the individualized title key generated by the decryption unit 252A to generate encrypted individualized content, which the encryption unit 254A transmits to the memory card.

2.5 Detailed Configuration of Memory Card 300A

As shown in Fig. 21, the memory card 300A is composed of a controller 330A and a memory unit 340A. The controller both performs processing such as reading and writing of data in the memory unit 340A in the memory card 300A and also, in response to a request from the key distribution server 100A, the recording device 200A, or the playback device 400A, performs mutual authentication, processing for transmission or reception of data, etc. The controller 330A is composed of a semiconductor device such as an LSI, and the memory unit 340A is composed of, for example, flash memory.

Furthermore, the controller 330A is composed of a root public key storage unit 301A, authentication unit 302A, encryption unit 303A, controller ID storage unit 307A, media ID generation unit 308A, one-way conversion unit 309A, controller unique number storage unit 311A, controller key storage unit 312A, controller unique key generation unit 314A, decryption unit 315A, and decryption unit 316A. The memory unit 340A is composed of an encrypted recording medium device private key storage unit 318A, recording medium device public key certificate storage unit 319A, encrypted media unique key storage unit 320A, encrypted shared title key storage unit 321 A, encrypted shared content storage unit 322A, encrypted individualized title key storage unit 323A, and encrypted individualized content storage unit 324A.

The root public key storage unit 301A, authentication unit 302A, encryption unit 303A, controller ID storage unit 307A, media ID generation unit 308A, one-way conversion unit 309A, controller unique number storage unit 311A, controller key storage unit 312A, controller unique key generation unit 314A, decryption unit 315A, and decryption unit 316A in the controller 330A are exactly the same as the root public key storage unit 301, authentication unit 302, encryption unit 303, controller ID storage unit 307, media ID generation unit 308, one-way conversion unit 309, controller unique number storage unit 311, controller key storage unit 312, controller unique key generation unit 314, decryption unit 315, and decryption unit 316 in the controller in embodiment 1, and therefore a description thereof is omitted. Also, the encrypted recording medium device private key storage unit 318A, recording medium device public key certificate storage unit 319A, encrypted media unique key storage unit 320A, encrypted shared title key storage unit 321A, encrypted shared content storage unit 322A, encrypted individualized title key storage unit 323A, and encrypted individualized content storage unit 324A in the memory unit 340A are exactly the same as the encrypted recording medium device private key storage unit 318, recording medium device public key certificate storage unit 319, encrypted media unique key storage unit 320, encrypted shared title key storage unit 321, encrypted shared content storage unit 322, encrypted individualized title key storage unit 323, and encrypted individualized content storage unit 324 in the memory unit 340 in embodiment 1, and therefore a description thereof is omitted.

2.6 Detailed Configuration of Playback Device 400A

The configuration of the playback device 400A is exactly the same as that of the playback device 400 in embodiment 1, and therefore a description thereof is omitted.

2.7 Detailed Configuration of Authentication Units

Fig. 22 shows an example of the detailed configuration of the authentication unit 153A in the key distribution server and the authentication unit 251A in the recording device.

As shown in Fig. 22, the authentication unit in the key distribution server is furthermore composed of a random number generation unit 121A, signature verification unit 122A, signature verification unit 123A, signature generation unit 124A, and session key generation unit 125A. The authentication unit in the recording device is furthermore composed of a signature generation unit 221 A, signature verification unit 222A, signature verification unit 223A, session key generation unit 224A, and random number generation unit 225A.

The random number generation unit 121A, signature verification unit 122A, signature verification unit 123A, signature generation unit 124A, and session key generation unit 125A in the authentication unit in the key distribution server are the same as the random number generation unit 121, signature verification unit 122, signature verification unit 123, signature generation unit 124, and session key generation unit 125 in embodiment 1, and therefore a description thereof is omitted. Also, the authentication unit in the recording device has the same detailed configuration as the authentication unit 113A in the key distribution server, and therefore a description thereof is omitted.

2.8 Detailed Flow of Operations during Distribution and Recording of Content

Figs. 23 and 24 show an example of the detailed flow of operations, when content is distributed from the key distribution server 100A, to record the content on the memory card 300A via the recording device 200A.
Note that steps S101A through S115A below are exactly the same as steps S101 through S115 in embodiment 1.
First, the controller unique key generation unit 314A in the memory card 300A generates a controller unique key from the controller unique number stored by the controller unique number storage unit 311 A and the controller key stored by the controller key storage unit 312A (S101A).
The controller unique key is generated, for example, via the following function.
[0279]

$$\text{controller unique key} = \text{AES_E}(\text{controller ID}, \text{controller key}) \ (+) \ \text{controller key}$$

AES_E(k, m) refers to the AES cryptosystem that encrypts an input m with a key k. A (+) B refers to an exclusive OR operation on A and B.
Next, the decryption unit 315A decrypts the encrypted recording medium device private key stored by the encrypted recording medium device private key storage unit 318A using the controller unique key generated in step S101A to generate a recording medium device private key (S102A).
Next, the authentication unit 302A in the memory card 300A performs mutual authentication with the authentication unit 113A in the key distribution server 100A (S103A).
When mutual authentication fails, processing terminates. Details on the mutual authentication step S103A are provided below.
Next, when mutual authentication in step S103A succeeds, the decryption unit 316A in the memory card 300A decrypts the encrypted media unique key stored by the encrypted media unique key storage unit 320A using the controller unique key generated in step S101A to generate a media unique key (S104A).
Next, the media ID generation unit 308A concatenates the controller ID stored by the controller ID storage unit 307A and the partial media ID included in the recording medium device public key certificate stored by the recording medium device public key certificate storage unit 319A to generate a media ID (S105A).
An example of the data structure of the media ID is the same as the media ID in embodiment 1 shown in Fig. 16.
Next, the one-way conversion unit 309A performs one-way conversion using as input the media ID generated in step S105A and the media unique key generated in step S104A to generate a converted media unique key (S106A). The following function may be used as an example of one-way conversion.
[0286]

$$\text{converted media unique key} = \text{AES_E}(\text{media ID}, \text{media unique key}) \ (+) \ \text{media unique key}$$

AES_E(k, m) refers to encrypting an input m with a key k using the AES cryptosystem.
x (+) y refers to an exclusive OR operation on x and y.
Next, the encryption unit 303A encrypts the converted media unique key generated in step S106A using the session key generated as a result of mutual authentication in step S103A to generate an encrypted converted media unique key, which the encryption unit 303A then transmits to the key distribution server (S107A).
Upon receiving the encrypted converted media unique key from the memory card in step S107A, the decryption unit 114A in the key distribution server 100A decrypts the received encrypted converted media unique key using the session key generated as a result of mutual authentication in step S103A to generate a converted media unique key (S108A).
Next, the shared title key generation unit 106A generates a shared title key (S109A).
The shared title key is, for example, a 128-bit random numerical value and is unique for each content.
Next, the encryption unit 115A decrypts the shared title key generated in step S109A using the converted media unique key generated in step S108A to generate an encrypted shared title key, which the encryption unit 115A then transmits to the memory card (S110A).

The memory card 300A stores the encrypted shared title key received in step S110A in the encrypted shared title key storage unit 32 1 A (S111A).

Next, the content division unit 102A in the key distribution server 100A acquires the content for distribution from among the contents stored in the content storage unit 101A and divides the acquired content into shared content and individualized content (S112A).

Next, the content distinguishing information generation unit 103A generates content distinguishing information and adds the content distinguishing information to the shared content and the individualized content, storing the shared content in the shared content storage unit 107A and the individualized content in the individualized content storage unit 109A (S113A).

Note that step S112A and step S113A do not necessarily have to be performed at this point; the key distribution server may perform step S112A and step S113A beforehand for all of the contents.

Next, the encryption unit 110A encrypts the shared content generated in step S112A using the shared title key generated in step S109A to generate encrypted shared content, which the encryption unit 110A transmits to the memory card (S114A).

The memory card 300A stores the encrypted shared content received in step S114A in the encrypted shared content storage unit 322A (S115A).

Next, the individualized title key generation unit 151A in the key distribution server 100A generates an individualized title key (S116A). The individualized title key is, for example, a 128-bit random numerical value.

Next, the encryption unit 152A encrypts the individualized title key generated in step S116A using the converted media unique key generated in step S108A to generate an encrypted individualized title key, which the encryption unit 152A then transmits to the memory card 300A (S117A).

Next, the memory card stores the encrypted individualized title key received in step S117A in the encrypted individualized title key storage unit 323A (S118A).

Next, the authentication unit 153A in the key distribution server 100A performs mutual authentication with the authentication unit 251A in the recording device 200A (S119A).

When mutual authentication fails, processing terminates. Details on the mutual authentication step S 119A are provided below.

Next, the encryption unit 154A in the key distribution server 100A encrypts the individualized title key generated in step S116A using the session key generated as a result of authentication in step S119A to generate an encrypted individualized title key, which the encryption unit 154A transmits to the recording device 200A (S120A).

Next, the decryption unit 252A in the recording device 200A decrypts the encrypted individualized title key received in step S120A using the session key generated as a result of authentication in step S119A to generate an individualized title key (S121A).

Next, the encryption unit 155A in the key distribution server 100A encrypts the individualized content generated in step S112A using the session key generated as a result of authentication in step S119A to generate encrypted individualized content, which the encryption unit 155A transmits to the recording device 200A (S122A).

Next, the decryption unit 253A in the recording device 200A decrypts the encrypted individualized content received in step S122A using the session key generated as a result of authentication in step S119A to generate individualized content (S123A).

Next, the encryption unit 254A encrypts the individualized content generated in step S123A using the individualized title key generated in step S121A to generate encrypted individualized content, which the encryption unit 254A then transmits to the memory card (S 124A).

Next, the memory card 300A stores the encrypted individualized content received in step S124A in the encrypted individualized content storage unit 324A (S125A).

2.9 Detailed Flow of Operations for Authentication between Key Distribution Server and Memory Card

The detailed flow of operations for authentication between the key distribution server 100A and the memory card 300A are exactly the same as the detailed flow of operations for authentication between the key distribution server 100 and the memory card 300 in embodiment 1, and therefore a description thereof is omitted.

2.10 Detailed Flow of Operations for Authentication between Key Distribution Server and Recording Device

Fig. 25 shows a detailed flow of operations for authentication between the key distribution server and the recording device.
The recording device 200A transmits the recording device public key certificate to the key distribution server 100A (S601A).

Next, the signature verification unit 122A in the key distribution server 100A verifies the signature included in the received recording device public key certificate using the recording device public key certificate received in step S601A and the root public key stored by the root public key storage unit (S602A). If verification fails, authentication processing terminates. If verification is successful, the recording device public key included in the recording device public key certificate is determined to be authentic.

Next, the key distribution server 100A transmits the key distribution server public key certificate to the recording device 200A (S603A).

Next, the signature verification unit 222A in the recording device 200A verifies the signature included in the received key distribution server public key certificate using the key distribution server public key certificate received in step S602A and the root public key stored by the root public key storage unit (S604A). If verification fails, authentication processing terminates. If verification is successful, the key distribution server public key included in the key distribution server public key certificate is determined to be authentic.

Next, if the verification in step S602A succeeds, the random number generation unit 121A in the key distribution server generates a random number and transmits the random number to the recording device (S605A). This random number is, for example, a 128-bit random numerical value.

Next, the signature generation unit 221A in the recording device uses the recording device private key to generate a signature for the random number received from the key distribution server, transmitting the signature to the key distribution server (S606A).

Next, the key distribution server verifies the signature received in S604A using the random number generated in step S605A and the recording device public key determined to be authentic in step S602A (S607A). If verification fails, authentication processing terminates. If verification is successful, the recording device is authenticated as an authentic recording device.

Next, when verification is successful in step S604A, the random number generation unit 225A in the recording device 200A generates a random number, transmitting the random number to the key distribution server (S608A). This random number is, for example, a 128-bit random numerical value.

Next, the signature generation unit 124A in the key distribution server generates a signature for the random number received from the recording device using the key distribution server private key, then transmitting the signature to the recording device (S609A).

Next, the recording device verifies the signature received in S609A using the random number generated in step S608A and the key distribution server public key determined to be authentic in step S604A (S610A). If verification fails, authentication processing terminates. If verification is successful, the key distribution server is authenticated as an authentic key distribution server.

Next, the session key generation unit 125A in the key distribution server 100A generates a session key from the random number generated in step S605A and the random number received in step S608A (S611A).

Next, the session key generation unit 224A in the recording device 200A generates a session key from the random number generated in step S608A and the random number received in step S605A (S612A).

2.11 Data Structure of Recording Medium Device Public Key Certificate, Key Distribution Server Public Key Certificate, and Recording Device Public Key Certificate

The data structure of the recording medium device public key certificate, key distribution server public key certificate, and recording device public key certificate in embodiment 2 is the same as the data structure of the recording medium device public key certificate, key distribution server public key certificate, and recording device public key certificate in embodiment 1, and therefore a description thereof is omitted.

2.12 Detailed Flow of Operations during Content Playback

The detailed flow of operations when the playback device 400A plays back content recorded on the memory card 300A in embodiment 2 is the same as the detailed flow of operations when the playback device 400 plays back content recorded on the memory card 300 in embodiment 1, and therefore a description thereof is omitted.

2.13 Detailed Flow of Operations for Authentication between Playback Device and Memory Card

The detailed flow of operations for authentication between the playback device 400A and memory card 300A in embodiment 2 is the same as the detailed flow of operations for authentication between the playback device 400 and memory card 300 in embodiment 1, and therefore a description thereof is omitted.

2.14 Data Structure of Playback Device Public Key Certificate

The data structure of the playback device public key certificate in embodiment 2 is the same as the data structure of the playback device public key certificate in embodiment 1, and therefore a description thereof is omitted.

2.15 Modification

(1) Individualized Title Key

In embodiment 2, the individualized title key generation unit 151A in the key distribution server 100A generates a 128-bit random numerical value as the individualized title key, but the method of generating the individualized title key is not limited to this structure.

The key distribution server may generate an individualized title key via the following equation, using the recording device ID included in the recording device public key certificate.

[0329]

$$\text{individualized title key} = \text{AES_E}(S, \text{recording device ID} \,\|\, \text{random numerical value})$$

AES_E(k, m) refers to using the AES cryptosystem to encrypt an input m with a key k. S is a secret key for generating an individualized title key. "Recording device ID || random numerical value" refers to concatenating the recording device ID and the random numerical value in this order. The recording device ID is, for example, a 32-bit numerical value, and the random numerical value is, for example, 96 bits. The above equation yields a 128-bit random individualized title key.

Suppose that a malicious user fraudulently acquires the playback device private key or other information from an authorized playback device, decrypts an encrypted shared title key and encrypted individualized title key received from a memory card to obtain a shared title key and individualized title key by creating the appearance of an authorized playback device, and discloses these title keys on a Web server, while also illicitly selling a content decryption tool that decrypts encrypted contents by acquiring a shared title key and individualized title key that have been disclosed. With the above-described structure, the key issuing authority can acquire the content decryption tool, identify an individualized title key disclosed on the Web server and, using the following function, ascertain the recording device ID from the identified individualized title key.

[0331]

$$\text{recording device ID} = [\text{AES_D}(S, \text{individualized title key})] \text{ most significant 32 bits}$$

AES_D(k, c) refers to using an AES decryption function to decrypt a ciphertext c using a key k. "[x] most significant 32 bits" refers to extracting the most significant 32 bits from x.

With this structure, the key issuing authority can identify a recording device ID from an individualized title key disclosed on a Web server, thus making it possible to invalidate a recording device public key certificate that includes the identified recording device ID.

3. Conclusion

With the structures according to embodiments 1 and 2, content is divided into shared content and individualized content, and the individualized content is stored in the memory card after being encrypted with an individualized title key that differs for each recording.

Suppose that a malicious user fraudulently acquires the playback device private key or other information from an authorized playback device, decrypts an encrypted shared title key and encrypted individualized title key received from a memory card to obtain a shared title key and individualized title key by creating the appearance of an authorized playback device, and discloses these title keys on a Web server, while also illicitly selling a content decryption tool that decrypts encrypted content by acquiring a shared title key and individualized title key that have been disclosed. With the structures according to embodiments 1 and 2, the individualized title key differs for each recording or distribution, making it difficult to have an unspecified number of users use the content decryption tool. This is because it is necessary to acquire all of the individualized title keys that differ for each recording and disclose the individualized title keys on a Web server in order to allow an unspecified number of users to use the content decryption tool to illicitly decrypt multiple encrypted contents that correspond to the same content (i.e. the same content encrypted with a number of different individualized title keys). Accordingly, the malicious user would need to acquire all of the individual title keys requested by other users, which would be extremely expensive.

An attack can also be imagined whereby a malicious user fraudulently acquires the recording device private key from an authorized recording device, creates a content recording tool with the fraudulently acquired recording device private key stored therein, and illicitly sells the content recording tool.

This illicit content recording tool creates the appearance of an authorized recording device and records encrypted provisional individualized content received from the key distribution server on a memory card without further encryption with an individualized title key that differs for each memory card. In this case, however, the recording device private key that has been divulged and is stored in the illicitly sold content recording tool can be identified from the content recording tool, and therefore it is possible to invalidate the identified recording device private key and the corresponding public key certificate.

In order to invalidate the recording device private key and the corresponding public key certificate, a public key certificate revocation list (CRL) can be used.

For example, in embodiment 1, during content distribution and recording, the memory card and the illicit content recording tool perform the authentication shown in Fig. 12. During this authentication, in step S304, when the memory card verifies the recording device public key certificate, it determines that the recording device public key certificate received from the illicit content recording tool is invalid if the recording device ID included in the recording device public key certificate is included in the latest public key certificate revocation list (CRL); processing is then suspended.

Also, for example, in embodiment 2, during content distribution and recording, the key distribution server and the illicit content recording tool perform the authentication shown in Fig. 25. During this authentication, in step S602A, when the key distribution server verifies the recording device public key certificate, it determines that the recording device public key certificate received from the illicit content recording tool is invalid if the recording device ID included in the recording device public key certificate is included in the latest public key certificate revocation list (CRL); processing is then suspended.

The public key certificate revocation list (CRL) is information for identifying devices to invalidate and is composed specifically of a list of each device ID and each device public key, as well as signatures generated by the key issuing authority that correspond to the list. The signatures are generated, for example, via the following equation.

signatures generated by key issuing authority = RSA_SIGN(root private key, list of each device ID and each device public key)

A structure can be adopted to always maintain the latest public key certificate revocation list (CRL) on an authorized recording device, memory card, and playback device by, for example, having the key distribution server distribute the latest public key certificate revocation list (CRL) to an authorized recording device, which records the CRL on an authorized memory card, which then transfers the CRL to an authorized playback device.

4. Modifications

(1) In embodiments 1 and 2, the shared title key differs for each content, but the shared content key may be changed, for example, by the key distribution server in accordance with the number of distributions. In other words, the shared content key may be changed after every n distributions. The ratio of n (for example, 1000) to the total number of distributions (for example, one million) is set low. Also, the shared content key may be changed after every n hours. Suppose that a malicious user fraudulently acquires the playback device private key or other information from an authorized playback device, decrypts an encrypted shared title key and encrypted individualized title key received from a memory card to obtain a shared title key and individualized title key by creating the appearance of an authorized playback device, and discloses these title keys on a Web server, while also illicitly selling a content decryption tool that decrypts encrypted content by acquiring a shared title key and individualized title key that have been disclosed. The shared title key differs after a predetermined number of distributions, making it difficult to have an unspecified number of users use the content decryption tool. This is because it is necessary to acquire all of the individualized title keys that differ after a predetermined number of distributions and disclose the individualized title keys on a Web server in order to allow an unspecified number of users to use the content decryption tool to illicitly decrypt encrypted content for the same title. Accordingly, the malicious user would need to acquire all of the individual title keys requested by other users, which would be extremely expensive. Also, by updating the shared title key at night, for example, the burden on the key distribution server can be lessened. The burden on the key distribution server can also be lessened by creating two key distribution servers.

(2) In embodiments 1 and 2, the individualized title key differs for each recording or distribution, but it may also differ after a predetermined number or recordings or distributions. Furthermore, modifications (1) and (2) may be combined.

(3) In embodiments 1 and 2, RSA encryption is used for signature generation when generating the various public key certificates and for signature verification, but the present invention is not limited in this way. Any digital signature scheme may be used. Also, AES encryption is used in embodiments 1 and 2 for encryption and decryption of various keys and contents, but the present invention is not limited in this way. Any cryptosystem may be used.

(4) Each of the above-described devices (including the key issuing authority and key distribution server) is, specifically, a computer system composed of a microprocessor, ROM, RAM, hard disk unit, display unit, keyboard, mouse, etc. Computer programs are stored on the RAM or the hard disk unit. By operating in accordance with the computer programs, the microprocessor achieves the functions of each device. In order to achieve predetermined functions, the computer programs are composed of a combination of multiple command codes that indicate instructions for the computer. Note that each of the devices is not limited to a computer system that includes all of the following components: microprocessor, ROM, RAM, hard disk unit, display unit, keyboard, mouse, etc.; each of the devices may also be a computer system composed of only some of these components.

(5) Part or all of the components constituting each of the above-described devices (including the key issuing authority and key distribution server) may be assembled as one system Large Scale Integration (LSI). A system LSI is an ultra-multifunctional LSI produced by integrating multiple components on one chip and, more specifically, is a computer system including a microprocessor, ROM, RAM, and the like. Computer programs are stored in the RAM. The microprocessor operates according to the computer programs, and thereby the system LSI accomplishes its functions.

Individual components constituting each of the above-described devices may respectively be made into discrete chips, or part or all of the components may be made into one chip.

Although referred to here as a system LSI, depending on the degree of integration, the terms IC, LSI, super LSI, or ultra LSI are used. In addition, the method for assembling integrated circuits is not limited to LSI, and a dedicated communication circuit or a general-purpose processor may be used. A Field Programmable Gate Array (FPGA), which is programmable after the LSI is manufactured, or a reconfigurable processor, which allows reconfiguration of the connection and setting of circuit cells inside the LSI, may be used.

Furthermore, if technology for forming integrated circuits that replaces LSIs emerges, owing to advances in semiconductor technology or to another derivative technology, the integration of functional blocks may naturally be accomplished using such technology. The application of biotechnology or the like is possible.

(6) Part or all of the components constituting each of the above devices (including the key issuing authority and key distribution server) may be assembled as an IC card detachable from each device, or as a single module. The IC card/module is a computer system that includes a microprocessor, ROM, RAM, etc. The IC card/module may include therein the above-mentioned ultra-multifunctional LSI. The microprocessor operates according to computer programs, and the IC card/module thereby accomplishes its functions. The IC card/module may be tamper resistant.

(7) The present invention may be a method of accomplishing the above-described system. The present invention may be computer programs that achieve the method by a computer, or may be a digital signal comprising the computer programs.

The present invention may also be achieved by a computer-readable recording medium, such as a flexible disk, hard disk, CD-ROM, MO, DVD, DVD-ROM, DVD-RAM, BD (Blu-ray Disc), or semiconductor memory, on which the above-mentioned computer program or digital signal is recorded. The present invention may also be the digital signal recorded on such a recording medium.

The present invention may also be the computer programs or digital signal to be transmitted via networks, of which telecommunications networks, wire/wireless communications networks, and the Internet are representative, or via data broadcasting.

The present invention may also be a computer system comprising a microprocessor and memory, the memory storing the computer programs, and the microprocessor operating in accordance with the computer programs.

Also, another independent computer system may implement the computer programs or digital signal after the computer programs or digital signal are transferred via being recorded on the recording medium, via one of the above-mentioned networks, etc.

(8) The above embodiments and modifications may be combined with one another.

5. Supplementary Explanations

Furthermore, the present invention may be the following.

(1) A recording system composed of a key distribution server, a recording device, and a recording medium device, the key distribution server comprising: an authentication unit operable to authenticate the recording medium device; a media unique key reception unit operable to securely receive a media unique key from the recording medium device when the authentication by the authentication unit is successful; a content division unit operable to divide a content into a shared content and an individualized content; a title key generation unit operable to generate a first title key and a second title key that differ for each content; an encryption unit operable to encrypt the first title key and the second title key using the media unique key to obtain an encrypted first title key and an encrypted second title key; an encryption unit operable to encrypt the shared content using the first title key to obtain an encrypted shared content; an encryption unit operable to encrypt the individualized content using the second title key to obtain an encrypted individualized content; a transmission unit operable to transmit the encrypted first title key, the encrypted shared content, and the encrypted second title key to the recording medium device; and a transmission unit operable to transmit the encrypted individualized content to the recording device, the recording device comprising: a reception unit operable to receive the encrypted individualized content from the key distribution server; an authentication unit operable to authenticate the recording medium device; a reception unit operable to securely receive the second title key and a third title key from the recording medium device when the authentication by the authentication unit is successful; a decryption unit operable to decrypt the encrypted individualized content using the second title key to obtain a decrypted individualized content; an encryption unit operable to encrypt the decrypted individualized content using the third title key to obtain an encrypted individualized content; and a transmission unit operable to transmit the encrypted individualized content encrypted with the third title key to the recording medium device, the recording medium device comprising: a storage unit storing the media unique key; an authentication unit operable to authenticate the key distribution server; a transmission unit operable to securely transmit the media unique key to the key distribution server when the authentication by the authentication unit is successful; a reception unit operable to receive the encrypted first title key, the encrypted shared content, and the encrypted second title key from the key distribution server; a decryption unit operable to decrypt the encrypted second title key using the media unique key; a title key generation unit operable to generate a third title key that differs for each recording; an encryption unit operable to encrypt the third title key using the media unique key to obtain an encrypted third title key; an authentication unit operable to authenticate the recording device; a transmission unit operable to securely transmit the second title key and the third title key to the recording device when the authentication is successful; a reception unit operable to receive the encrypted first title key and the encrypted shared content from the key distribution server and to receive the encrypted individualized content from the recording device; and a storage unit storing the encrypted first title key, the encrypted shared content, and the encrypted individualized content that are received, as well as the encrypted third title key.

With this structure, content is divided into shared content and individualized content, and the individualized content is stored in the memory card after being encrypted in the recording device with an individualized title key that differs for each recording or distribution.

Suppose that a malicious user fraudulently acquires the playback device private key or other information from an authorized playback device, decrypts an encrypted shared title key and encrypted individualized title key received from a memory card to obtain a shared title key and individualized title key by creating the appearance of an authorized playback device, and discloses these title keys on a Web server, while also illicitly selling a content decryption tool that decrypts encrypted content by acquiring a shared title key and individualized title key that have been disclosed. With the structures of the recording system in the present invention, the individualized title key differs for each recording or distribution, making it difficult to have an unspecified number of users use the content decryption tool. This is because it is necessary to acquire all of the individualized title keys that differ for each recording and disclose the individualized title keys on a Web server in order to allow an unspecified number of users to use the content decryption tool to illicitly decrypt multiple encrypted contents that correspond to the same content (i.e. the same content encrypted with a number of different individualized title keys). Accordingly, the malicious user would need to acquire all of the individual title keys requested by other users, which would be extremely expensive.

An attack can also be imagined whereby a malicious user fraudulently acquires the recording device private key from an authorized recording device, creates a content recording tool with the fraudulently acquired recording device private key stored therein, and illicitly sells the content recording tool.

This illicit content recording tool creates the appearance of an authorized recording device and records encrypted provisional individualized content received from the key distribution server on a memory card without further encryption with an individualized title key that differs for each memory card. In this case, however, the recording device private key that has been divulged and is stored in the illicitly sold content recording tool can be identified from the content recording tool, and therefore it is possible to invalidate the identified recording device private key and the corresponding public key certificate.

(2) A recording system composed of a key distribution server, a recording device, and a recording medium device, the key distribution server comprising: an authentication unit operable to authenticate the recording medium device; a media unique key reception unit operable to securely receive a media unique key from the recording medium device when the authentication by the authentication unit is successful; a content division unit operable to divide a content into a shared content and an individualized content; a title key generation unit operable to generate a first title key that differs for each content and a third title key that differs for each distribution; an encryption unit operable to encrypt the first title key and the third title key using the media unique key to obtain an encrypted first title key and an encrypted third title key; an encryption unit operable to encrypt the shared content using the first title key to obtain an encrypted shared content; an authentication unit operable to authenticate the recording device; a transmission unit operable to securely transmit the third title key and the individualized content to the recording device when the authentication by the authentication unit is successful; and a transmission unit operable to transmit the encrypted first title key, the encrypted shared content, and the encrypted third title key to the recording medium device, the recording device comprising: an authentication unit operable to authenticate the key distribution server; a reception unit operable to securely receive the third title key and the individualized content from the key distribution server when the authentication by the authentication unit is successful; an encryption unit operable to encrypt the individualized content using the third title key to obtain an encrypted individualized content; and a transmission unit operable to transmit the encrypted individualized content to the recording medium device, the recording medium device comprising: a storage unit storing the media unique key; an authentication unit operable to authenticate the key distribution server; a transmission unit operable to securely transmit the media unique key to the key distribution server when the authentication is successful; a reception unit operable to receive the encrypted first title key, the encrypted shared content, and the encrypted third title key from the key distribution server and to receive the encrypted individualized content from the recording device; and a storage unit storing the encrypted first title key, the encrypted shared content, the encrypted third title key, and the encrypted individualized content that are received.
(3) A playback system composed of a recording medium device and a playback device, the recording medium device comprising: a storage unit storing a media unique key; an authentication unit operable to authenticate the playback device; a transmission unit operable to securely transmit the media unique key to the playback device when the authentication is successful; and a transmission unit operable to transmit an encrypted first title key, an encrypted shared content, an encrypted third title key, and an encrypted individualized content to the playback device, the playback device comprising: an authentication unit operable to authenticate the recording medium device; a reception unit operable to securely receive the media unique key from the recording medium device when the authentication is successful; a reception unit operable to receive the encrypted first title key, the encrypted shared content, the encrypted third title key, and the encrypted individualized content from the recording medium device; a decryption unit operable to decrypt the encrypted first title key and the encrypted third title key using the media unique key; a decryption unit operable to decrypt the encrypted shared content using the decrypted first title key to obtain a decrypted shared content; a decryption unit operable to decrypt the encrypted individualized content using the decrypted third title key to obtain a decrypted individualized content; a content combination unit operable to combine the decrypted shared content and the decrypted individualized content to obtain a combined content; and a playback unit operable to play back the combined content.
(4) A key distribution server used in a recording system composed of the key distribution server, a recording device, and a recording medium device, the key distribution server comprising: an authentication unit operable to authenticate the recording medium device; a media unique key reception unit operable to securely receive a media unique key from the recording medium device when the authentication by the authentication unit is successful; a content division unit operable to divide a content into a shared content and an individualized content; a title key generation unit operable to generate a first title key and a second title key that differ for each content; an encryption unit operable to encrypt the first title key and the second title key using the media unique key to obtain an encrypted first title key and an encrypted second title key; an encryption unit operable to encrypt the shared content using the first title key to obtain an encrypted shared content; an encryption unit operable to encrypt the individualized content using the second title key to obtain an encrypted individualized content; a transmission unit operable to transmit the encrypted first title key, the encrypted shared content, and the encrypted second title key to the recording medium device; and a transmission unit operable to transmit the encrypted individualized content to the recording device.
(5) A recording device used in a recording system composed of a key distribution server, the recording device, and a recording medium device, the recording device comprising: a reception unit operable to receive the encrypted individualized content from the key distribution server; an authentication unit operable to authenticate the recording medium device; a reception unit operable to securely receive the second title key and a third title key from the recording medium device when the authentication by the authentication unit is successful; a decryption unit operable to decrypt the encrypted individualized content using the second title key to obtain a decrypted individualized content; an encryption unit operable to encrypt the decrypted individualized content using the third title key to obtain an encrypted individualized content; and a transmission unit operable to transmit the encrypted individualized content encrypted with the third title key to the recording medium device.

(6) A recording medium device used in a recording system composed of a key distribution server, a recording device, and the recording medium device, the recording medium device comprising: a storage unit storing the media unique key; an authentication unit operable to authenticate the key distribution server; a transmission unit operable to securely transmit the media unique key to the key distribution server when the authentication by the authentication unit is successful; a reception unit operable to receive the encrypted first title key, the encrypted shared content, and the encrypted second title key from the key distribution server; a decryption unit operable to decrypt the encrypted second title key using the media unique key; a title key generation unit operable to generate a third title key that differs for each recording; an encryption unit operable to encrypt the third title key using the media unique key to obtain an encrypted third title key; an authentication unit operable to authenticate the recording device; a transmission unit operable to securely transmit the second title key and the third title key to the recording device when the authentication is successful; a reception unit operable to receive the encrypted first title key and the encrypted shared content from the key distribution server and to receive the encrypted individualized content from the recording device; and a storage unit storing the encrypted first title key, the encrypted shared content, and the encrypted individualized content that are received, as well as the encrypted third title key.

(7) A key distribution server used in a recording system composed of the key distribution server, a recording device, and a recording medium device, the key distribution server comprising: an authentication unit operable to authenticate the recording medium device; a media unique key reception unit operable to securely receive a media unique key from the recording medium device when the authentication by the authentication unit is successful; a content division unit operable to divide a content into a shared content and an individualized content; a title key generation unit operable to generate a first title key that differs for each content and a third title key that differs for each distribution; an encryption unit operable to encrypt the first title key and the third title key using the media unique key to obtain an encrypted first title key and an encrypted third title key; an encryption unit operable to encrypt the shared content using the first title key to obtain an encrypted shared content; an authentication unit operable to authenticate the recording device; a transmission unit operable to securely transmit the third title key and the individualized content to the recording device when the authentication by the authentication unit is successful; and a transmission unit operable to transmit the encrypted first title key, the encrypted shared content, and the encrypted third title key to the recording medium device.

(8) A recording device used in a recording system composed of a key distribution server, the recording device, and a recording medium device, the recording device comprising: an authentication unit operable to authenticate the key distribution server; a reception unit operable to securely receive the third title key and the individualized content from the key distribution server when the authentication by the authentication unit is successful; an encryption unit operable to encrypt the individualized content using the third title key to obtain an encrypted individualized content; and a transmission unit operable to transmit the encrypted individualized content to the recording medium device.

(9) A recording medium device used in a recording system composed of a key distribution server, a recording device, and the recording medium device, the recording medium device comprising: a storage unit storing the media unique key; an authentication unit operable to authenticate the key distribution server; a transmission unit operable to securely transmit the media unique key to the key distribution server when the authentication is successful; a reception unit operable to receive the encrypted first title key, the encrypted shared content, and the encrypted third title key from the key distribution server and to receive the encrypted individualized content from the recording device; and a storage unit storing the encrypted first title key, the encrypted shared content, the encrypted third title key, and the encrypted individualized content that are received.

(10) A recording medium device used in a playback system composed of the recording medium device and a playback device, the recording medium device comprising: a storage unit storing a media unique key; an authentication unit operable to authenticate the playback device; a transmission unit operable to securely transmit the media unique key to the playback device when the authentication is successful; and a transmission unit operable to transmit an encrypted first title key, an encrypted shared content, an encrypted third title key, and an encrypted individualized content to the playback device.

(11) A playback device used in a playback system composed of a recording medium device and the playback device, the playback device comprising: an authentication unit operable to authenticate the recording medium device; a reception unit operable to securely receive the media unique key from the recording medium device when the authentication is successful; a reception unit operable to receive the encrypted first title key, the encrypted shared content, the encrypted third title key, and the encrypted individualized content from the recording medium device; a decryption unit operable to decrypt the encrypted first title key and the encrypted third title key using the media unique key; a decryption unit operable to decrypt the encrypted shared content using the decrypted first title key to obtain a decrypted shared content; a decryption unit operable to decrypt the encrypted individualized content using the decrypted third title key to obtain a decrypted individualized content; a content combination unit operable to combine the decrypted shared content and the decrypted individualized content to obtain a combined content; and a playback unit operable to play back the combined content.

(12) A recording method used in a system composed of a key distribution server, a recording device, and a recording medium device, the recording method comprising the steps of: in the key distribution server, authenticating the recording medium device; securely receiving a media unique key from the recording medium device when the authentication in the authentication step is successful; dividing a content into a shared content and an individualized content; generating a first title key and a second title key that differ for each content; encrypting the first title key and the second title key using the media unique key to obtain an encrypted first title key and an encrypted second title key; encrypting the shared content using the first title key to obtain an encrypted shared content; encrypting the individualized content using the second title key to obtain an encrypted individualized content; transmitting the encrypted first title key, the encrypted shared content, and the encrypted second title key to the recording medium device; and transmitting the encrypted individualized content to the recording device; in the recording device, receiving the encrypted individualized content from the key distribution server; authenticating the recording medium device; securely receiving the second title key and a third title key from the recording medium device when the authentication in the authentication step is successful; decrypting the encrypted individualized content using the second title key to obtain a decrypted individualized content; encrypting the decrypted individualized content using the third title key to obtain an encrypted individualized content; and transmitting the encrypted individualized content encrypted with the third title key to the recording medium device; in the recording medium device, storing the media unique key; authenticating the key distribution server; securely transmitting the media unique key to the key distribution server when the authentication in the authentication step is successful; receiving the encrypted first title key, the encrypted shared content, and the encrypted second title key from the key distribution server; decrypting the encrypted second title key using the media unique key; generating a third title key that differs for each recording; encrypting the third title key using the media unique key to obtain an encrypted third title key; authenticating the recording device; securely transmitting the second title key and the third title key to the recording device when the authentication is successful; receiving the encrypted first title key and the encrypted shared content from the key distribution server and receiving the encrypted individualized content from the recording device; and storing the encrypted first title key, the encrypted shared content, and the encrypted individualized content that are received, as well as the encrypted third title key.

(13) A recording method used in a system composed of a key distribution server, a recording device, and a recording medium device, the recording method comprising the steps of: in the key distribution server, authenticating the recording medium device; securely receiving a media unique key from the recording medium device when the authentication in the authentication step is successful; dividing a content into a shared content and an individualized content; generating a first title key that differs for each content and a third title key that differs for each distribution; encrypting the first title key and the third title key using the media unique key to obtain an encrypted first title key and an encrypted third title key; encrypting the shared content using the first title key to obtain an encrypted shared content; authenticating the recording device; securely transmitting the third title key and the individualized content to the recording device when the authentication in the authentication step is successful; and transmitting the encrypted first title key, the encrypted shared content, and the encrypted third title key to the recording medium device; in the recording device, authenticating the key distribution server; securely receiving the third title key and the individualized content from the key distribution server when the authentication in the authentication step is successful; encrypting the individualized content using the third title key to obtain an encrypted individualized content; and transmitting the encrypted individualized content to the recording medium device; in the recording medium device, storing the media unique key; authenticating the key distribution server; securely transmitting the media unique key to the key distribution server when the authentication is successful; receiving the encrypted first title key, the encrypted shared content, and the encrypted third title key from the key distribution server and receiving the encrypted individualized content from the recording device; and storing the encrypted first title key, the encrypted shared content, the encrypted third title key, and the encrypted individualized content that are received.

(14) A playback method used in a system composed of a recording medium device and a playback device, the recording method comprising the steps of: in the recording medium device, storing a media unique key; authenticating the playback device; securely transmitting the media unique key to the playback device when the authentication is successful; and transmitting an encrypted first title key, an encrypted shared content, an encrypted third title key, and an encrypted individualized content to the playback device; in the playback device, authenticating the recording medium device; securely receiving the media unique key from the recording medium device when the authentication is successful; receiving the encrypted first title key, the encrypted shared content, the encrypted third title key, and the encrypted individualized content from the recording medium device; decrypting the encrypted first title key and the encrypted third title key using the media unique key; decrypting the encrypted shared content using the decrypted first title key to obtain a decrypted shared content; decrypting the encrypted individualized content using the decrypted third title key to obtain a decrypted individualized content; combining the decrypted shared content and the decrypted individualized content to obtain a combined content; and playing back the combined content.

6. Other Embodiments

The above embodiments 1 and 2 each have the structure of performing a good deal of processing for the complete security, such as authentication processing and encryption processing.
The following describes an embodiment which includes only the essential structures of embodiments 1 and 2 for simplification, as another embodiment of the present invention.
Here, in embodiments 1 and 2, the content division unit 102 in the key distribution server 100 divides content into shared content and individualized content. This is in order to restrict re-encryption to individualized content, which is a part of content, taking into consideration that re-encryption of an entire content might cause an excessive processing load.
The processing load is a parameter varying depending on the processing capability of the device for example, and accordingly is not considered in this embodiment. In other words, content is not divided, and the entire content is re-encrypted in this embodiment.
Of course, it may be possible to employ a structure, in the same way as in embodiments 1 and 2, in which content is divided and only individualized content is re-encrypted. In this case, content in this embodiment is a part of the entire content, and corresponds to individualized content in embodiments 1 and 2.

6.1 Embodiment 3

This embodiment corresponds to the above embodiment 1.

(Configuration)

Fig. 26 is a block diagram of the recording playback system 1001 in this embodiment of the present invention.
The recording playback system 1001 is composed of a key distribution server 1002 for distributing contents, various types of keys, etc., recording device 1003, and recording medium device 1004.
The key distribution server 1002, the recording device 1003, and the recording medium device 1004 correspond to the key distribution server 100, the recording device 200, and the recording medium device 300 in embodiment 1, respectively.
Here, the recording medium device 1004 is housed in a case that is other than the recording device 1003, and is detachable. Alternatively, the recording medium device 1004 and the recording device 1003 may be housed in a single case together (self-contained type).
Further alternatively, the recording device 1003 may include all the configurations of the recording medium device 1004. In this case, the recording device and the recording medium device are integrated into one unit, and this configuration is a so-called integrated type.
Fig. 27 is a block diagram of the recording medium device 1004.
The recording medium device 1004 is composed of a holding unit 1011, decryption unit 1012, reception unit 1013, authentication unit 1014, title key generation unit 1015, encryption unit 1016, storage unit 1017, and acquisition unit 1018.
The holding unit 1011 holds therein a media unique key 1021 which is shared between the recording medium device 1004 and the key distribution server 1002.
The media unique key 1021 corresponds to the converted media unique key in embodiment 1.
Key exchange may be performed in the same way as that performed between the authentication unit 302 and the encryption unit 303 in the memory card 300, and the authentication unit 113 and the decryption unit 114 in the key distribution server 100 in embodiment 1. Alternatively, a known key exchange technique may be employed, such as the Diffie-Hellman key exchange.
The media unique key 1021 is a key that is acquirable only by an authentic recording medium device. As described in embodiment 1, only when a recording medium device has an authentic controller unique number and an authentic controller key, etc., namely, only when the recording medium device is authentic, this authentic recording medium device can restore the media unique key 1021.
In this embodiment, the holding unit 1011 holds therein the media unique key 1021. This means that the recording medium device 1004 is authentic, and the holding unit 1011 holds therein the media unique key 1021 which has been successfully recovered by the recording medium device 1004. In other words, when the recording medium device 1004 is unauthentic, the holding unit 1011 holds therein no media unique key.

The reception unit 1013 receives, from the key distribution server 1002, a first title key that has been encrypted using the media unique key 1021 based on the shared key encryption.

Here, the first title key is used for encrypting and decrypting content for distribution, etc. The first title key is unique to each content. Here, the first title key corresponds to the provisional title key in embodiment 1.

The decryption unit 1012 decrypts the encrypted first title key using the media unique key 1021, and transmits the decrypted media unique key 1021 to the recording device 1003.

The authentication unit 1014 performs mutual authentication with the recording device 1003.

The authentication unit 1014 corresponds to the authentication unit 304 in embodiment 1.

The mutual authentication is performed in the same way as in embodiment 1. Alternatively, the mutual authentication may be performed using other known protocol or the like.

When the mutual authentication succeeds, the title key generation unit 1015 generates a second title key, and transmits the generated second title key to the recording device 1003.

The key generated by the title key generation unit 1015 here is different from the first title key. Also, when generating the second title key plural times, the title key generation unit 1015 generates a key so as not to be the same as second title keys that have been previously generated as much as possible. As a result, the title key generation unit 1015 generates a second title key that differs for each encryption or recording of content. A specific example of the second title key is a random number. In the case where a generated second title key is the same as the first title key, the title key generation unit 1015 re-generates a random number until a random number is generated that is different from the first title key and has not been generated previously. However, there is actually a limit to the key length. Accordingly, although it is sometimes difficult to continue to generate different keys that have not been generated previously, it is desirable to generate keys with no duplication as much as possible. The second title key corresponds to the individualized title key in embodiment 1.

When mutual authentication succeeds, the encryption unit 1016 encrypts the second title key using the media unique key 1021 based on the shared key encryption, and stores the encrypted second title key in the storage unit 1017.

The acquisition unit 1018 acquires second encrypted content from the recording device 1003, and stores the acquired second encrypted content in the storage unit 1017. The second encrypted content is generated, in the recording device 1003, by decrypting first encrypted content using the first title key and then encrypting the decrypted first content using the second title key.

Fig. 28 is a block diagram of the recording device 1003.

The recording device 1003 is composed of a content reception unit 1031, key reception unit 1032, decryption unit 1033, authentication unit 1034, and encryption unit 1035.

The content reception unit 1031 receives first encrypted content from the key distribution server 1002.

The authentication unit 1034 performs mutual authentication with the recording medium device 1004. The mutual authentication is performed in the same way as in embodiment 1.

When the mutual authentication succeeds, the key reception unit 1032 securely receives a first title key and a second title key from the recording medium device 1004. The key reception unit 1032 corresponds to a part that realizes a key receiving function included in each of the decryption units 206 and 207 in embodiment 1. Here, keys are securely transmitted and received using the same technique as that in embodiment 1. Alternatively, other known technique may be employed.

The decryption unit 1033 decrypts the first encrypted content received by the content reception unit 1031 using the first title key.

The encryption unit 1035 encrypts the content, which is decrypted by the decryption unit 1033, using the second title key based on the shared key encryption to generate second encrypted content, and then stores the generated second encrypted content in the storage unit 1017 in the recording medium device 1004.

Fig. 29 is a block diagram of the key distribution server 1002.

The key distribution server 1002 is composed of a media unique key holding unit 1051, title key encryption unit 1052, title key holding unit 1053, content holding unit 1054, and content encryption unit 1055.

The content holding unit 1054 holds therein content for distribution.

The title key holding unit 1053 holds therein a first title key, which corresponds with the content held in the content holding unit 1054 and is used for encrypting and decrypting the content.

The media unique key holding unit 1051 holds therein a media unique key that is shared between the key distribution server 1002 and the recording medium device 1004.

Key exchange may be performed in the same way as that performed between the authentication unit 302 and the encryption unit 303 in the memory card 300, and the authentication unit 113 and the decryption unit 114 in the key distribution server 100 in embodiment 1.

Here, in the case where the shared media unique key is unauthentic because of reveal for example, the key distribution server 1002 does not transmit the first title key that is encrypted using such an unauthentic media unique key. It is possible to check whether a media unique key is authentic or unauthentic, using a known technique such as the CRL technique as described above.

The title key encryption unit 1052 encrypts the first title key using the media unique key based on the shared key encryption, and transmits the encrypted first title key to the recording medium device 1004.

The content encryption unit 1055 encrypts content using the first title key based on the shared key encryption, and stores the encrypted content in the storage unit 1017 in the recording medium device 1004.

(Operations)

Fig. 30 is a flowchart of operations during distribution and recording in this embodiment.

Although not shown in the flowchart in Fig. 30, the key distribution server 1002 starts distribution processing upon receiving a content distribution request from the recording device 1003.

Firstly, the content encryption unit 1055 in the key distribution server 1002 reads content from the content holding unit 1054, reads a first title key from the title key holding unit 1053, encrypts the content using the first title key, and transmits the encrypted content to the recording device 1003 (S1001).

Also, the title key encryption unit 1052 in the key distribution server 1002 reads the first title key from the title key holding unit 1053, encrypts the first title key using the media unique key based on the shared key encryption, and stores the encrypted first title key in the storage unit 1017 in the recording medium device 1004 (S1002).

Next, the recording device 1003 receives the encrypted content, and the recording medium device 1004 receives the encrypted first title key. Then, the authentication unit 1034 in the recording device 1003 performs mutual authentication with the authentication unit 1014 in the recording medium device 1004 (S 1003).

When the mutual authentication succeeds (S1004: Yes), the decryption unit 1012 in the recording medium device 1004 decrypts the encrypted first title key using the media unique key 1021 (S1005), and securely transmits the decrypted first title key to the recording device 1003 (S1006). Then, the title key generation unit 1015 in the recording medium device 1004 generates a second title key (S1007), and securely transmits the generated second title key to the recording device 1003 (S1008).

On the other hand, in the recording device 1003, when the mutual authentication succeeds (S1021: Yes), the key reception unit 1032 acquires the first title key and the second title key transmitted from the recording medium device 1004 (S1006 and S1008). Then, the decryption unit 1033 decrypts the encrypted content using the first title key (S1022).

Then, the encryption unit 1035 in the recording device 1003 encrypts the content, which is decrypted to be plaintext, using the second title key, and stores the encrypted content in the storage unit 1017 in the recording medium device 1004 (S1023).

Also, when the mutual authentication succeeds (S1004: Yes), the encryption unit 1016 in the recording medium device 1004 encrypts the second title key using the media unique key 1021 based on the shared key encryption, and stores the encrypted second title key in the storage unit 1017 in the recording medium device 1004 (S1009).

(Effects)

With the above configurations, the first encrypted content, which is distributed from the key distribution server to the recording device, is once decrypted using the first title key, which is decrypted by the recording medium device with a high security level, and then a content obtained by decrypting the first encrypted content is encrypted using the second title key. The second title key is generated by the recording medium device, and differs for each recording processing. Accordingly, even if a title key distribution attack is made whereby a malicious user reveals to disclose the first title key, which is a key for decrypting the first encrypted content, the second encrypted content stored in the recording medium device cannot be decrypted using the disclosed first title key. As a result, it is possible to prevent fraudulent use of content due to such a title key distribution attack.

Moreover, when the first encrypted content is distributed from the key distribution server to other recording medium device, also in the recording medium device, this content is similarly encrypted using a second title key that differs for each recording processing, and then is recorded. As a result, also in this case, content is protected against fraudulent use due to the title key distribution attack.

(Playback Processing)

The recording playback system 1001 may include a playback device for playing back content recorded in a recording medium device.

The following describes the playback device.

Fig. 31 is a block diagram of a playback device 1005 in this embodiment. The playback device 1005 corresponds to the playback device 400 in embodiment 1.

The playback device 1005 is composed of an acquisition unit 1091, title key decryption unit 1092, content decryption unit 1093, and playback unit 1094.

The acquisition unit 1091 acquires, from the recording medium device 1004, the media unique key 1021, an encrypted second title key, and a content encrypted using the unencrypted second title key.

The title key decryption unit 1092 decrypts the encrypted second title key using the media unique key 1021.

The content decryption unit 1093 decrypts, using the second title key, the content encrypted using the second title key.

The playback unit 1094 plays back the decrypted content.

The following describes processing of playing back content by the playback device 1005 in the content distribution system having the above configuration.

Fig. 32 shows operations of the playback device 1005 playing back content recorded in the recording medium device 1004.

Firstly, the acquisition unit 1091 acquires the media unique key 1021 held in the holding unit 1011 in the recording medium device 1004, and acquires the encrypted second title key recorded in the storage unit 1017 (S1101).

The title key decryption unit 1092 decrypts the encrypted second title key using the media unique key 1021 (S1102).

Next, the content decryption unit 1093 reads the encrypted content from the storage unit 1017 in the recording medium device 1004 (S1103), and decrypts the encrypted content using the second title key (S 1104).

The playback unit 1094 plays back the content (S1105).

6.2 Embodiment 4

In embodiment 3, the second title key is generated by the title key generation unit 1015 in the recording medium device 1004. This is because it is desirable to generate the second title key in a secure device in consideration of the security level. In other words, this is because a recording medium device such as an SD card generally has a higher secure level than a recording device such as a versatile personal computer.

In this embodiment, the second title key is generated by the key distribution server, instead of the recording medium device. This is based on the assumption that the key distribution server has a high secure level like the recording medium device. Note that this embodiment corresponds to the above embodiment 2.

(Configuration)

Fig. 33 is a block diagram of the recording playback system in this embodiment of the present invention.

The recording playback system in this embodiment is composed of a key distribution server 1002 for distributing contents, various types of keys etc., recording device 1202, and recording medium device 1203.

The key distribution server 1201, the recording device 1202, and the recording medium device 1203 correspond to the key distribution server 100A, the recording device 200A, and the recording medium device 300A in embodiment 2, respectively.

Here, the recording medium device 1203 is housed in a case that is other than the recording device 1202, and is detachable. Alternatively, the recording medium device 1203 and the recording device 1202 may be housed in a single case together (self-contained type).

Fig. 34 is a block diagram of the key distribution server 1201.

The key distribution server 1201 is composed of a media unique key holding unit 1321, title key holding unit 1322, authentication unit 1323, title key generation unit 1324, title key encryption unit 1325, content holding unit 1326, and content encryption unit 1327.

The media unique key holding unit 1321 holds therein a media unique key 1025. The media unique key 1025 is the same as the media unique key 1021 in embodiment 3.

The title key holding unit 1322 holds therein a first title key. The first title key is the same as that in embodiment 3.

The authentication unit 1323 performs mutual authentication with the recording device 1202. The authentication unit 1323 corresponds to the authentication unit 153A in embodiment 2. The mutual authentication is performed in the same way as in embodiment 2. Alternatively, the mutual authentication may be performed using other known protocol or the like.

When the mutual authentication performed by the authentication unit 1323 succeeds, the title key generation unit 1324 generates a second title key, and securely transmits the generated second title key to the recording device 1202. The key generated by the title key generation unit 1324 here is different from the first title key. Also, when generating the second title key plural times, the title key generation unit 1324 generates a key so as not to be the same as second title keys that have been previously generated as much as possible. As a result, the title key generation unit 1324 generates a second title key that differs for each distribution, encryption, or recording of content. The details of the second title key are the same as those described in embodiment 3.

The title key encryption unit 1325 encrypts the first title key using the media unique key, and transmits the encrypted first title key to the recording medium device 1203. A first title key that is encrypted using the media unique key is hereinafter referred to as "encrypted first title key".

The content holding unit 1326 holds therein content for distribution.

The content encryption unit 1327 encrypts the content using the first title key based on the shared key encryption, and transmits the encrypted content to the recording medium device 1203. Here, content that is encrypted is referred to as "first encrypted content".

Fig. 35 is a block diagram of the recording device 1202.

The recording device 1202 is composed of an authentication unit 1301, decryption unit 1302, and encryption unit 1303.

The authentication unit 1301 performs mutual authentication with the key distribution server 1321.

When the mutual authentication succeeds, the decryption unit 1302 receives first encrypted content and a second title key from the key distribution server 1201. Also, the decryption unit 1302 receives a first title key from the recording medium device 1203.

Then, the decryption unit 1302 decrypts the first encrypted content using the first title key.

The encryption unit 1303 encrypts the content, which is decrypted by the decryption unit 1302, using the second title key, and transmits the encrypted content to the recording medium device 1203. Here, the content encrypted by the encryption unit 1303 is referred to as "second encrypted content".

Fig. 36 is a block diagram of the recording medium device 1203.

The recording medium device 1203 is composed of a holding unit 1341, decryption unit 1342, encryption unit 1343, and storage unit 1344.

The holding unit 1341 holds therein a media unique key that is shared between the key distribution server 1201 and the recording medium device 1203. The media unique key is the same as the media unique key 1201 in embodiment 1.

The decryption unit 1342 acquires the encrypted first title key from the key distribution server 1201, and decrypts the encrypted first title key using the media unique key. Then, the decryption unit 1342 transmits the decrypted first title key to the recording device 1202.

The encryption unit 1343 securely acquires the second title key from the key distribution server 1201, encrypts the second title key using the media unique key, and securely stores the encrypted second title key in the storage unit 1344.

The second title key that is encrypted using the media unique key is hereinafter referred to as "encrypted second title key".

The storage unit 1344 securely stores therein data such as content and a key.

(Operations)

Fig. 37 is a flowchart of operations in the content distribution system in this embodiment.

Although not shown in the flowchart in Fig. 37, the key distribution server 1201 starts distribution processing upon receiving a content distribution request from the recording device 1202.

Firstly, the authentication unit 1323 in the key distribution server 1201 performs mutual authentication with the authentication unit 1301 in the recording device 1202 (S1301).

When the mutual authentication succeeds (S 1302: Yes), the title key generation unit 1324 in the key distribution server 1201 generates a second title key (S 1303).

Also, the content encryption unit 1327 encrypts content using a first title key based on the shared key encryption (S1304).

Then, the content encryption unit 1327 securely transmits the first encrypted content and the second title key to the recording device 1202.

When the mutual authentication in S1301 succeeds (S1321: Yes), the decryption unit 1302 in the recording device 1202 receives the first encrypted content and the second title key from the key distribution server 1201. Then, the decryption unit 1302 receives the first title key from the recording medium device 1203 (S1322). Alternatively, although not shown in Fig. 37, the following may be employed: the recording device 1202 performs additional mutual authentication with the recording medium device 1203 before transmission and reception of the first title key between the recording device 1202 and the recording medium device 1203, and only when this additional mutual authentication succeeds, the decryption unit 1302 receives the first title key from the recording medium device 1203.

The decryption unit 1342 in the recording device 1202 decrypts the first encrypted content using the first title key (S 1323). Then, the encryption unit 143 in the recording device 1202 encrypts the content, which is decrypted in S1323, using the second title key (S 1324), and writes the encrypted content, namely second encrypted content, into the storage unit 1344 in the recording medium device 1203 (S1325).

Also, the title key generation unit 1324 securely transmits the second title key to the recording medium device 1203 (S 1306).

The encryption unit 1343 in the recording medium device 1203 encrypts the second title key using the media unique key, and securely stores the encrypted second title key in the storage unit 1344 (S1326).

(Effects)

With the above configurations, the first encrypted content, which is distributed from the key distribution server to the recording device, is once decrypted using the first title key, which is decrypted by the recording medium device with a high security level, and then is encrypted using the second title key. The second title key is genertated by the key distribution server, and differs for each distribution processing. Accordingly, even if a title key distribution attack is made whereby a malicious user reveals to disclose the first title key, which is a key for decrypting the first encrypted content, the second encrypted content stored in the recording medium device cannot be decrypted using the disclosed first title key. As a result, it is possible to prevent fraudulent use of content due to such a title key distribution attack.

Also, when the first encrypted content is distributed from the key distribution server to other recording medium device, in other recording medium device, this content is similarly encrypted using a second title key that is generated by the key distribution server and differs for each distribution processing, and then the encrypted content is recorded. As a result, also in this case, content is protected against fraudulent use due to the content title key distribution attack.

(Playback Processing)

The recording playback system in this embodiment may include a playback device for playing back content recorded in a recording medium device. The playback device in this embodiment may be the same as that described in embodiment 3.

6.3 Modifications

Although the present invention has been described based on the above embodiments, the present invention is not limited to the above embodiments. It is of course possible to make various modifications without departing from the spirit and scope of the invention.

(1) The configuration can be imagined whereby the authentication units 1014, 1034, 1301, and 1321 may be deleted. In this case, it is preferable to ensure a desired security level by other method.

Also, although not shown, in embodiments 3 and 4, the following may be employed: the devices performs mutual authentication before data transmission and reception, and only when the mutual authentication succeeds, the devices perform data transmission and reception.

(2) In embodiments 3 and 4, some of the components of the key distribution server and some of the components of the recording medium device perform data transmission and reception directly between each other. Alternatively, such data transmission and reception between the key distribution server and the recording medium device may be performed via the recording device.

(3) Each of the above-described devices is, specifically, a computer system composed of a microprocessor, ROM, RAM, hard disk unit, display unit, keyboard, mouse, etc. Computer programs are stored on the RAM or the hard disk unit. By operating in accordance with the computer programs, the microprocessor achieves the functions of each device. In order to achieve predetermined functions, the computer programs are composed of a combination of multiple command codes that indicate instructions for the computer.

Note that each of the devices is not limited to a computer system that includes all of the following components: microprocessor, ROM, RAM, hard disk unit, display unit, keyboard, mouse, etc.; each of the devices may also be a computer system composed of only some of these components.

(4) Part or all of the components constituting each of the above-described devices may be configured as a circuit that realizes the functions of the components, a program that realizes the functions of the components and a processor that executes the program, or one system Large Scale Integration (LSI). A system LSI is an ultra-multifunctional LSI produced by integrating multiple components on one chip and, more specifically, is a computer system including a microprocessor, ROM, RAM, and the like. Computer programs are stored in the RAM. The microprocessor operates according to the computer programs, and thereby the system LSI accomplishes its functions. Individual components comprising each of the above-described devices may respectively be made into discrete chips, or part or all of the components may be made into one chip.

Although referred to here as a system LSI, depending on the degree of integration, the terms IC, LSI, super LSI, or ultra LSI are used.

In addition, the method for assembling integrated circuits is not limited to LSI, and a dedicated communication circuit or a general-purpose processor may be used. A Field Programmable Gate Array (FPGA), which is programmable after the LSI is manufactured, or a reconfigurable processor, which allows reconfiguration of the connection and setting of circuit cells inside the LSI, may be used.

Furthermore, if technology for forming integrated circuits that replaces LSIs emerges, owing to advances in semiconductor technology or to another derivative technology, the integration of functional blocks may naturally be accomplished using such technology. The application of biotechnology or the like is possible.

(5) Part or all of the components constituting each of the above devices (may be assembled as an IC card detachable from each device, or as a single module. The IC card/module is a computer system that includes a microprocessor, ROM, RAM, etc. The IC card/module may include therein the above-mentioned ultra-multifunctional LSI. The microprocessor operates according to computer programs, and the IC card/module thereby accomplishes its functions. The IC card/module may be tamper resistant.

(6) The present invention may be a method of accomplishing the above-described system. The present invention may be computer programs that achieve the method by a computer, or may be a digital signal including the computer programs.

The present invention may also be achieved by a computer-readable recording medium, such as a flexible disk, hard disk, CD-ROM, MO, DVD, DVD-ROM, DVD-RAM, BD (Blu-ray Disc), or semiconductor memory, on which the above-mentioned computer program or digital signal is recorded. The present invention may also be the computer program or the digital signal recorded on such a recording medium.

The present invention may also be the computer programs or digital signal to be transmitted via networks, of which telecommunications networks, wire/wireless communications networks, and the Internet are representative, or via data broadcasting.

Also, another independent computer system may implement the computer programs or digital signal after the computer programs or digital signal are transferred via being recorded on the recording medium, via one of the above-mentioned networks, etc.

(7) The above embodiments and modifications may be combined with one another.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

**[Industrial Applicability]**

The recording system in the present invention is useful as a system to protect the rights of the copyright owner of digital content by preventing digital content recorded on a recording medium from being copied onto another recording medium and played back.

**[Reference Signs List]**

| | |
|---|---|
| 100 | key distribution server |
| 200 | recording device |
| 300 | recording medium device |
| 400 | playback device |
| 900 | key issuing authority |

## Claims

1. A recording medium device used together with a recording device that controls recording of a first encrypted content transmitted from a key distribution server, the first encrypted content being obtained by encrypting a content using a first title key, the recording medium device comprising:

   a storage unit;
   a reception unit operable to receive, from the key distribution server, the first title key that has been encrypted;
   a decryption unit operable to decrypt the encrypted first title key, and transmit the first title key that has been decrypted to the recording device;
   a title key generation unit operable to generate a second title key that differs for each recording of a content, and transmit the second title key to the recording device; and
   an acquisition unit operable to acquire a second encrypted content from the recording device, and store the second encrypted content in the storage unit, the second encrypted content being obtained by decrypting the first encrypted content using the first title key and then encrypting using the second title key.

2. The recording medium device of Claim 1, wherein
   the encryption of the first title key is performed using a controller individual key that is unique to the recording medium device and is shared between the recording medium device and the key distribution server based on a key sharing scheme, and
   the recording medium device further comprises
   a holding unit operable to hold the controller individual key, and
   the decryption unit decrypts the encrypted first title key using the controller individual key.

3. The recording medium device of Claim 2, being used together with a content playback device, and further comprising an encryption unit operable to encrypt the second title key using the controller individual key, and store the encrypted second title key in the storage unit, and
   the content playback device comprises:

   an acquisition unit operable to acquire the controller individual key, the encrypted second title key, and the second encrypted content;
   a title key decryption unit operable to decrypt the encrypted second title key using the controller individual key;
   a content decryption unit operable to decrypt the second encrypted content using the second title key; and
   a playback unit operable to play back the content.

4. The recording medium device of Claim 2, further comprising
   an authentication unit operable to perform mutual authentication with the recording device, wherein
   only when the mutual authentication is successful, the decryption unit decrypts the encrypted first title key.

5. The recording medium device of Claim 2, wherein
   only when the controller individual key is authentic, the key distribution server transmits the first title key that has been encrypted using the authentic controller individual key, and
   the reception unit receives the first title key that has been encrypted using the authentic controller individual key.

6. The recording medium device of Claim 1, wherein
   the title key generation unit generates a random number as the second title key.

**7.** The recording medium device of Claim 1, wherein the content is a part that has been extracted from an entire content held in the key distribution server.

**8.** The recording medium device of Claim 1 being housed in a case of the recording device.

**9.** A recording method for use in a recording medium device, the recording medium device being used together with a recording device that controls recording of a first encrypted content transmitted from a key distribution server, the first encrypted content being obtained by encrypting a content using a first title key, the recording method comprising:

a receiving step of receiving, from the key distribution server, the first title key that has been encrypted;
a decrypting step of decrypting the encrypted first title key, and transmitting the first title key that has been decrypted to the recording device;
a title key generating step of generating a second title key that differs for each recording of a content, and transmitting the second title key to the recording device; and
an acquiring step of acquiring a second encrypted content from the recording device, and storing the second encrypted content in a storage unit included in the recording medium device, the second encrypted content being obtained by decrypting the first encrypted content using the first title key and then encrypting using the second title key.

**10.** A computer-readable recording medium that records a recording program for use in a recording medium device, the recording medium device being used together with a recording device that controls recording of a first encrypted content transmitted from a key distribution server, the first encrypted content being obtained by encrypting a content using a first title key, the recording program comprising:

a receiving step of receiving, from the key distribution server, the first title key that has been encrypted;
a decrypting step of decrypting the encrypted first title key, and transmitting the first title key that has been decrypted to the recording device;
a title key generating step of generating a second title key that differs for each recording of a content, and transmitting the second title key to the recording device; and
an acquiring step of acquiring a second encrypted content from the recording device, and storing the second encrypted content in a storage unit included in the recording medium device, the second encrypted content being obtained by decrypting the first encrypted content using the first title key and then encrypting using the second title key.

**11.** An integrated circuit for use in a recording medium device, the recording medium device being used together with a recording device that controls recording of a first encrypted content transmitted from a key distribution server, the first encrypted content being obtained by encrypting a content using a first title key, the integrated circuit comprising:

a storage unit;
a reception unit operable to receive, from the key distribution server, the first title key that has been encrypted;
a decryption unit operable to decrypt the encrypted first title key, and transmit the first title key that has been decrypted to the recording device;
a title key generation unit operable to generate a second title key that differs for each recording of a content, and transmit the second title key to the recording device; and
an acquisition unit operable to acquire a second encrypted content from the recording device, and store the second encrypted content in the storage unit, the second encrypted content being obtained by decrypting the first encrypted content using the first title key and then encrypting using the second title key.

**12.** A recording device that records a first encrypted content transmitted from a key distribution server, the first encrypted content being obtained by encrypting a content using a first title key, the recording device comprising:

a storage unit;
a reception unit operable to receive the first title key that has been encrypted from the key distribution server;
a decryption unit operable to decrypt the encrypted first title key;
a title key generation unit operable to generate a second title key that differs for each recording of a content;
a second decryption unit operable to decrypt the first encrypted content using the first title key; and
an encryption unit operable to encrypt the content to obtain a second encrypted content, and store the second encrypted content in the storage unit.

**13.** A key distribution server used together with a recording medium device and a recording device that receives a content and writes the received content into the recording medium device, the key distribution server comprising:

a key holding unit operable to hold a first title key;
a content holding unit operable to hold the content;
a content encryption unit operable to encrypt the content using the first title key, and transmit the encrypted content to the recording device;
a title key encryption unit operable to encrypt the first title key, and transmit the encrypted first title key to the recording device; and
a title key generation unit operable to generate a second title key that differs for each distribution of a content, and transmit the second title key to the recording device, wherein
when the recording device receives the encrypted content, the first title key, and the second title key from the key distribution server, the recording device decrypts the encrypted content using the first title key, encrypts the content using the second title key, and writes the encrypted content into the recording medium device.

**14.** The key distribution server of Claim 13, further comprising
a holding unit operable to hold a controller individual key that is unique to the recording medium device and is shared between the key distribution server and the recording medium device based on a key sharing scheme, and
only when the controller individual key is authentic, the title key encryption unit encrypts the first title key using the authentic controller individual key.

**15.** The key distribution server of Claim 14, wherein
the recording medium device acquires the second title key from the recording device, encrypts the second title key using the controller individual key, and holds the encrypted second title key, and
the key distribution server is used together with a content playback device,
the content playback device comprises:

an acquisition unit operable to acquire the controller individual key, the encrypted second title key, and the second encrypted content;
a title key decryption unit operable to decrypt the encrypted second title key using the controller individual key;
a content decryption unit operable to decrypt the second encrypted content using the second title key; and
a playback unit operable to play back the content.

**16.** The key distribution server of Claim 13, further comprising
an authentication unit operable to perform mutual authentication with the recording device, wherein
only when the mutual authentication is successful, the title key generation unit is permitted to transmit the second title key to the recording device.

**17.** The key distribution server of Claim 13, wherein
the title key generation unit generates a random number as the second title key.

**18.** A key distribution method for use in a key distribution server, the key distribution server being used together with a recording medium device and a recording device that receives a content and writes the received content into the recording medium device, the key distribution method comprising:

a key holding step of holding a first title key;
a content holding step of holding the content;
a content encrypting step of encrypting the content using the first title key, and transmitting the encrypted content to the recording device;
a title key encrypting step of encrypting the first title key, and transmitting the encrypted first title key to the recording device; and
a title key generating step of generating a second title key that differs for each distribution of a content, and transmitting the second title key to the recording device, wherein
when the recording device receives the encrypted content, the first title key, and the second title key from the key distribution server, the recording device decrypts the encrypted content using the first title key, encrypts the content using the second title key, and writes the encrypted content into the recording medium device.

**19.** A computer-readable recording medium that records a key distribution program for use in a key distribution server, the key distribution server being used together with a recording medium device and a recording device that receives a content and writes the received content into the recording medium device, the key distribution program comprising:

a key holding step of holding a first title key;
a content holding step of holding the content;
a content encrypting step of encrypting the content using the first title key, and transmitting the encrypted content to the recording device;
a title key encrypting step of encrypting the first title key, and transmitting the encrypted first title key to the recording device; and
a title key generating step of generating a second title key that differs for each distribution of a content, and transmitting the second title key to the recording device, wherein
when the recording device receives the encrypted content, the first title key, and the second title key from the key distribution server, the recording device decrypts the encrypted content using the first title key, encrypts the content using the second title key, and writes the encrypted content into the recording medium device.

FIG.1

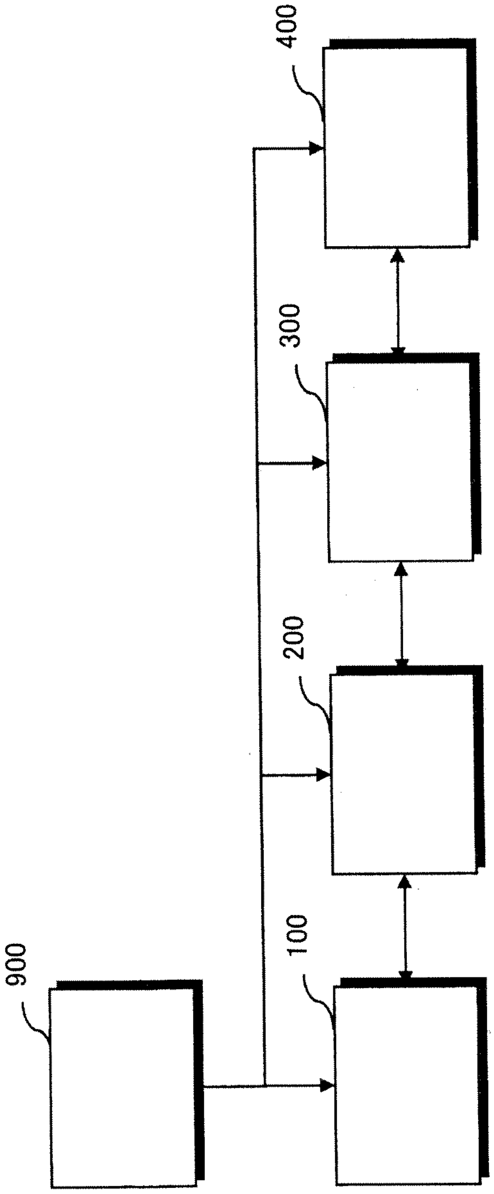

FIG.2

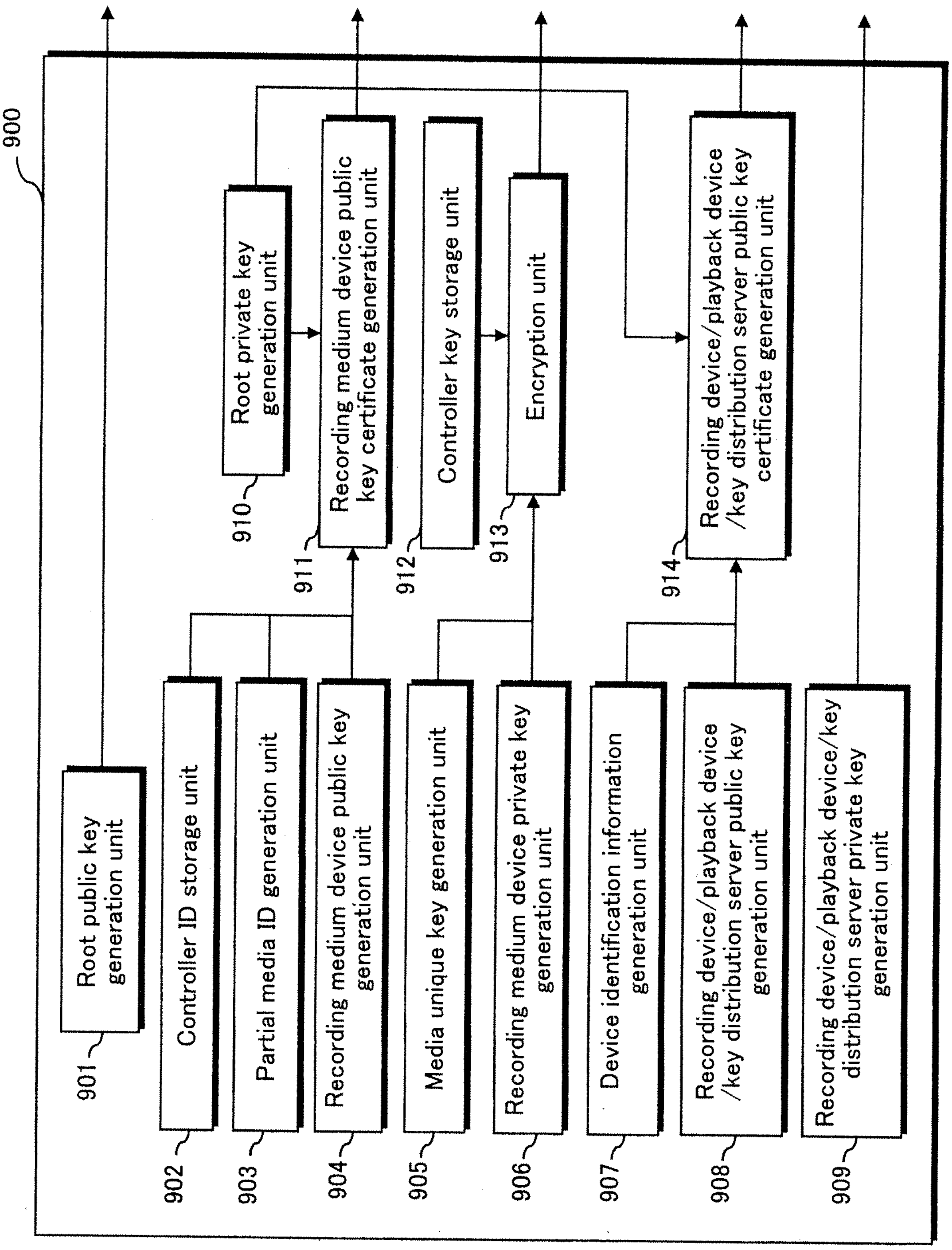
900
901
Root public key generation unit
902
Controller ID storage unit
903
Partial media ID generation unit
904
Recording medium device public key generation unit
905
Media unique key generation unit
906
Recording medium device private key generation unit
907
Device identification information generation unit
908
Recording device/playback device /key distribution server public key generation unit
909
Recording device/playback device/key distribution server private key generation unit
910
Root private key generation unit
911
Recording medium device public key certificate generation unit
912
Controller key storage unit
913
Encryption unit
914
Recording device/playback device /key distribution server public key certificate generation unit

FIG.3

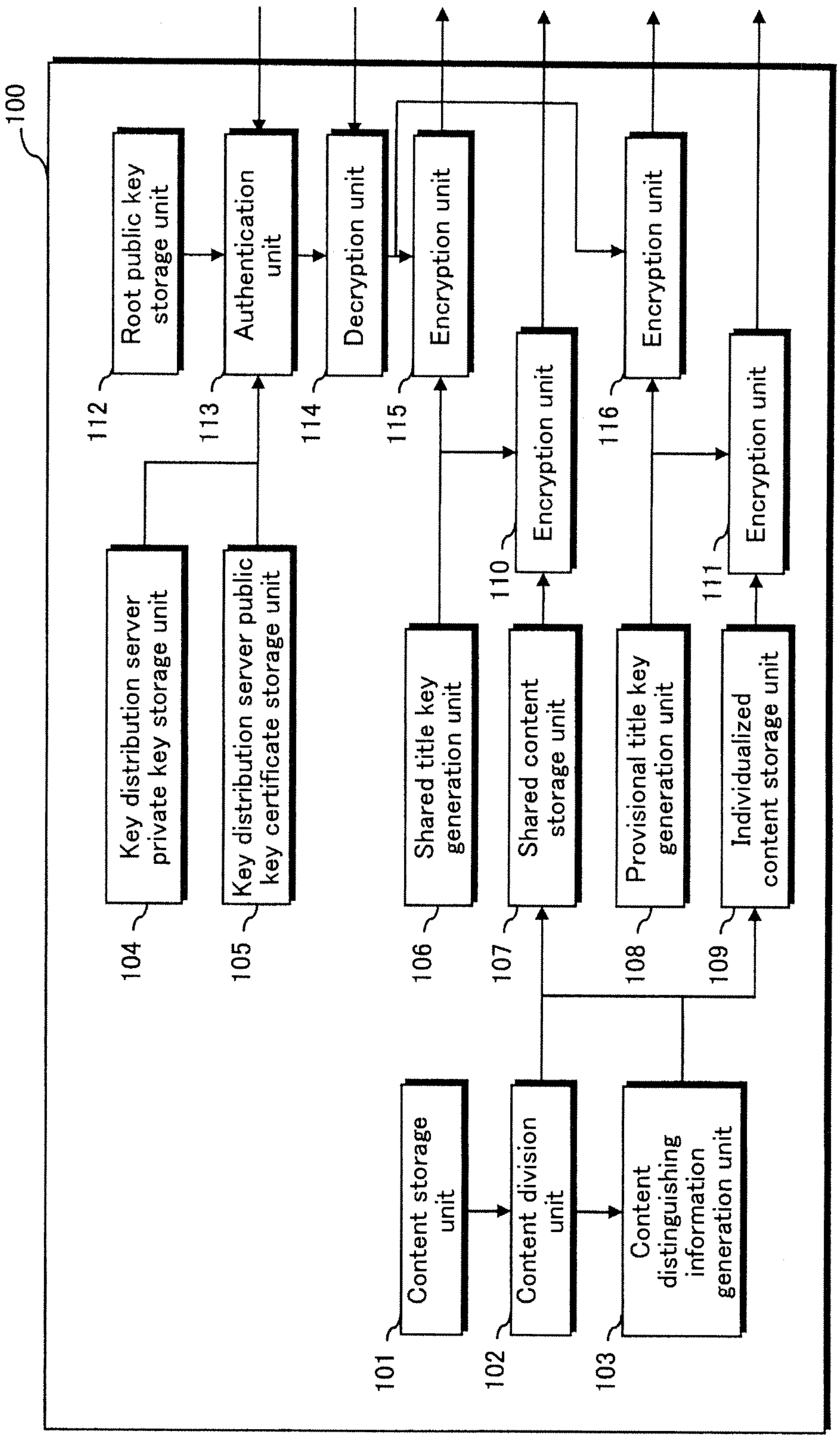
100
101
Content storage unit
102
Content division unit
103
Content distinguishing information generation unit
104
Key distribution server private key storage unit
105
Key distribution server public key certificate storage unit
106
Shared title key generation unit
107
Shared content storage unit
108
Provisional title key generation unit
109
Individualized content storage unit
110
Encryption unit
111
Encryption unit
112
Root public key storage unit
113
Authentication unit
114
Decryption unit
115
Encryption unit
116
Encryption unit

FIG.4

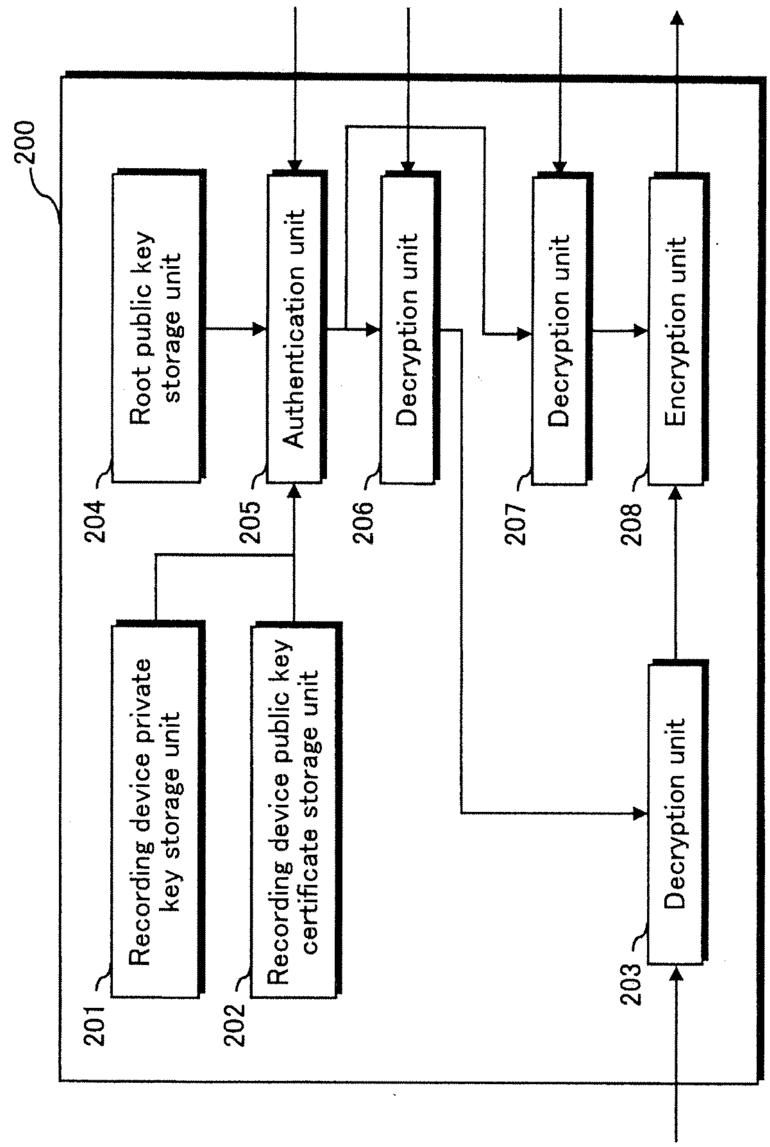
200
Root public key storage unit
204
Authentication unit
205
Decryption unit
206
Decryption unit
207
Encryption unit
208
Recording device private key storage unit
201
Recording device public key certificate storage unit
202
Decryption unit
203

FIG.5

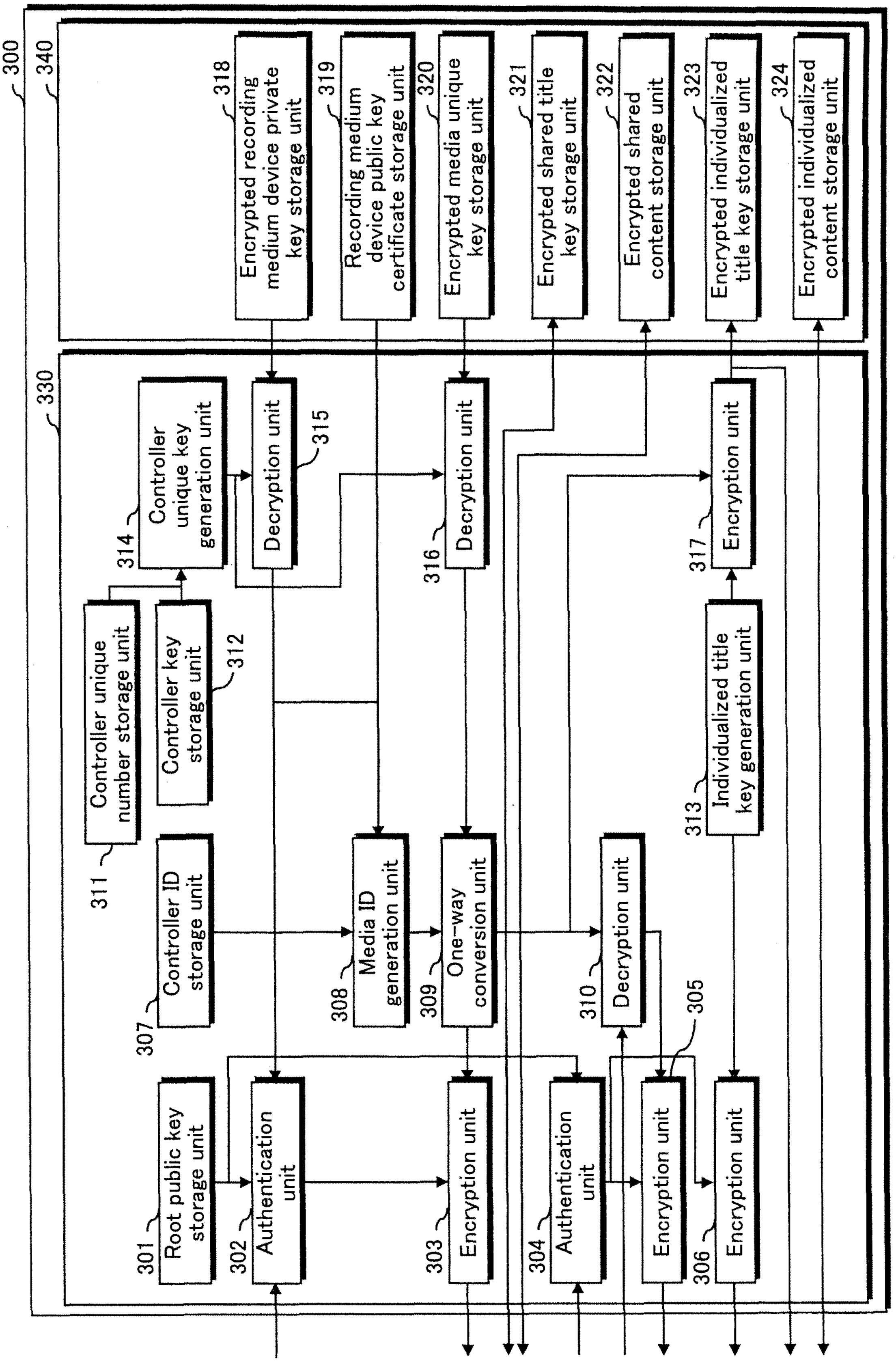
300
340
330
318 Encrypted recording medium device private key storage unit
319 Recording medium device public key certificate storage unit
320 Encrypted media unique key storage unit
321 Encrypted shared title key storage unit
322 Encrypted shared content storage unit
323 Encrypted individualized title key storage unit
324 Encrypted individualized content storage unit
311 Controller unique number storage unit
312 Controller key storage unit
314 Controller unique key generation unit
315 Decryption unit
316 Decryption unit
317 Encryption unit
313 Individualized title key generation unit
307 Controller ID storage unit
308 Media ID generation unit
309 One-way conversion unit
310 Decryption unit
301 Root public key storage unit
302 Authentication unit
303 Encryption unit
304 Authentication unit
305 Encryption unit
306 Encryption unit

FIG.6

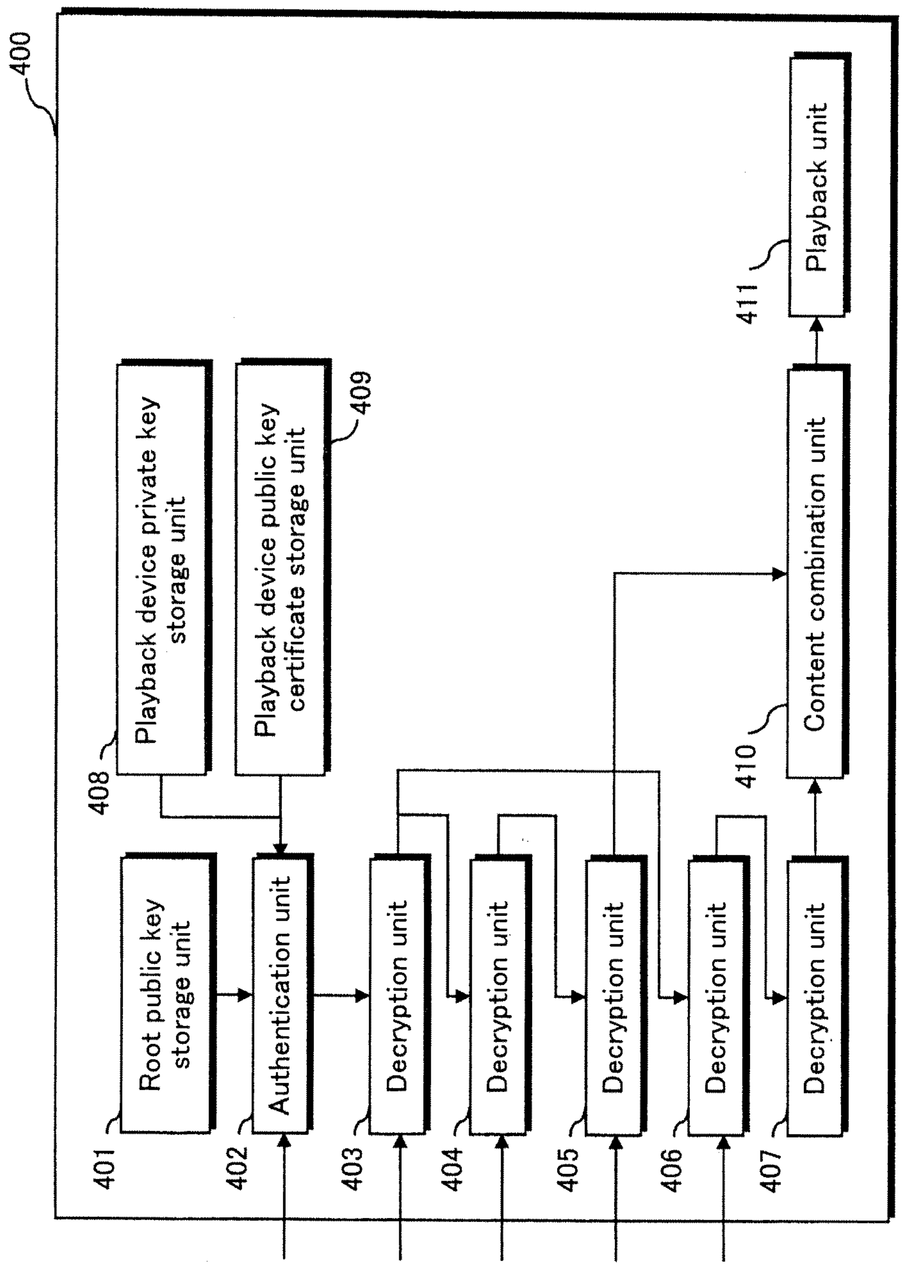
400
Root public key storage unit
401
Authentication unit
402
Decryption unit
403
Decryption unit
404
Decryption unit
405
Decryption unit
406
Decryption unit
407
Playback device private key storage unit
408
Playback device public key certificate storage unit
409
Content combination unit
410
Playback unit
411

FIG.7

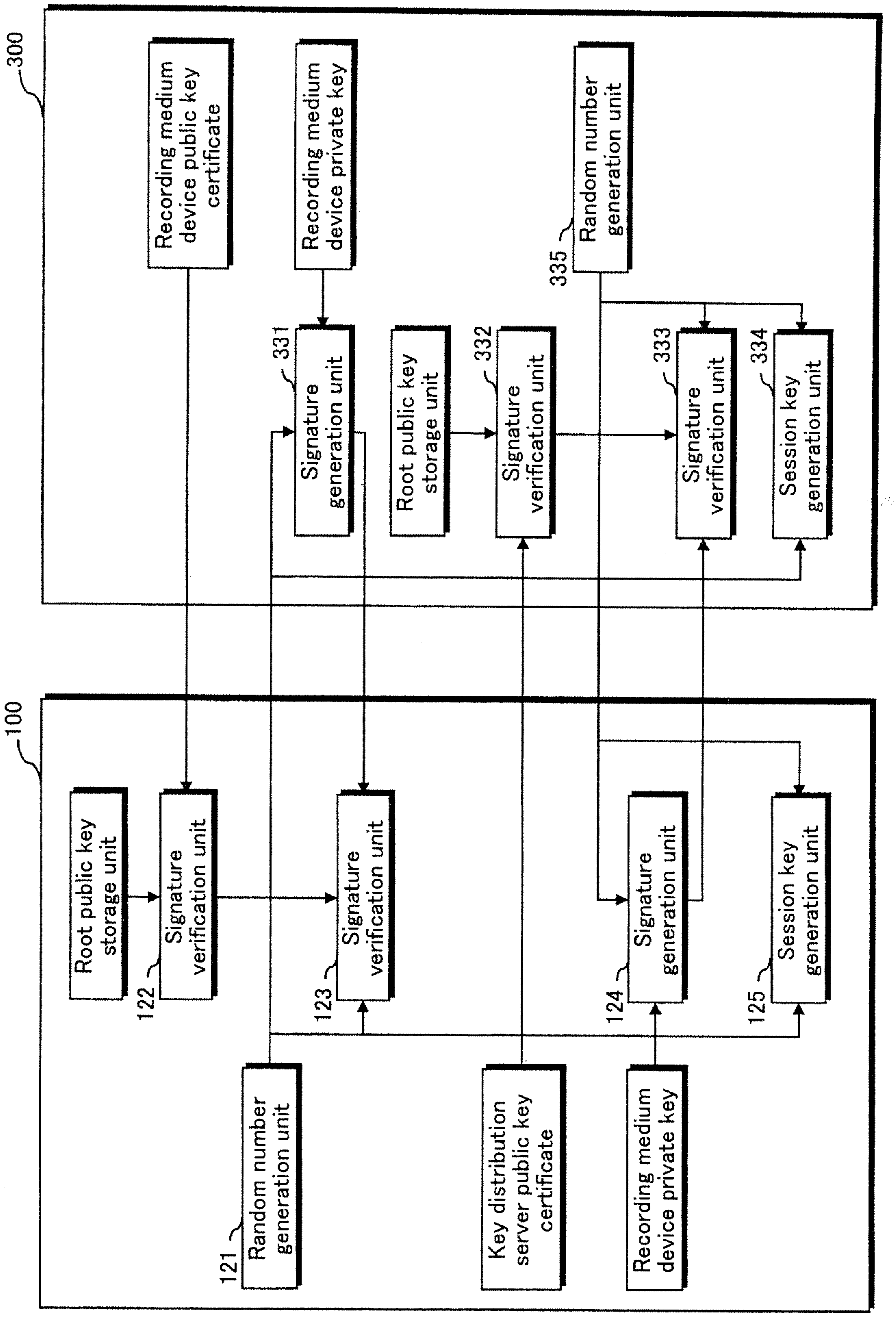
300
Recording medium device public key certificate
Recording medium device private key
Random number generation unit
335
331
Signature generation unit
Root public key storage unit
332
Signature verification unit
333
Signature verification unit
334
Session key generation unit
100
Root public key storage unit
122
Signature verification unit
123
Signature verification unit
124
Signature generation unit
125
Session key generation unit
121
Random number generation unit
Key distribution server public key certificate
Recording medium device private key

FIG.8

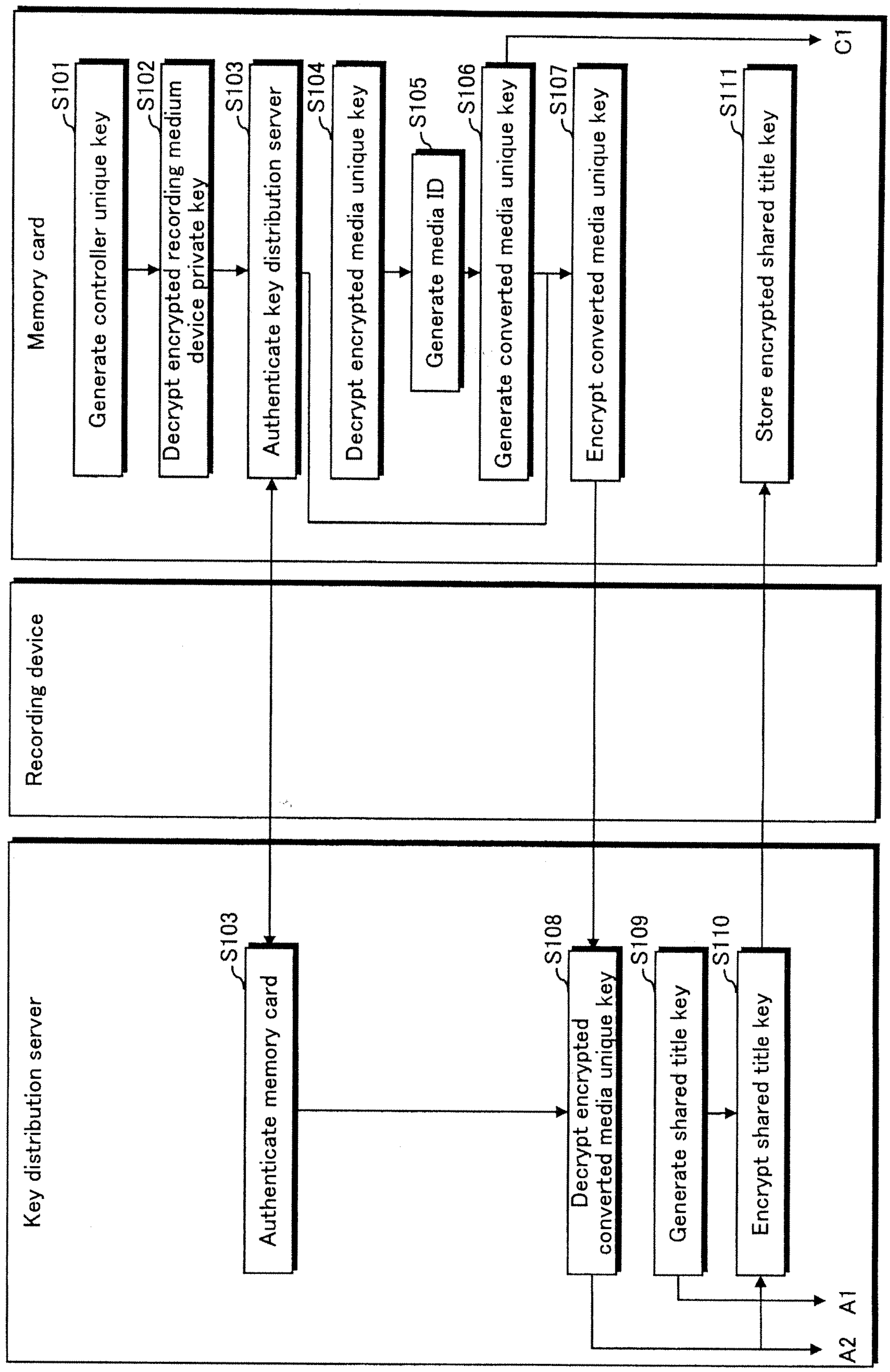
Memory card
S101
Generate controller unique key
S102
Decrypt encrypted recording medium device private key
S103
Authenticate key distribution server
S104
Decrypt encrypted media unique key
S105
Generate media ID
S106
Generate converted media unique key
S107
Encrypt converted media unique key
S111
Store encrypted shared title key
C1
Recording device
Key distribution server
S103
Authenticate memory card
S108
Decrypt encrypted converted media unique key
S109
Generate shared title key
S110
Encrypt shared title key
A1
A2

FIG.9

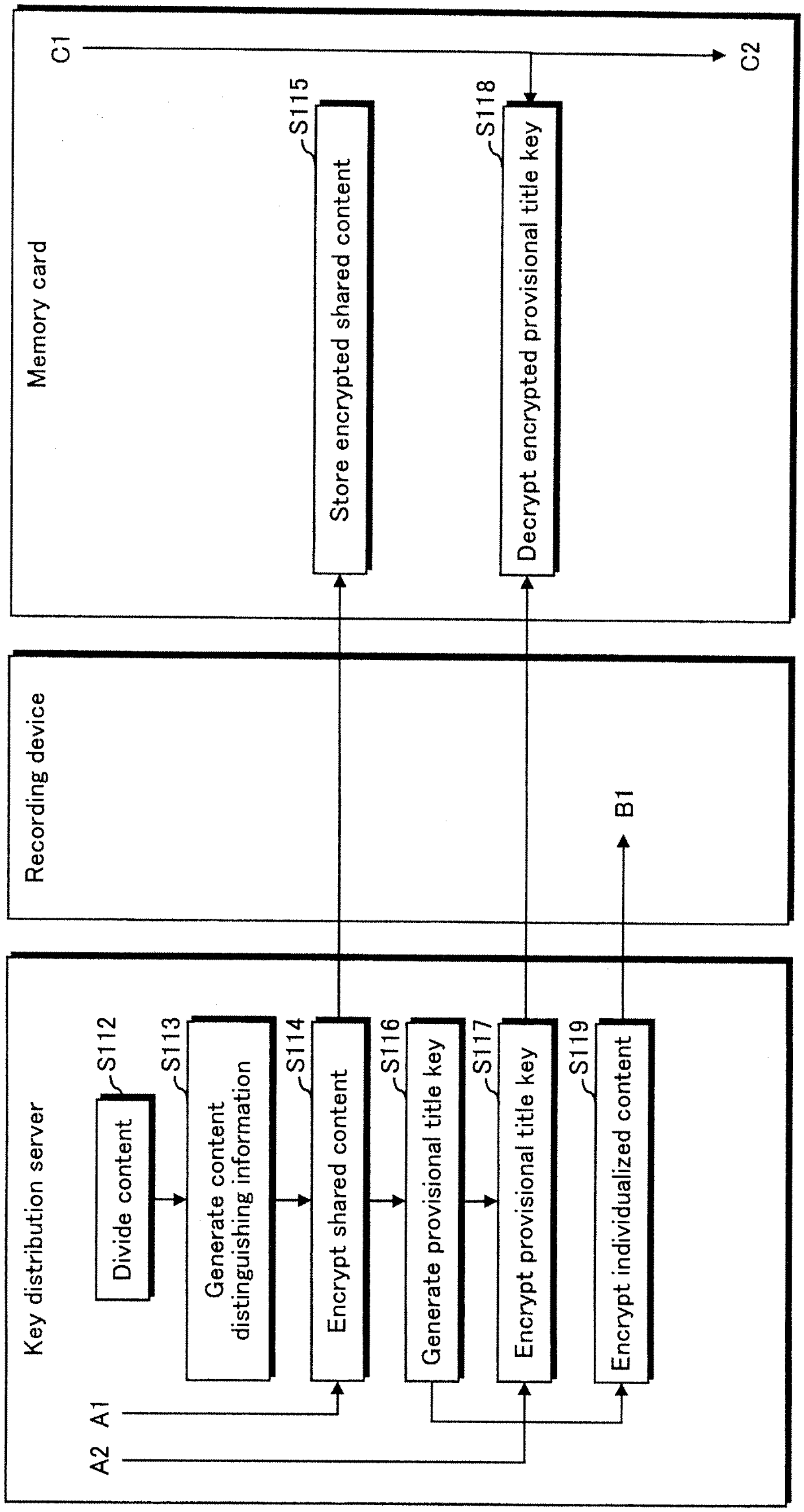
Key distribution server
A1
A2
Divide content
S112
Generate content distinguishing information
S113
Encrypt shared content
S114
Generate provisional title key
S116
Encrypt provisional title key
S117
Encrypt individualized content
S119
Recording device
B1
Memory card
C1
C2
Store encrypted shared content
S115
Decrypt encrypted provisional title key
S118

FIG.10

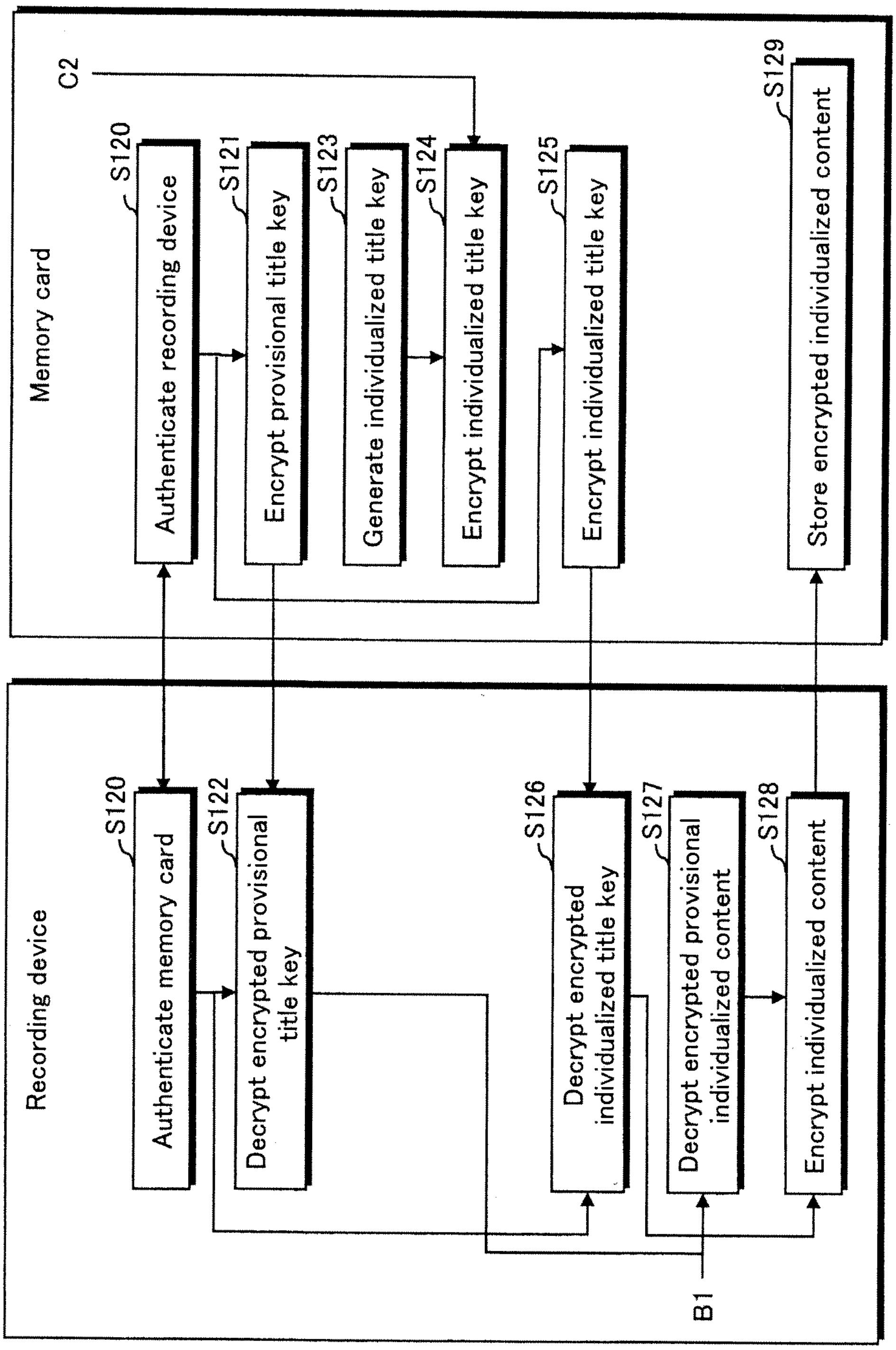
Memory card
C2
S120
Authenticate recording device
S121
Encrypt provisional title key
S123
Generate individualized title key
S124
Encrypt individualized title key
S125
Encrypt individualized title key
S129
Store encrypted individualized content
Recording device
S120
Authenticate memory card
S122
Decrypt encrypted provisional title key
S126
Decrypt encrypted individualized title key
S127
Decrypt encrypted provisional individualized content
S128
Encrypt individualized content
B1

FIG.11

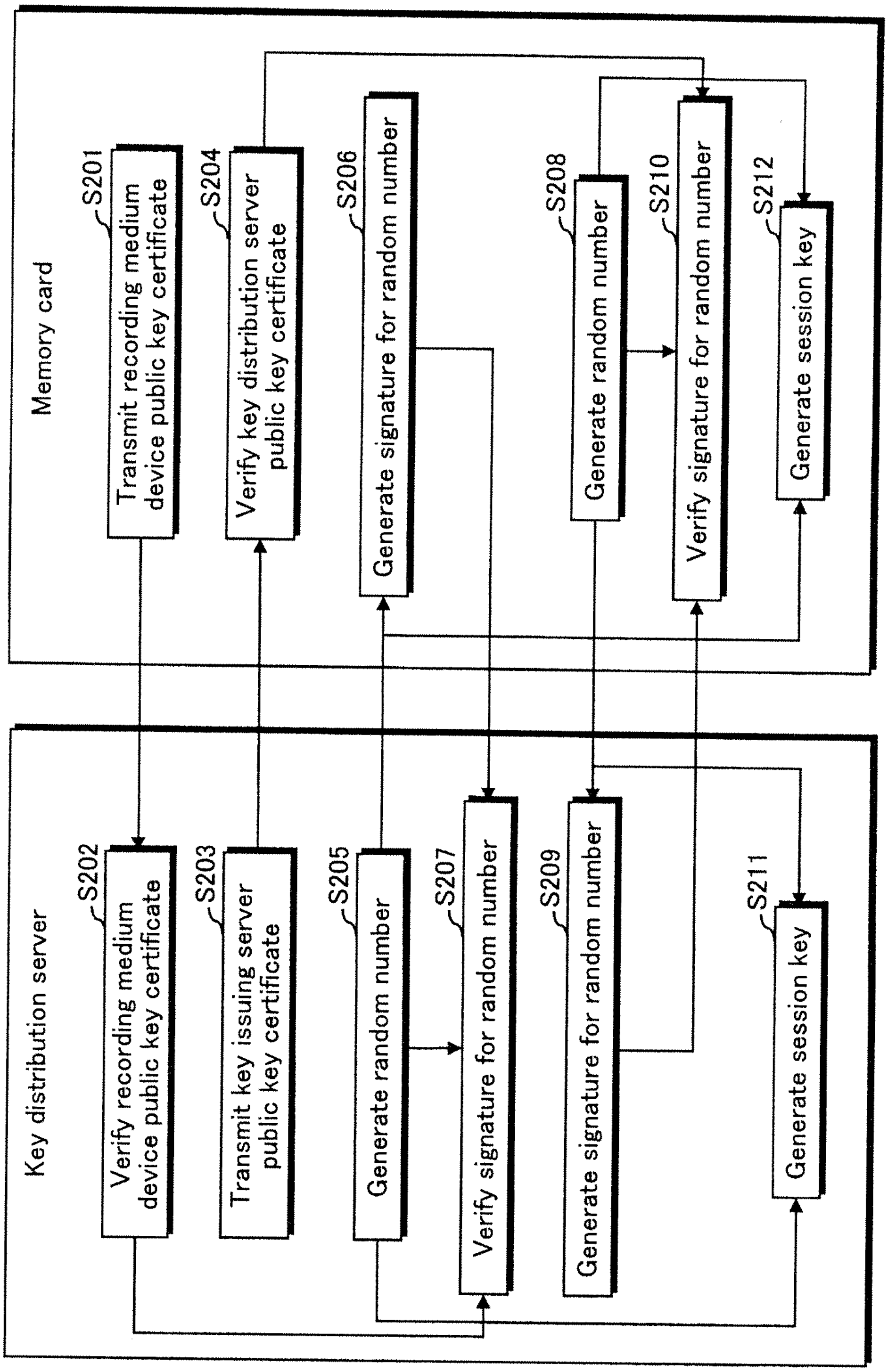
Memory card
S201
Transmit recording medium device public key certificate
S204
Verify key distribution server public key certificate
S206
Generate signature for random number
S208
Generate random number
S210
Verify signature for random number
S212
Generate session key
Key distribution server
S202
Verify recording medium device public key certificate
S203
Transmit key issuing server public key certificate
S205
Generate random number
S207
Verify signature for random number
S209
Generate signature for random number
S211
Generate session key

FIG.12

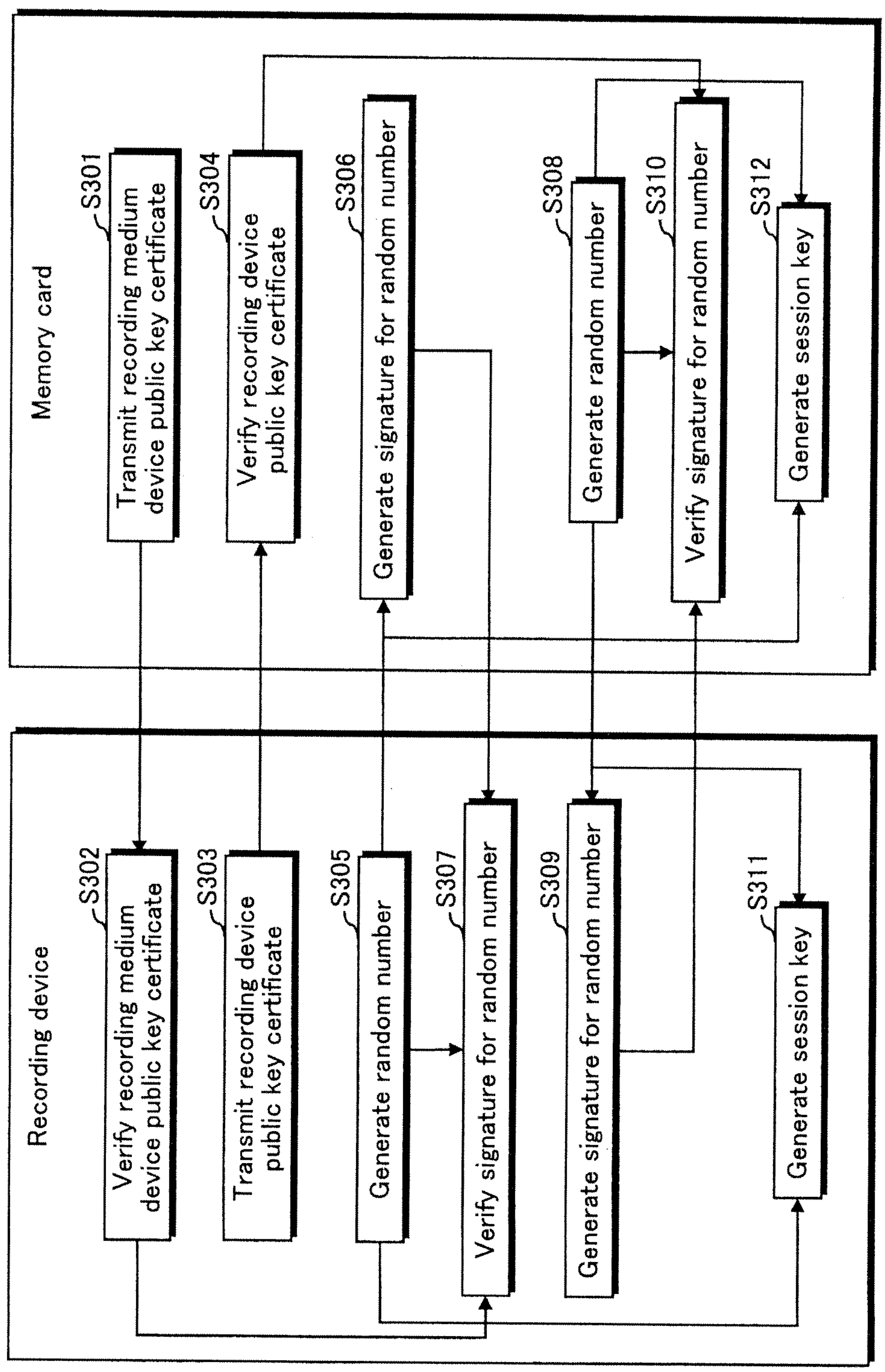
Memory card
S301
Transmit recording medium device public key certificate
S304
Verify recording device public key certificate
S306
Generate signature for random number
S308
Generate random number
S310
Verify signature for random number
S312
Generate session key
Recording device
S302
Verify recording medium device public key certificate
S303
Transmit recording device public key certificate
S305
Generate random number
S307
Verify signature for random number
S309
Generate signature for random number
S311
Generate session key

FIG.13

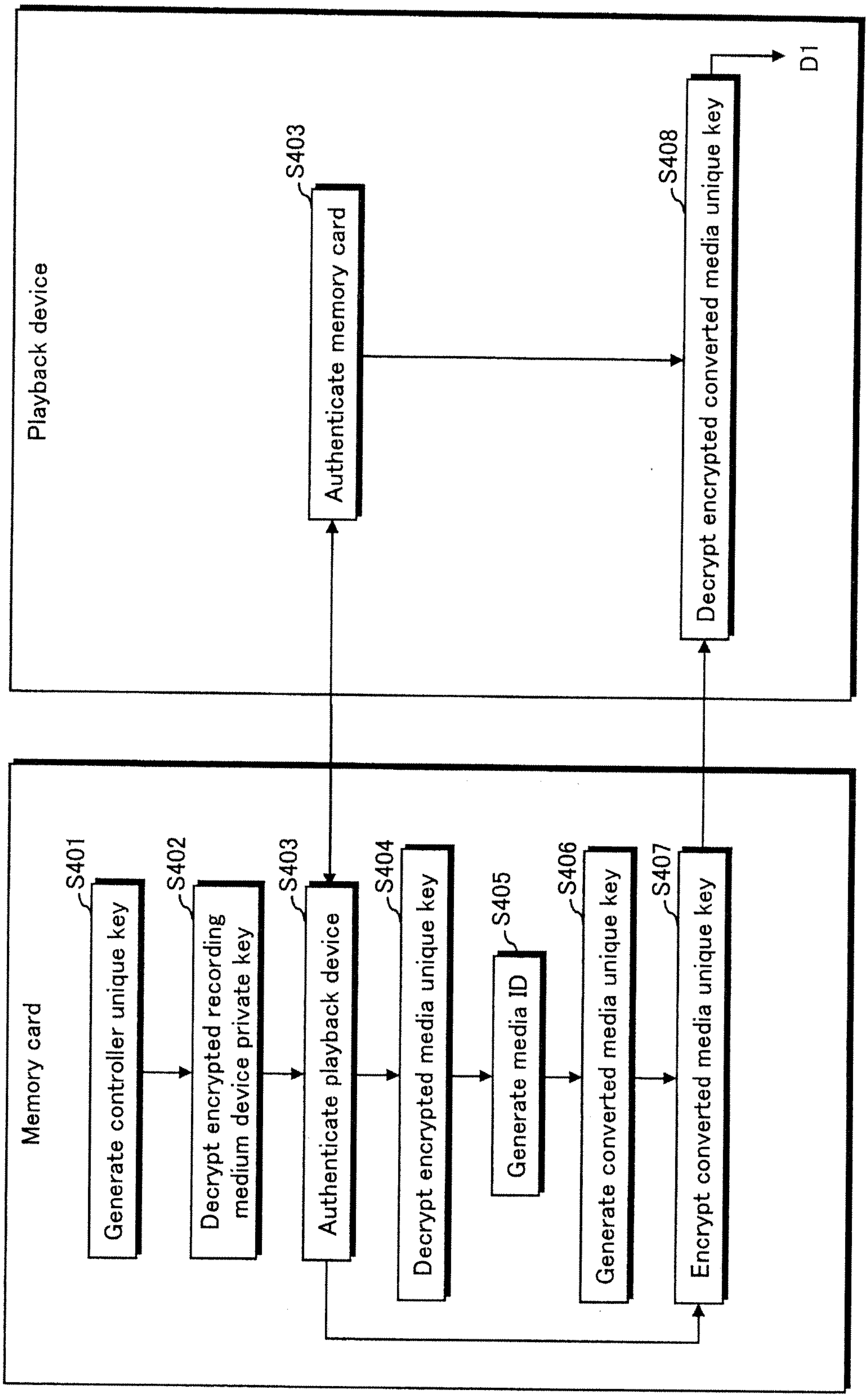
Memory card
S401
Generate controller unique key
S402
Decrypt encrypted recording medium device private key
S403
Authenticate playback device
S404
Decrypt encrypted media unique key
S405
Generate media ID
S406
Generate converted media unique key
S407
Encrypt converted media unique key
Playback device
S403
Authenticate memory card
S408
Decrypt encrypted converted media unique key
D1

FIG.14

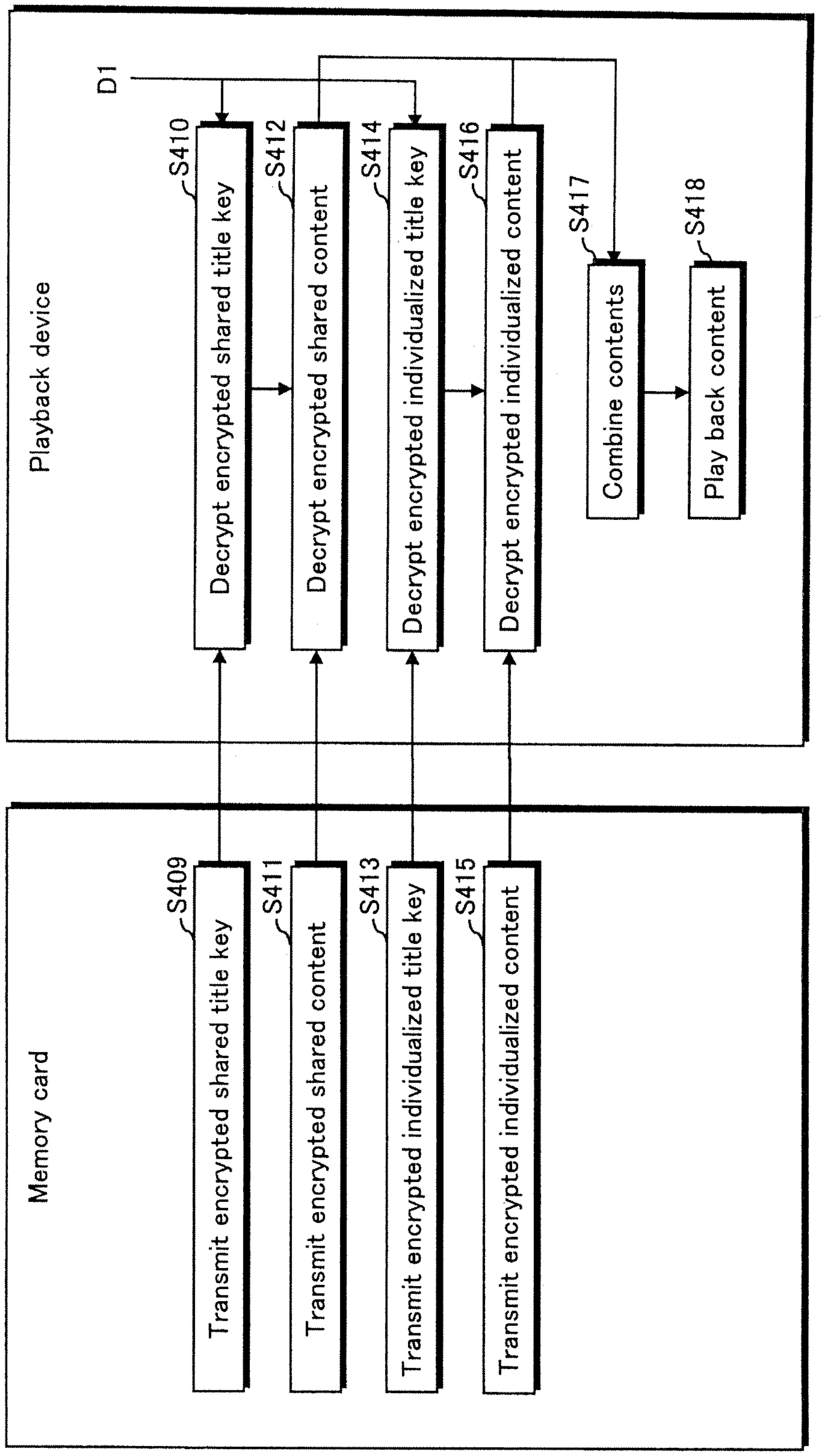
Playback device
D1
S410
Decrypt encrypted shared title key
S412
Decrypt encrypted shared content
S414
Decrypt encrypted individualized title key
S416
Decrypt encrypted individualized content
S417
Combine contents
S418
Play back content
Memory card
S409
Transmit encrypted shared title key
S411
Transmit encrypted shared content
S413
Transmit encrypted individualized title key
S415
Transmit encrypted individualized content

FIG.15

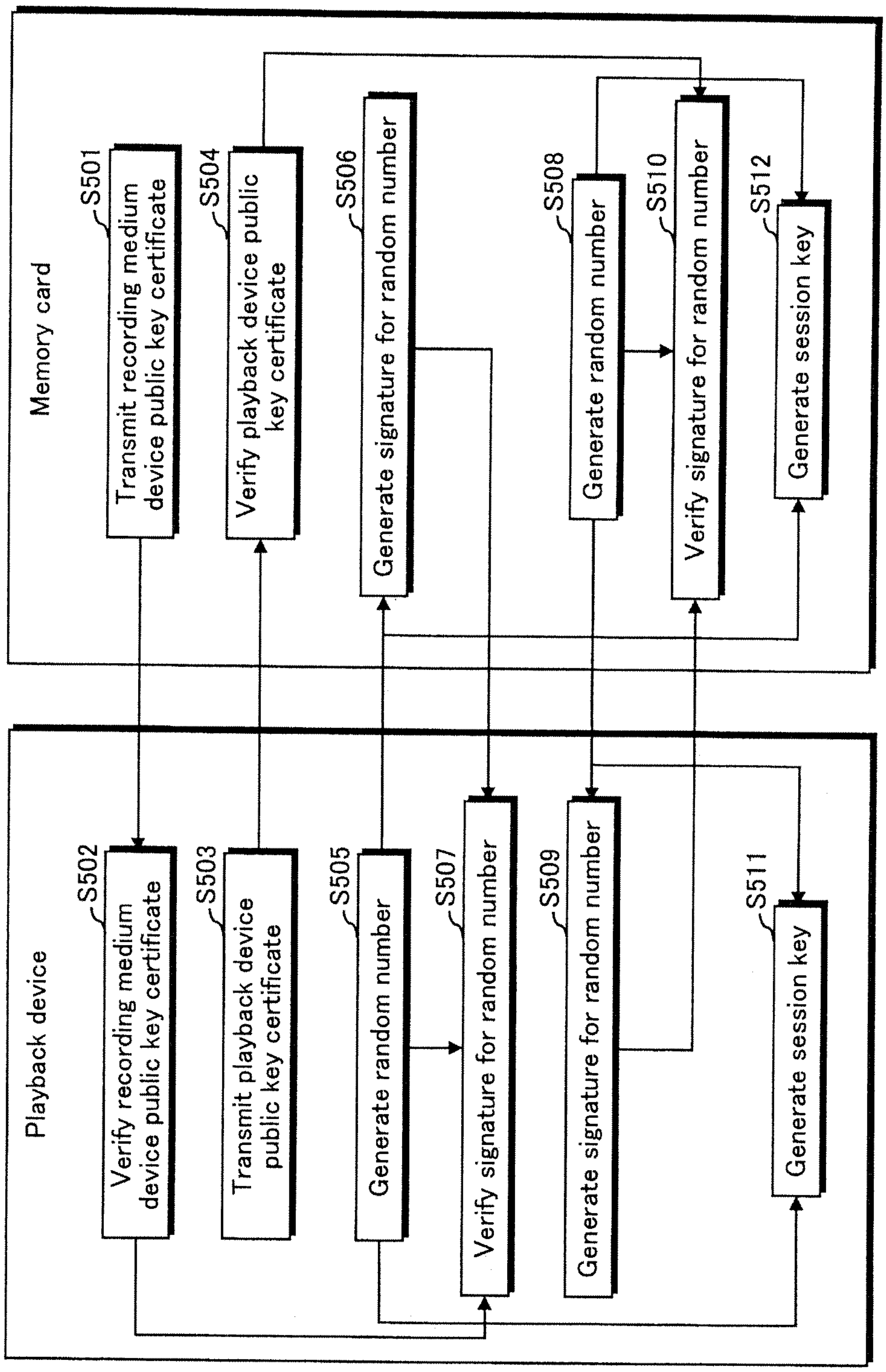
Memory card
Transmit recording medium device public key certificate
S501
Verify playback device public key certificate
S504
Generate signature for random number
S506
Generate random number
S508
Verify signature for random number
S510
Generate session key
S512
Playback device
Verify recording medium device public key certificate
S502
Transmit playback device public key certificate
S503
Generate random number
S505
Verify signature for random number
S507
Generate signature for random number
S509
Generate session key
S511

FIG.16

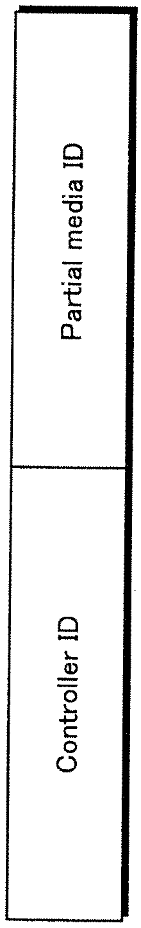

FIG.17A

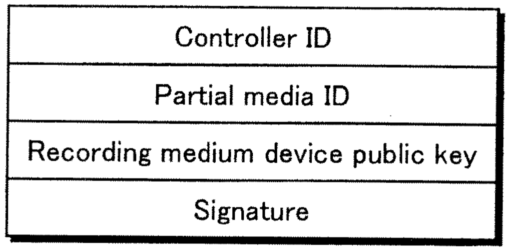


FIG.17B

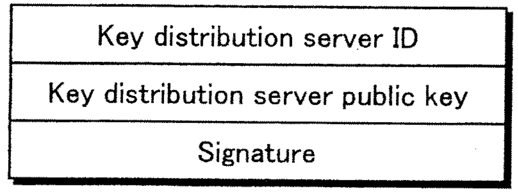


FIG.17C

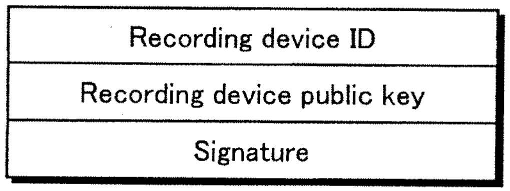


FIG.17D

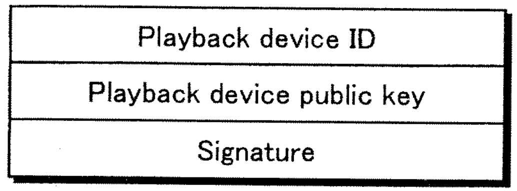

FIG.18

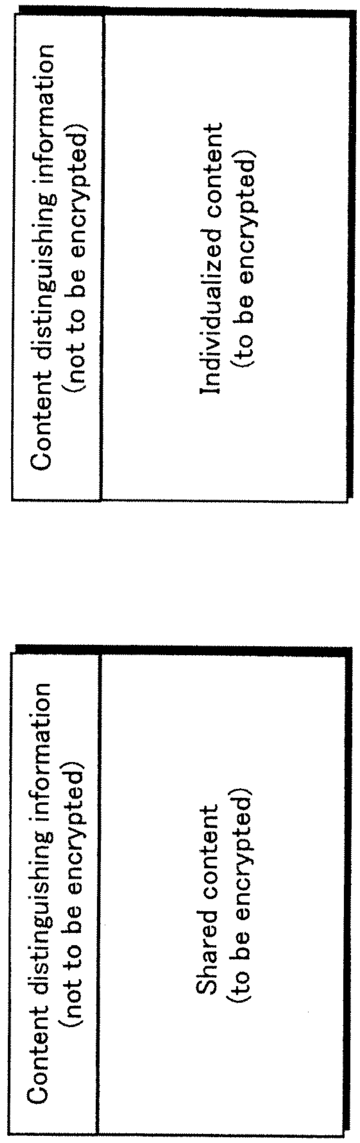
Content distinguishing information
(not to be encrypted)
Shared content
(to be encrypted)
Content distinguishing information
(not to be encrypted)
Individualized content
(to be encrypted)

FIG.19

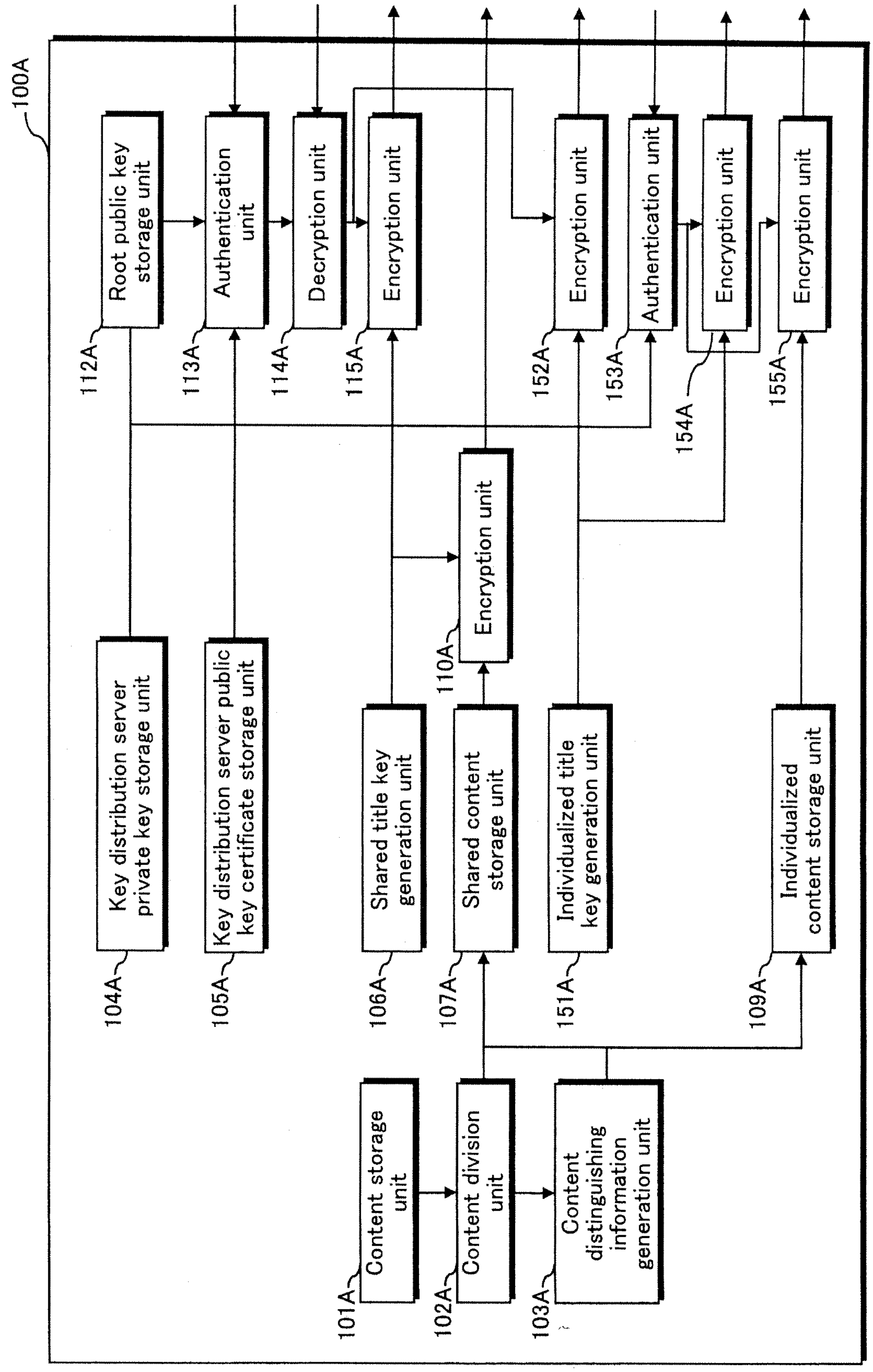
100A
Root public key storage unit
112A
Authentication unit
113A
Decryption unit
114A
Encryption unit
115A
Encryption unit
152A
Authentication unit
153A
Encryption unit
154A
Encryption unit
155A
Encryption unit
110A
Key distribution server private key storage unit
104A
Key distribution server public key certificate storage unit
105A
Shared title key generation unit
106A
Shared content storage unit
107A
Individualized title key generation unit
151A
Individualized content storage unit
109A
Content storage unit
101A
Content division unit
102A
Content distinguishing information generation unit
103A

FIG.20

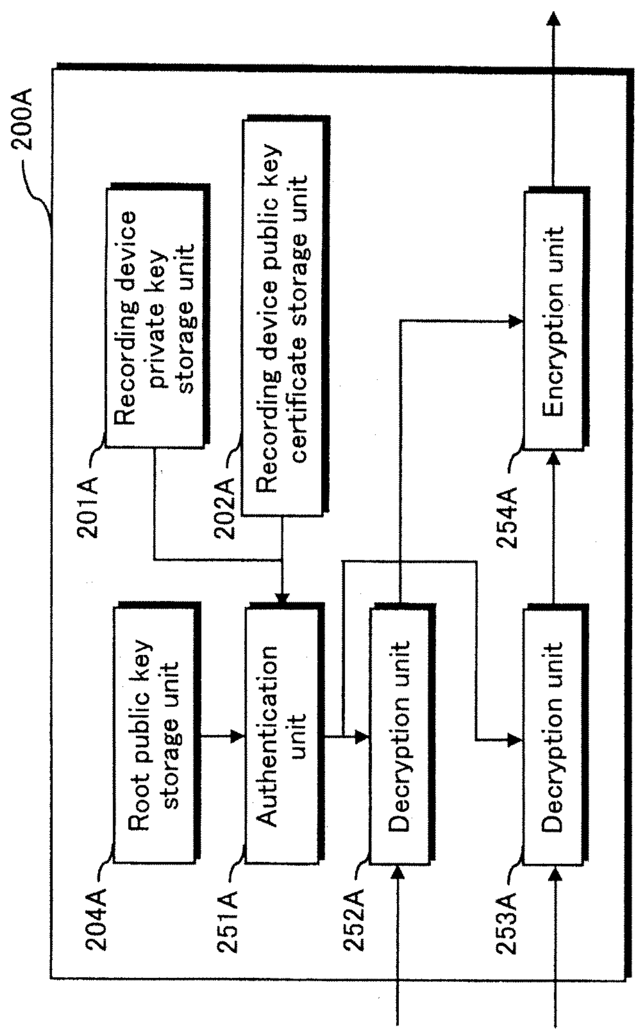
200A
201A
Recording device private key storage unit
202A
Recording device public key certificate storage unit
204A
Root public key storage unit
251A
Authentication unit
252A
Decryption unit
253A
Decryption unit
254A
Encryption unit

FIG.21

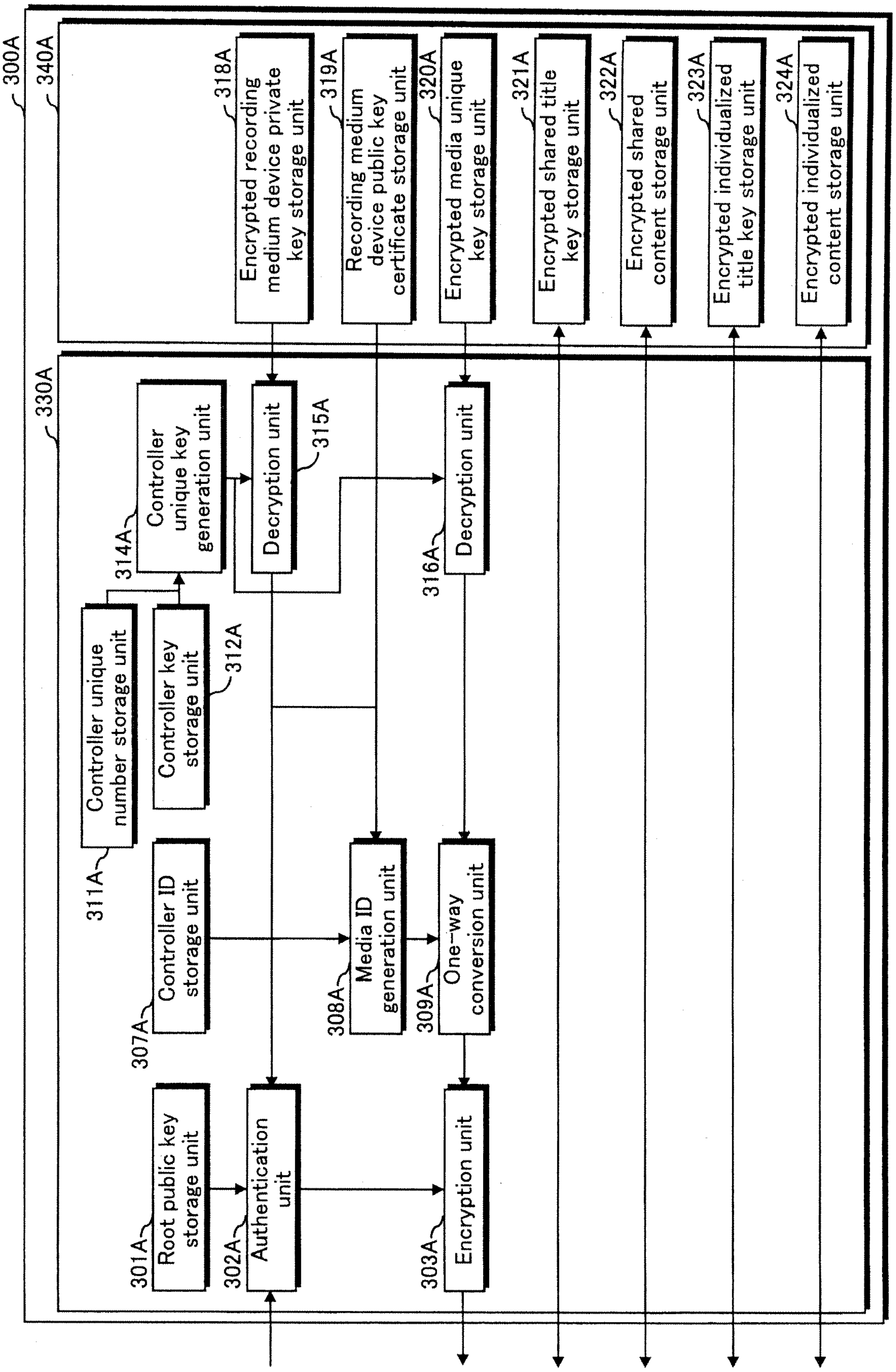
300A
340A
330A
Root public key storage unit
301A
Authentication unit
302A
Encryption unit
303A
Controller ID storage unit
307A
Media ID generation unit
308A
One-way conversion unit
309A
Controller unique number storage unit
311A
Controller key storage unit
312A
Controller unique key generation unit
314A
Decryption unit
315A
Decryption unit
316A
Encrypted recording medium device private key storage unit
318A
Recording medium device public key certificate storage unit
319A
Encrypted media unique key storage unit
320A
Encrypted shared title key storage unit
321A
Encrypted shared content storage unit
322A
Encrypted individualized title key storage unit
323A
Encrypted individualized content storage unit
324A

FIG.22

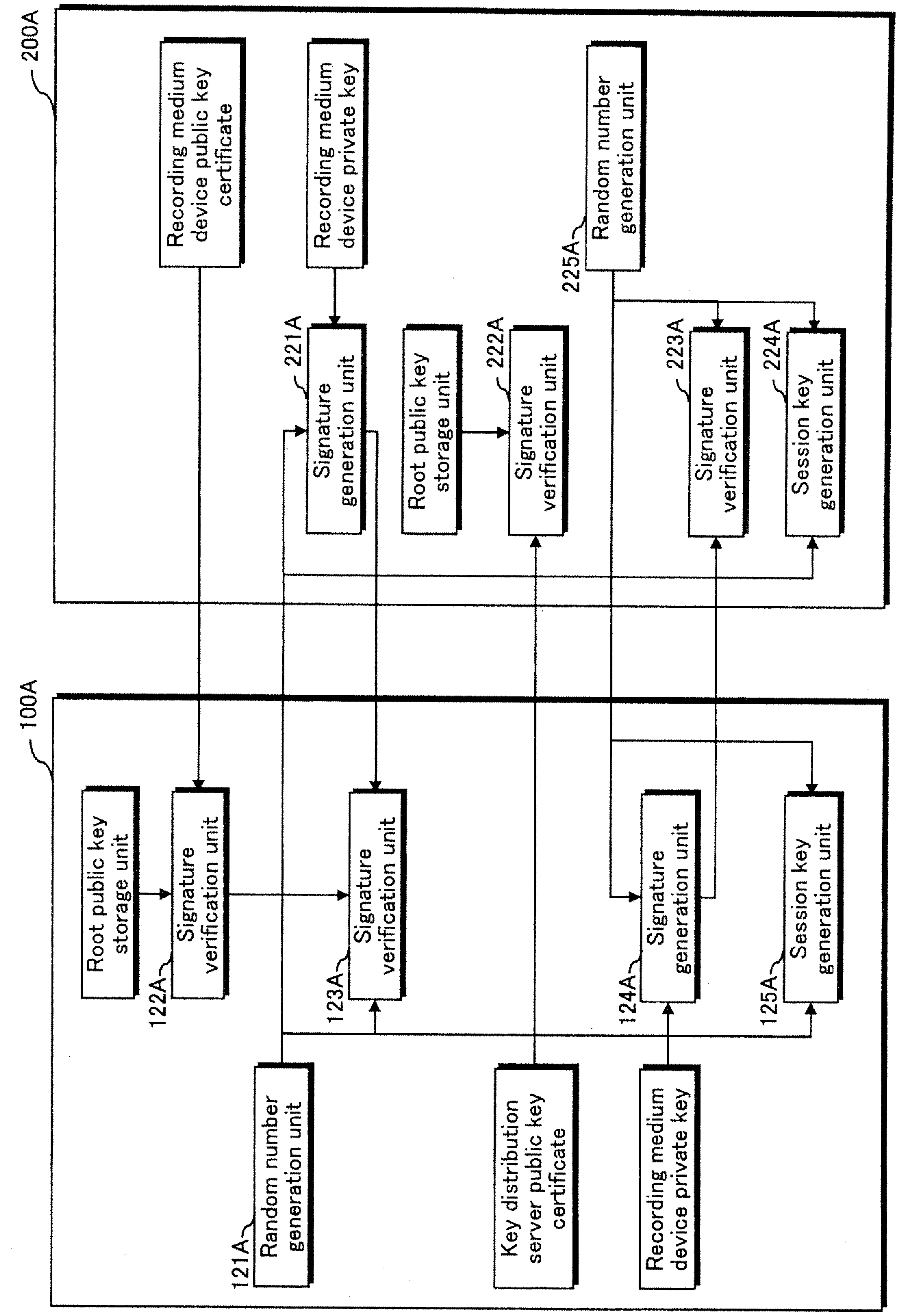
200A
Recording medium device public key certificate
Recording medium device private key
Random number generation unit
225A
221A
Signature generation unit
Root public key storage unit
222A
Signature verification unit
223A
Signature verification unit
224A
Session key generation unit
100A
Root public key storage unit
122A
Signature verification unit
123A
Signature verification unit
124A
Signature generation unit
125A
Session key generation unit
121A
Random number generation unit
Key distribution server public key certificate
Recording medium device private key

FIG.23

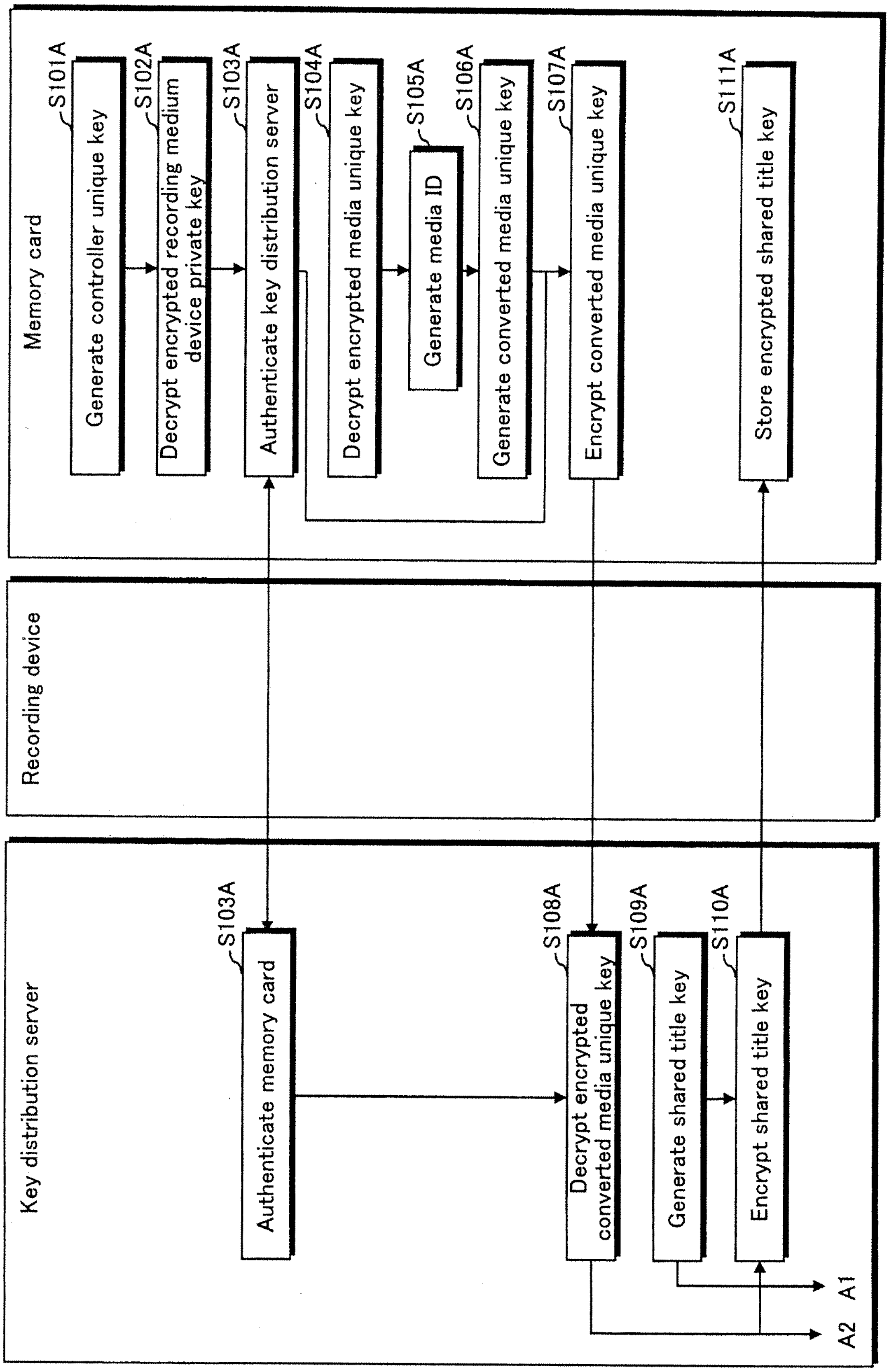
Memory card
S101A
Generate controller unique key
S102A
Decrypt encrypted recording medium device private key
S103A
Authenticate key distribution server
S104A
Decrypt encrypted media unique key
S105A
Generate media ID
S106A
Generate converted media unique key
S107A
Encrypt converted media unique key
S111A
Store encrypted shared title key
Recording device
Key distribution server
S103A
Authenticate memory card
S108A
Decrypt encrypted converted media unique key
S109A
Generate shared title key
S110A
Encrypt shared title key
A1
A2

FIG.24

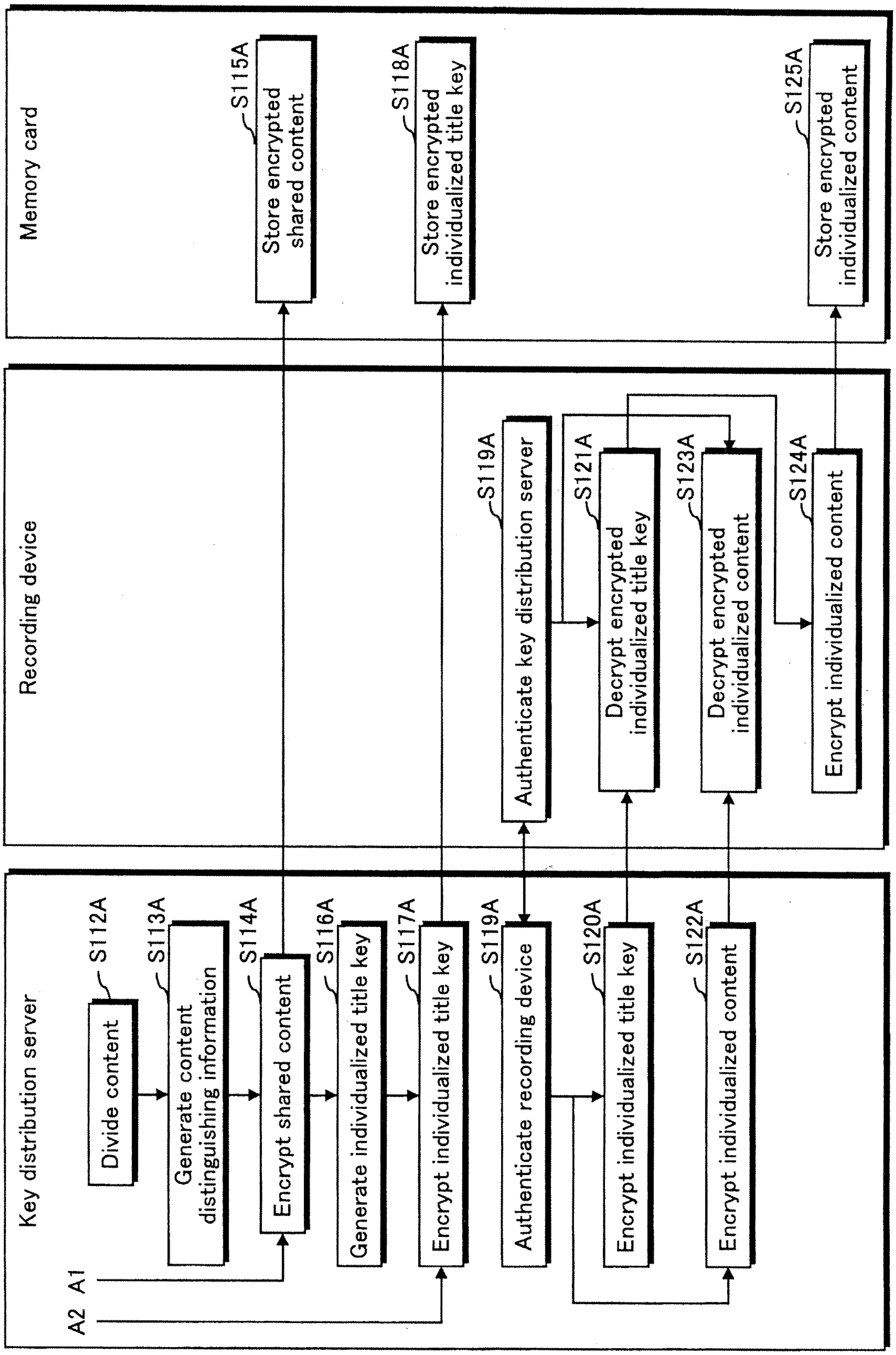
Key distribution server
A1
A2
Divide content
S112A
Generate content distinguishing information
S113A
Encrypt shared content
S114A
Generate individualized title key
S116A
Encrypt individualized title key
S117A
Authenticate recording device
S119A
Encrypt individualized title key
S120A
Encrypt individualized content
S122A
Recording device
Authenticate key distribution server
S119A
Decrypt encrypted individualized title key
S121A
Decrypt encrypted individualized content
S123A
Encrypt individualized content
S124A
Memory card
Store encrypted shared content
S115A
Store encrypted individualized title key
S118A
Store encrypted individualized content
S125A

FIG.25

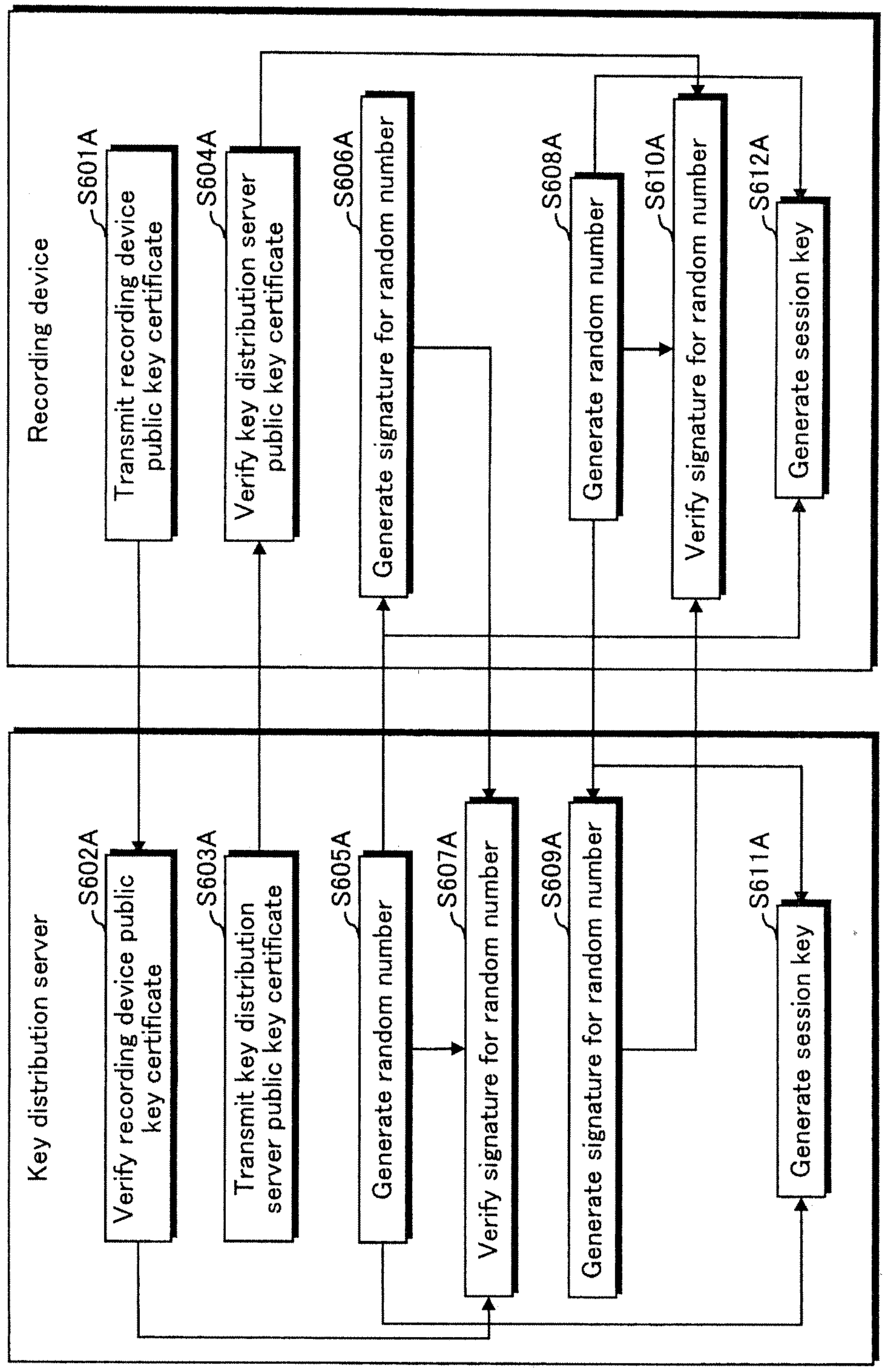
Recording device
S601A
Transmit recording device public key certificate
S604A
Verify key distribution server public key certificate
S606A
Generate signature for random number
S608A
Generate random number
S610A
Verify signature for random number
S612A
Generate session key
Key distribution server
S602A
Verify recording device public key certificate
S603A
Transmit key distribution server public key certificate
S605A
Generate random number
S607A
Verify signature for random number
S609A
Generate signature for random number
S611A
Generate session key

FIG. 26

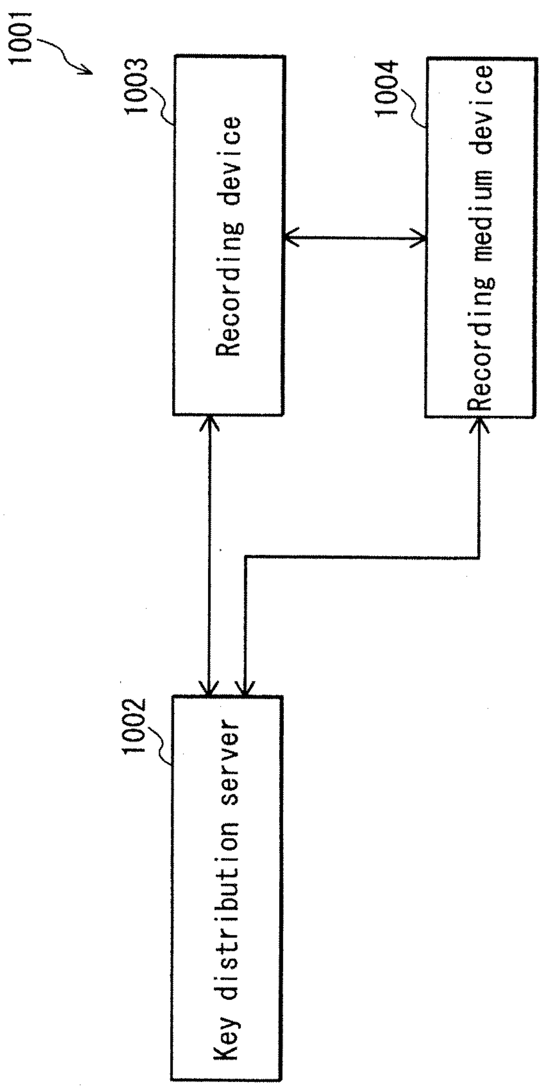
1001
1003
Recording device
1004
Recording medium device
1002
Key distribution server

FIG. 27

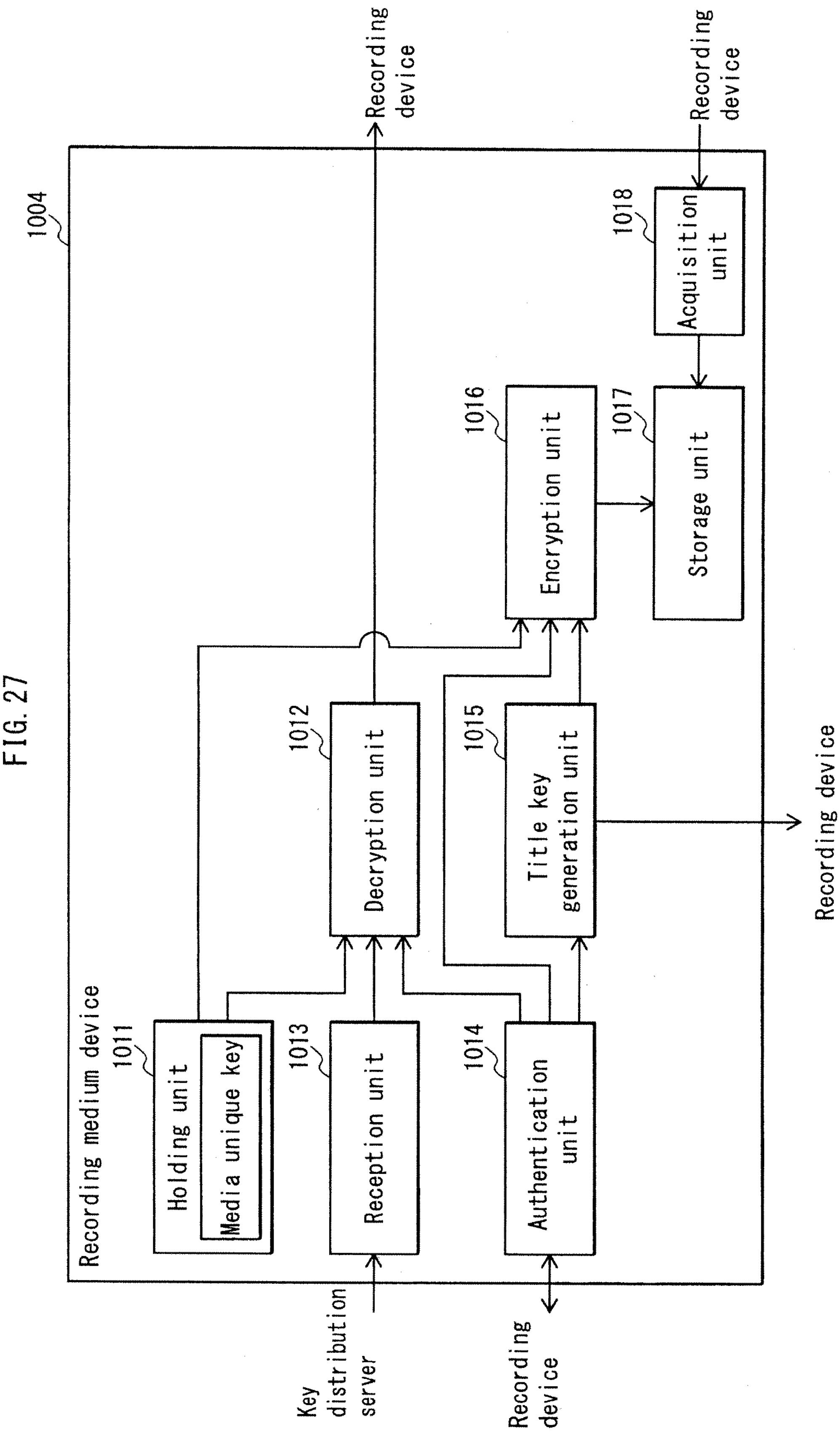
1004
Recording medium device
1011
Holding unit
Media unique key
1013
Reception unit
1014
Authentication unit
1012
Decryption unit
1015
Title key generation unit
1016
Encryption unit
1017
Storage unit
1018
Acquisition unit
Key distribution server
Recording device
Recording device
Recording device
Recording device

FIG. 28

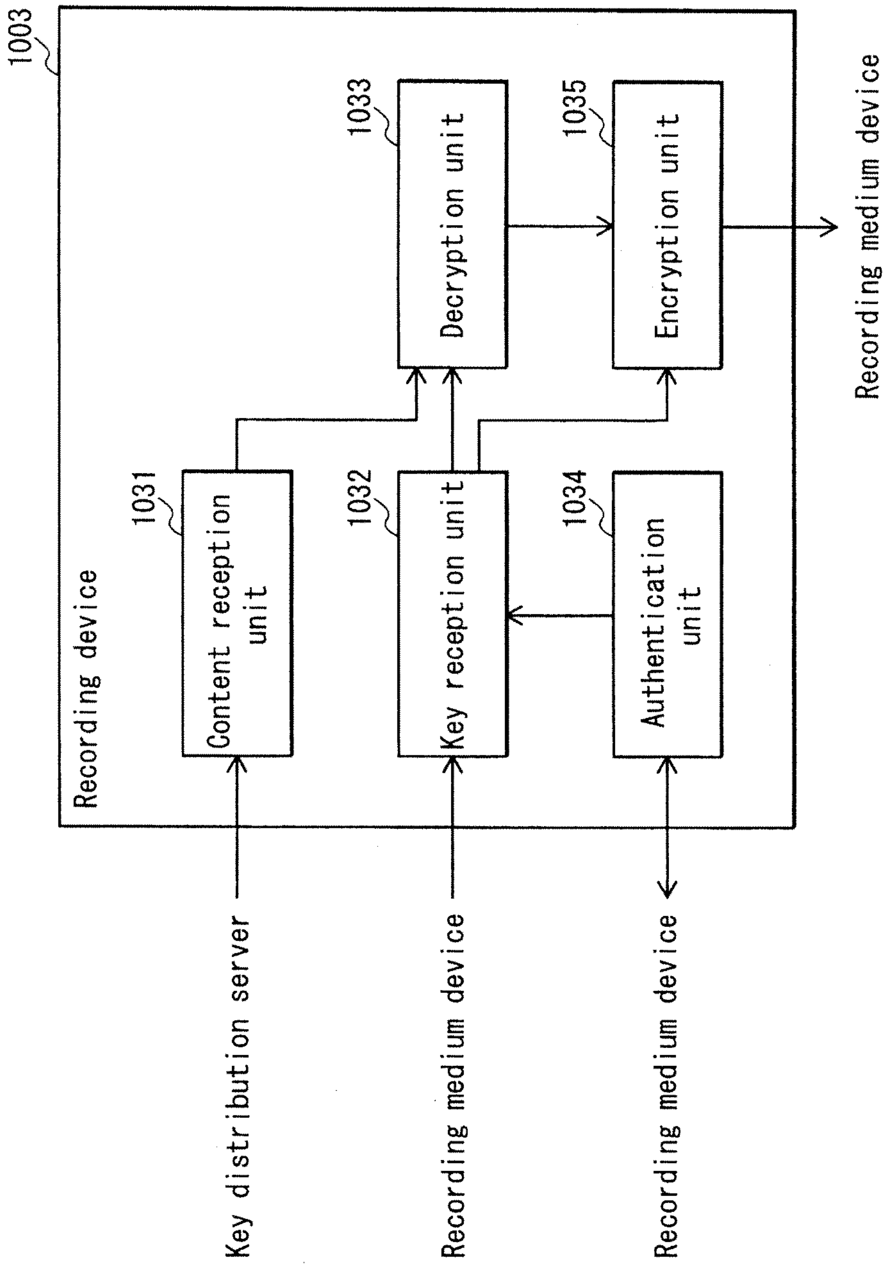
1003
Recording device
1031
Content reception unit
1032
Key reception unit
1033
Decryption unit
1034
Authentication unit
1035
Encryption unit
Key distribution server
Recording medium device
Recording medium device
Recording medium device

FIG. 29

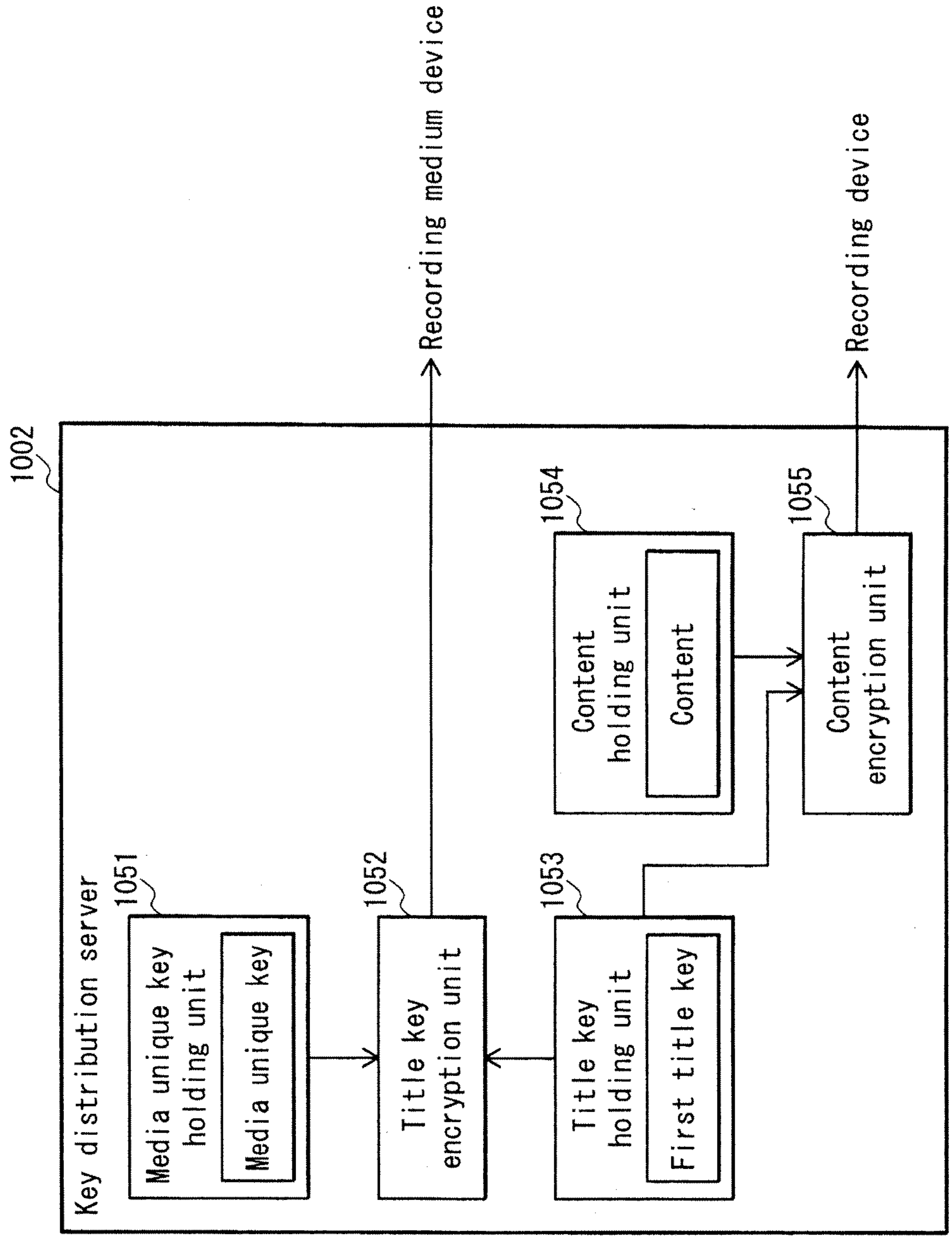
1002
Key distribution server
1051
Media unique key holding unit
Media unique key
1052
Title key encryption unit
1053
Title key holding unit
First title key
1054
Content holding unit
Content
1055
Content encryption unit
Recording medium device
Recording device

FIG. 30

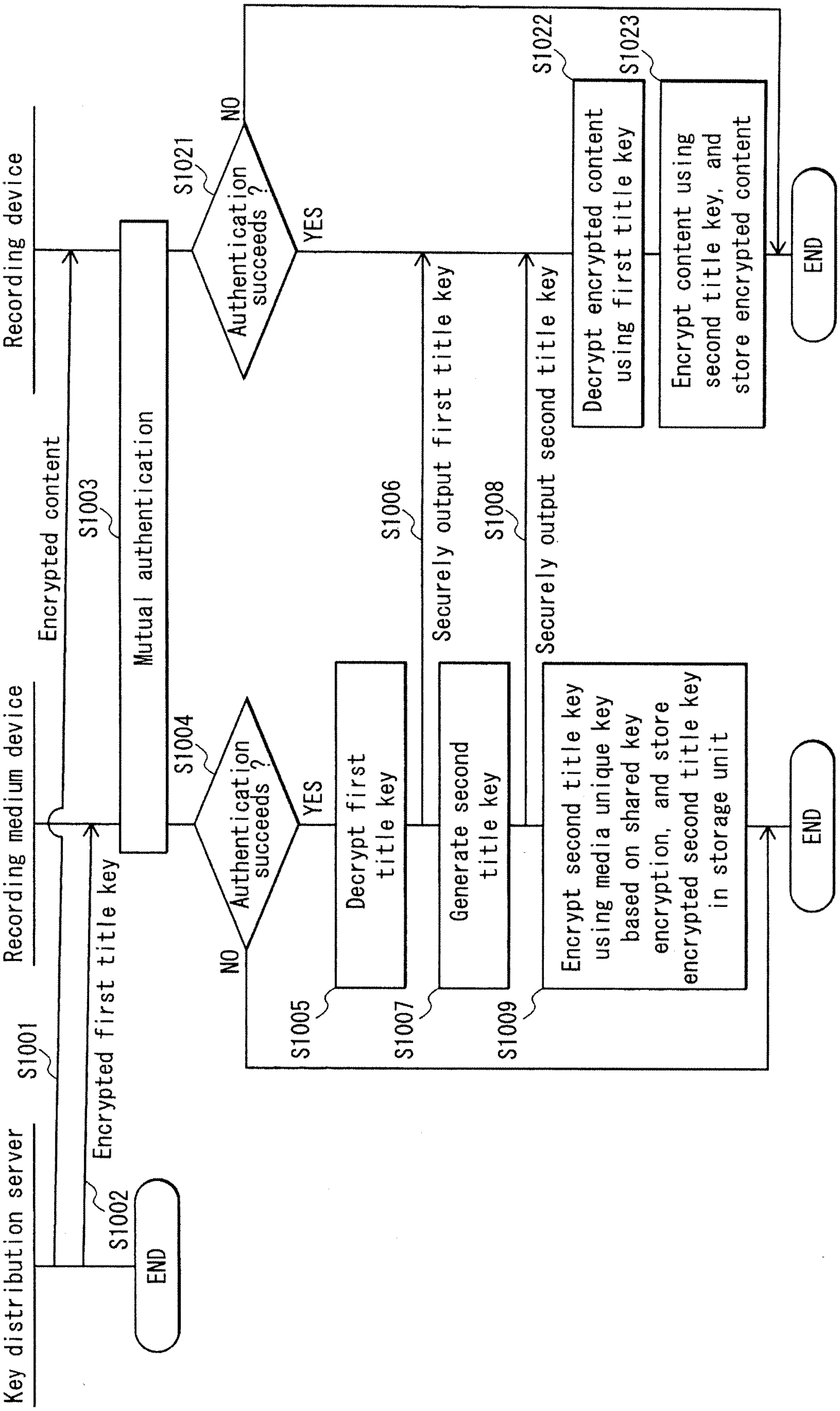
Key distribution server
Recording medium device
Recording device
S1001
Encrypted content
S1002
Encrypted first title key
END
S1003
Mutual authentication
S1004
Authentication succeeds ?
YES
NO
S1005
Decrypt first title key
S1006
Securely output first title key
S1007
Generate second title key
S1008
Securely output second title key
S1009
Encrypt second title key using media unique key based on shared key encryption, and store encrypted second title key in storage unit
END
S1021
Authentication succeeds ?
YES
NO
S1022
Decrypt encrypted content using first title key
S1023
Encrypt content using second title key, and store encrypted content
END

FIG. 31

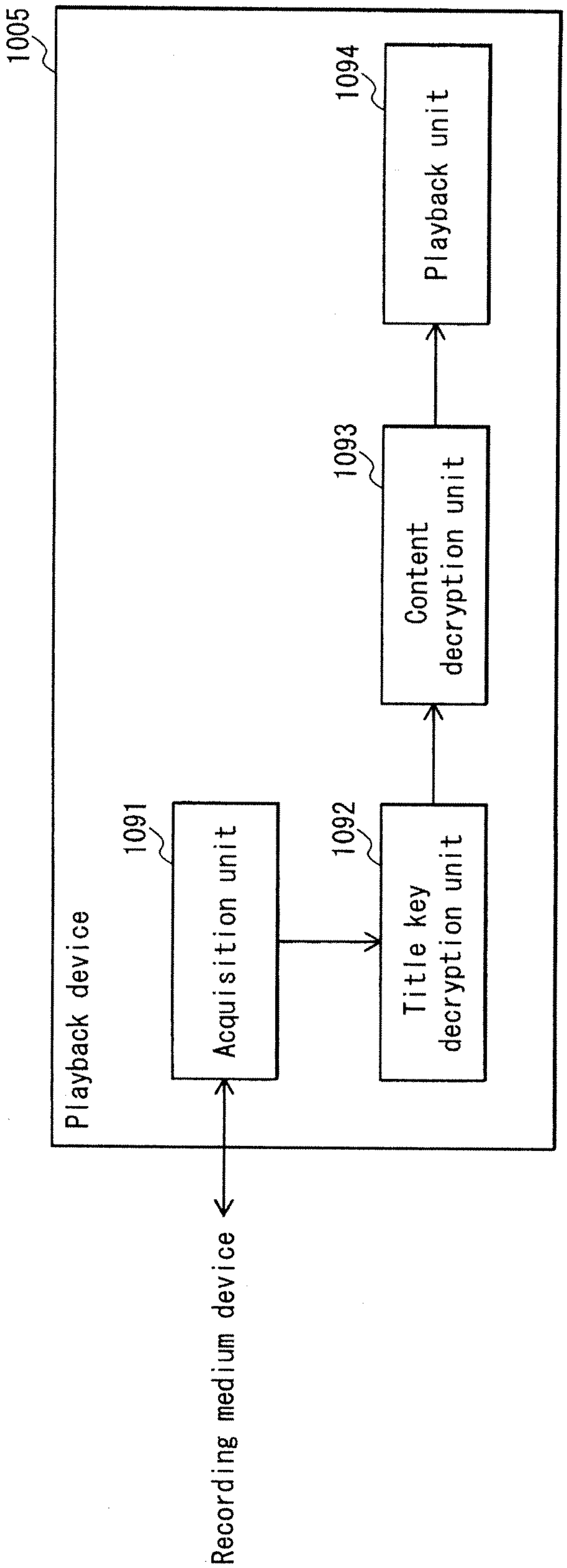
1005
Playback device
1091
Acquisition unit
1092
Title key decryption unit
1093
Content decryption unit
1094
Playback unit
Recording medium device

FIG. 32

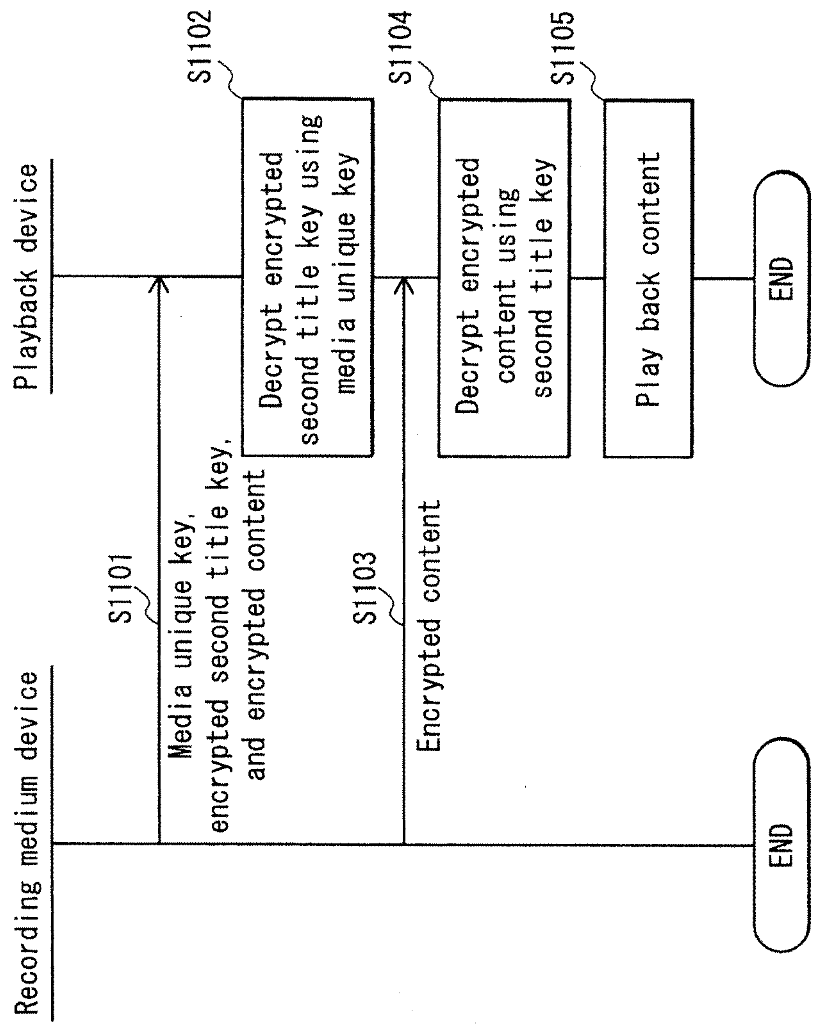
Recording medium device
Playback device
S1101
Media unique key,
encrypted second title key,
and encrypted content
S1102
Decrypt encrypted
second title key using
media unique key
S1103
Encrypted content
S1104
Decrypt encrypted
content using
second title key
S1105
Play back content
END
END

FIG. 33

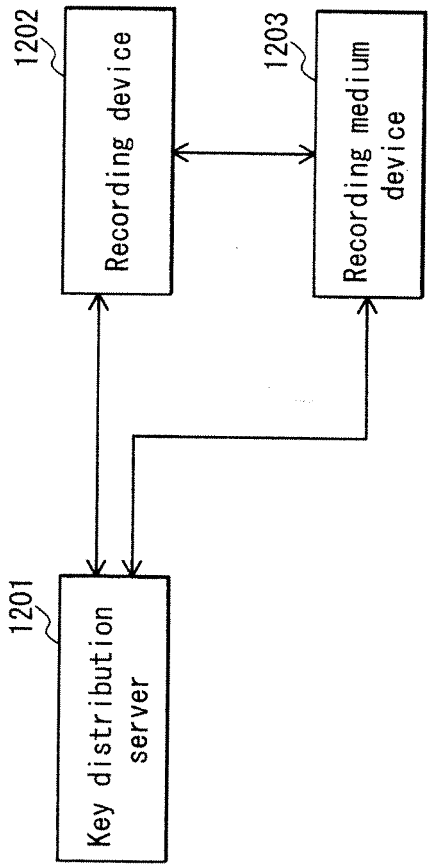
1202
Recording device
1203
Recording medium device
1201
Key distribution server

FIG. 34

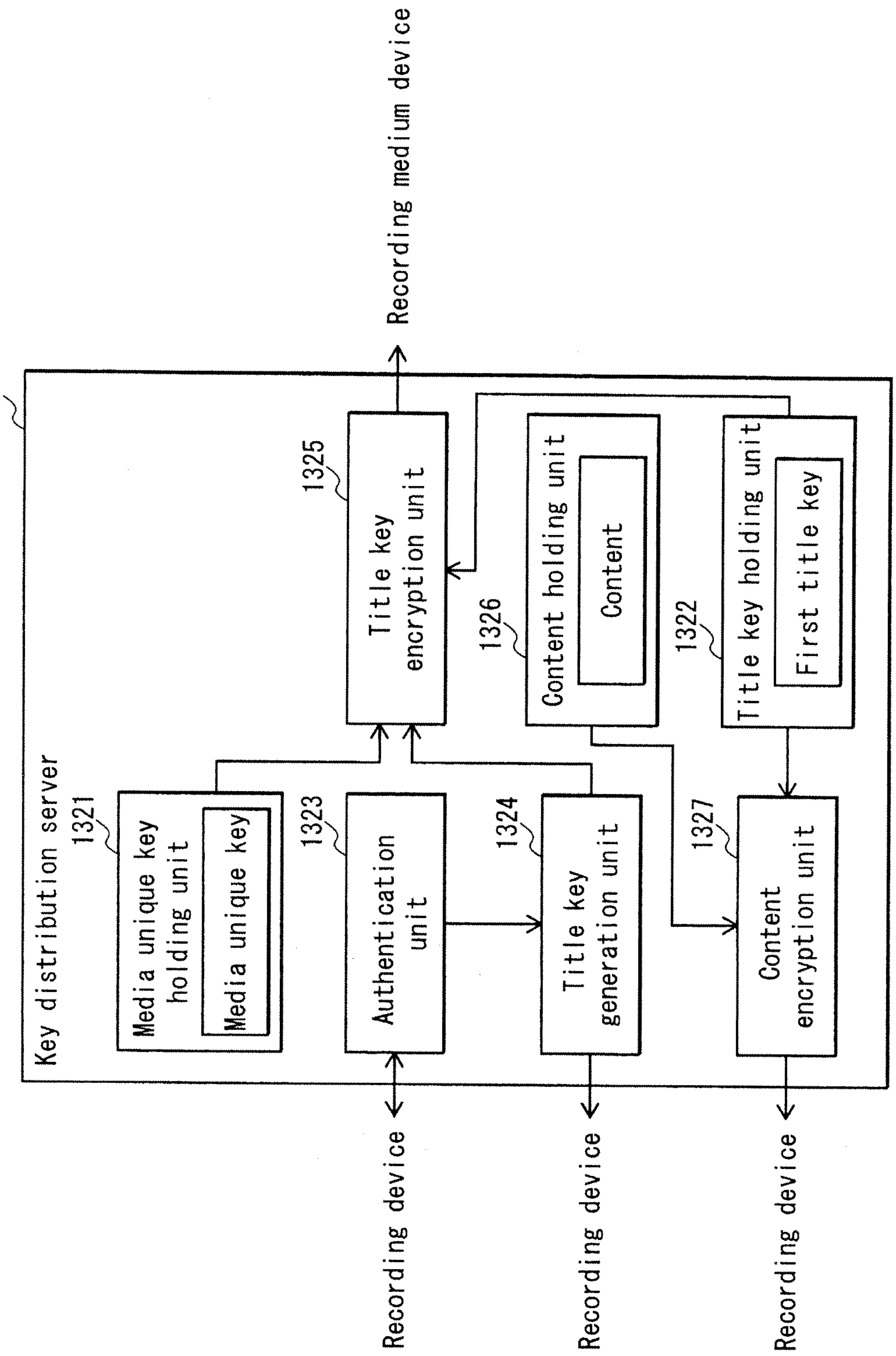
1201
Key distribution server
1321
Media unique key holding unit
Media unique key
1323
Authentication unit
1324
Title key generation unit
1327
Content encryption unit
1325
Title key encryption unit
1326
Content holding unit
Content
1322
Title key holding unit
First title key
Recording medium device
Recording device
Recording device
Recording device

FIG. 35

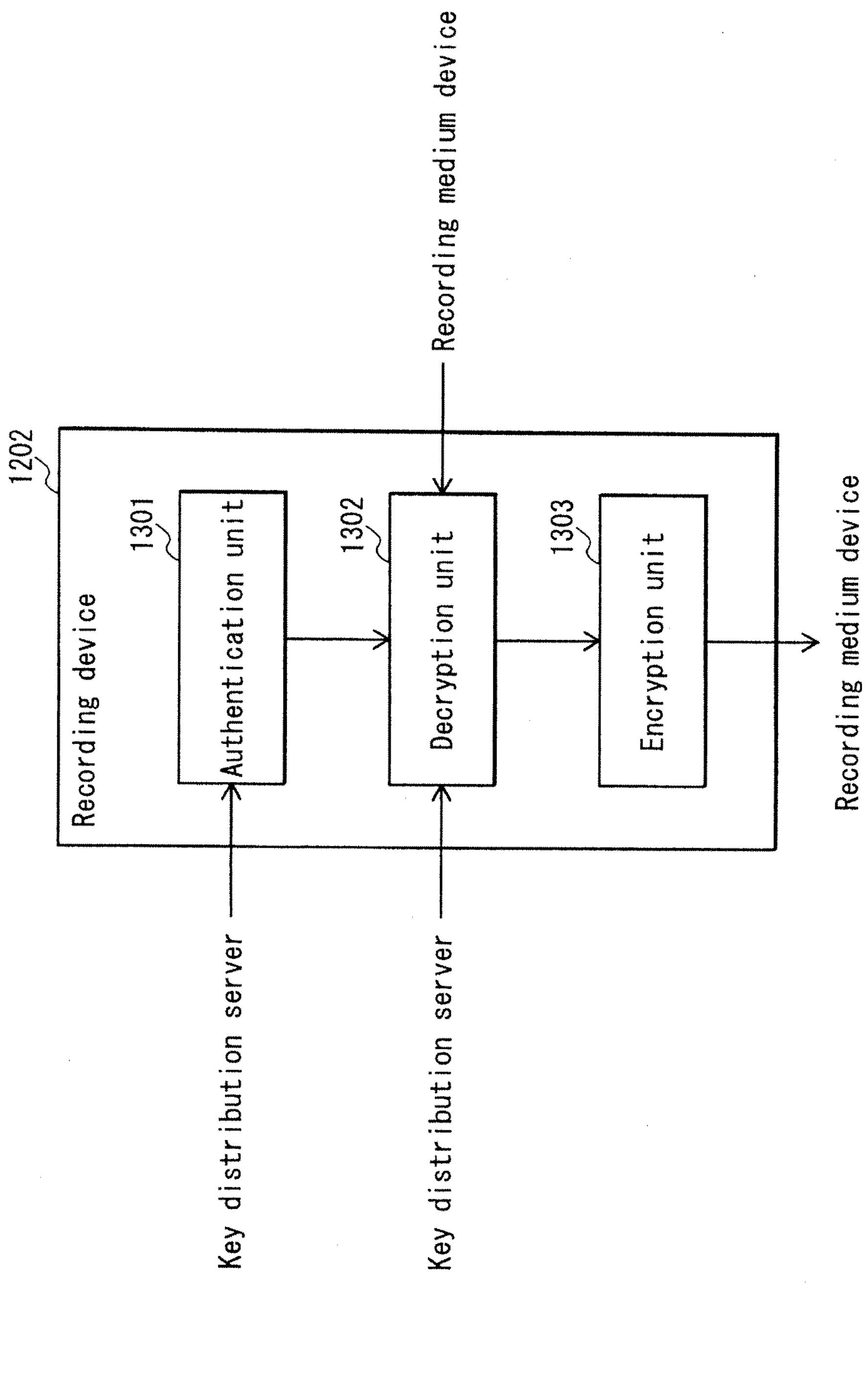
Recording device
1202
1301
Authentication unit
1302
Decryption unit
1303
Encryption unit
Key distribution server
Key distribution server
Recording medium device
Recording medium device

FIG. 36

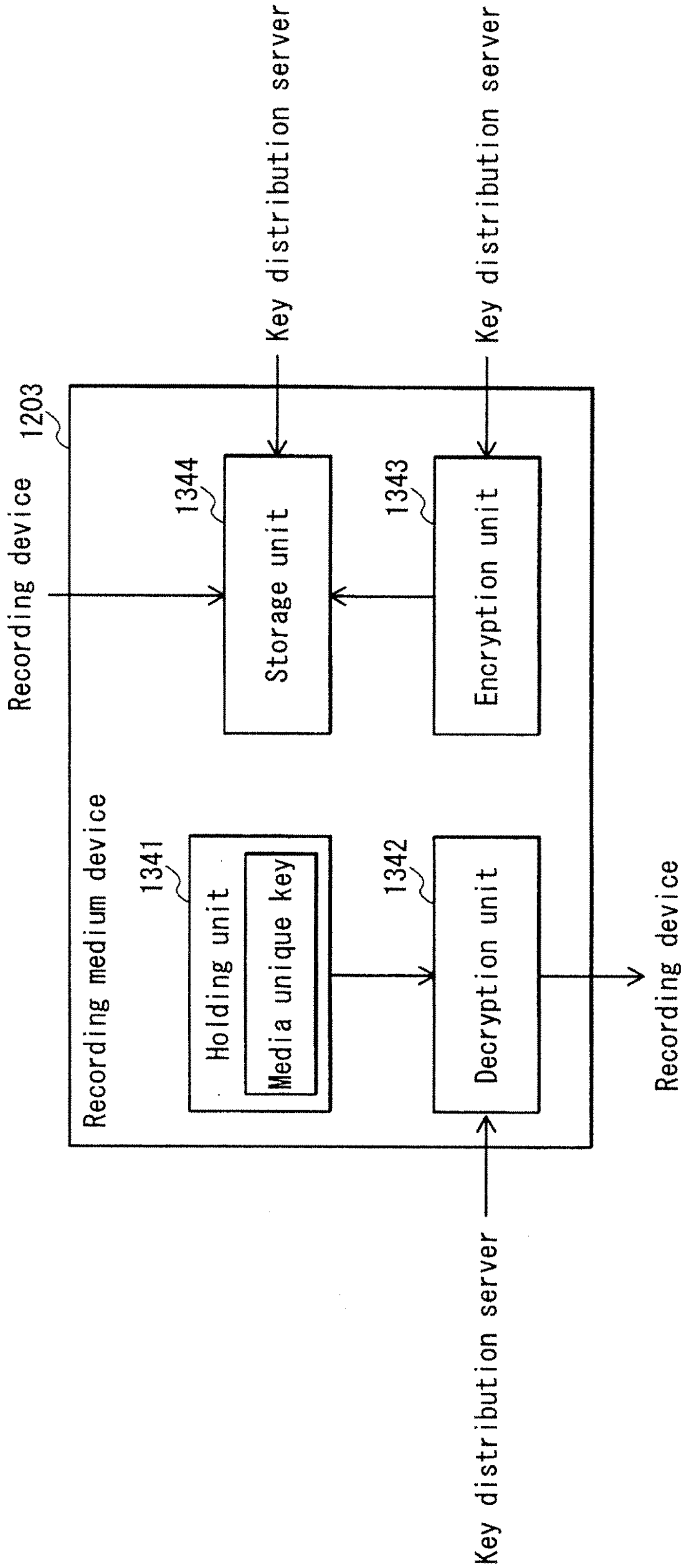
Key distribution server
Key distribution server
Recording device
1203
1344
Storage unit
1343
Encryption unit
Recording medium device
1341
Holding unit
Media unique key
1342
Decryption unit
Recording device
Key distribution server

FIG. 37

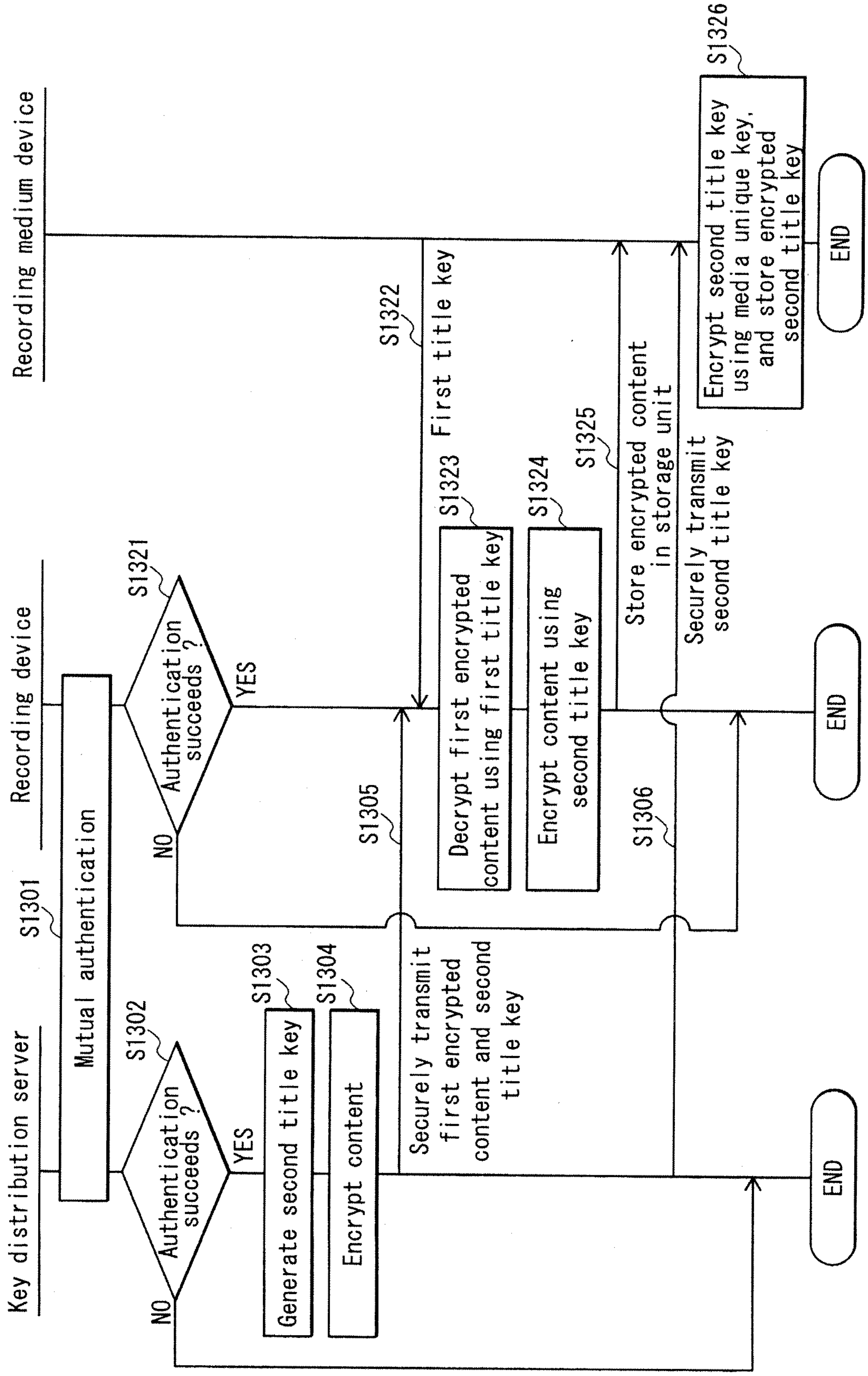
Key distribution server
Recording device
Recording medium device
Mutual authentication
S1301
Authentication succeeds ?
S1302
YES
NO
Generate second title key
S1303
Encrypt content
S1304
Securely transmit first encrypted content and second title key
S1305
S1306
Authentication succeeds ?
S1321
First title key
S1322
Decrypt first encrypted content using first title key
S1323
Encrypt content using second title key
S1324
Store encrypted content in storage unit
S1325
Securely transmit second title key
Encrypt second title key using media unique key, and store encrypted second title key
S1326
END
END
END

**INTERNATIONAL SEARCH REPORT**

International application No.
PCT/JP2011/001340

A. CLASSIFICATION OF SUBJECT MATTER
*G06F21/24*(2006.01)i

According to International Patent Classification (IPC) or to both national classification and IPC

B. FIELDS SEARCHED

Minimum documentation searched (classification system followed by classification symbols)
G06F21/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-301261 A (Toshiba Corp.), 11 December 2008 (11.12.2008), paragraphs [0017], [0024], [0025] (Family: none) | 1-19 |
| A | JP 2003-158514 A (Matsushita Electric Industrial Co., Ltd.), 30 May 2003 (30.05.2003), paragraphs [0003] to [0006] & EP 1276106 A1 & US 2003/0009681 A1 | 1-19 |

☐ Further documents are listed in the continuation of Box C.

☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
23 May, 2011 (23.05.11)

Date of mailing of the international search report
31 May, 2011 (31.05.11)

Name and mailing address of the ISA/
Japanese Patent Office

Authorized officer

Facsimile No.

Telephone No.

Form PCT/ISA/210 (second sheet) (July 2009)